(19) Europäisches Patentamt
European Patent Office
Office européen des brevets

(11) **EP 4 535 674 A1**

(12) **EUROPEAN PATENT APPLICATION**
published in accordance with Art. 153(4) EPC

(43) Date of publication:
09.04.2025 Bulletin 2025/15

(21) Application number: 23823217.7

(22) Date of filing: 15.06.2023

(51) International Patent Classification (IPC):
*H04B 1/69* (2011.01)     *H04L 27/34* (2006.01)

(52) Cooperative Patent Classification (CPC):
H04B 1/69; H04L 27/34

(86) International application number:
PCT/CN2023/100436

(87) International publication number:
WO 2023/241651 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.06.2022 CN 202210688053

(71) Applicant: Huawei Technologies Co., Ltd.
Shenzhen, Guangdong 518129 (CN)

(72) Inventors:
• LIU, Chenchen
  Shenzhen, Guangdong 518129 (CN)
• QIAN, Bin
  Shenzhen, Guangdong 518129 (CN)
• ZHOU, Zhengchun
  Chengdu, Sichuan 611756 (CN)
• YANG, Xun
  Shenzhen, Guangdong 518129 (CN)

(74) Representative: Körber, Martin Hans
Mitscherlich PartmbB
Patent- und Rechtsanwälte
Karlstraße 7
80333 München (DE)

(54) **COMMUNICATION METHOD AND APPARATUS BASED ON PHYSICAL LAYER PROTOCOL DATA UNIT**

(57) A PPDU-based communication method and an apparatus are applicable to a wireless local area network system that supports an 802.15 standard, for example, 802.15.4a, 802.15.4z, 802.15.4ab, a next-generation protocol of 802.15.4a, 802.15.4z, or 802.15.4ab, or 802.11 series protocols such as a next generation of 802.11 be like Wi-Fi 8, or may be applied to a UWB-based wireless personal area network system, a sensing sensing system, or the like. The method includes: A transmit end generates a PPDU based on a mapping relationship between a data symbol and a chip sequence, and sends the PPDU; and correspondingly, a receive end receives the PPDU, and then processes the PPDU based on the mapping relationship, where a minimum Hamming distance is greater than or equal to L/2. The minimum Hamming distance is increased, so that a bit error rate is reduced effectively.

FIG. 3

**Description**

This application claims priority to Chinese Patent Application No. 202210688053.1, filed with the China National Intellectual Property Administration on June 17, 2022 and entitled "PHYSICAL LAYER PROTOCOL DATA UNIT-BASED COMMUNICATION METHOD AND APPARATUS", which is incorporated herein by reference in its entirety.

**TECHNICAL FIELD**

This application relates to the field of communication technologies, and in particular, to a physical layer (physical layer, PHY) protocol data unit (PHY protocol data unit, PPDU)-based communication method and an apparatus.

**BACKGROUND**

An ultra-wideband (ultra-wideband, UWB) technology is a wireless carrier communication technology in which a nanosecond-level non-sinusoidal narrow impulse is used for data transmission. Therefore, an ultra-wideband occupies a wide spectrum range. Due to a very narrow impulse and extremely low radiation spectral density, a UWB system has advantages of a high multipath resolution capacity, low power consumption, high confidentiality, and the like.

As the UWB technology is used in the civil field, ultra-wideband wireless communication has become one of popular physical layer technologies in short-range and highspeed wireless networks. Generally, for a narrowband signal used to assist the UWB, an information bit of a fixed length needs to be mapped to a data symbol, and then the data symbol is mapped to a chip sequence of a specific length, to extend a bandwidth of the signal.

However, performance of a mapping relationship between a data symbol and a chip sequence needs to be further improved.

**SUMMARY**

This application provides a PPDU-based communication method and an apparatus, to effectively increase a minimum Hamming distance in Hamming distances between different chip sequences, so as to effectively reduce a bit error rate at a receive end.

According to a first aspect, an embodiment of this application provides a physical layer protocol data unit PPDU-based communication method, where the method is applied to a transmit end, and the method includes: generating a PPDU based on a mapping relationship between a data symbol and a chip sequence, where a length of each chip sequence is L, a minimum Hamming distance is greater than or equal to L/2, L is a positive integer, a bit length corresponding to a data symbol is less than a bit length of a chip sequence, and the minimum Hamming distance indicates a smallest Hamming distance between any two different chip sequences; and sending the PPDU.

With reference to the first aspect, in a possible implementation, the generating a PPDU based on a mapping relationship between a data symbol and a chip sequence includes: generating a modulated symbol of the PPDU based on the mapping relationship between a data symbol and a chip sequence; and the sending the PPDU includes: sending the modulated symbol of the PPDU.

According to a second aspect, an embodiment of this application provides a physical layer protocol data unit PPDU-based communication method, where the method is applied to a receive end, and the method includes: receiving a PPDU; and processing the PPDU based on a mapping relationship between a data symbol and a chip sequence, where a length of each chip sequence is L, a minimum Hamming distance is greater than or equal to L/2, L is a positive integer, a bit length corresponding to a data symbol is less than a bit length of a chip sequence, and the minimum Hamming distance indicates a smallest Hamming distance between any two different chip sequences.

With reference to the second aspect, in a possible implementation, the processing the PPDU based on a mapping relationship between a data symbol and a chip sequence includes: obtaining a first sequence in the PPDU, where a length of the first sequence is L; determining, based on N chip sequences included in the mapping relationship between a data symbol and a chip sequence, a first chip sequence corresponding to the first sequence, where the first chip sequence is one of the N chip sequences, and N is a positive integer; determining, based on the mapping relationship between a data symbol and a chip sequence, a data symbol corresponding to the first chip sequence; and determining, based on the data symbol corresponding to the first chip sequence, an information bit corresponding to the first chip sequence.

In this embodiment of this application, the minimum Hamming distance in the mapping relationship is increased, so that a probability that the receive end incorrectly determines a data symbol can be effectively reduced, to reduce a probability that the receive end incorrectly determines an information bit, effectively ensure reliability of communication between two communication parties, and improve system performance.

With reference to the first aspect or the second aspect, in a possible implementation, L=32, or L=16, or L=8.

With reference to the first aspect or the second aspect, in a possible implementation, the chip sequence is obtained based on at least one of the following:

[1 1 -1 -1 -1 -1 -1 -1] and [1 1 -1 1 -1 1 -1 -1];

[1 -1 1 -1 -1 -1 -1 -1] and [1 1 -1 1 1 -1 -1 -1]; and

[1 -1 -1 1 -1 -1 -1 -1] and [1 1 1 -1 1 -1 -1 -1].

With reference to the first aspect or the second aspect, in a possible implementation, the chip sequence is obtained based on at least two of the following:

$$\begin{matrix} [\ 1 & 1 & -1 & 1 & -1 & 1 & -1 & -1] \\ [\ 1 & 1 & -1 & 1 & 1 & -1 & -1 & -1] \\ [\ 1 & 1 & 1 & -1 & 1 & -1 & -1 & -1] \end{matrix}.$$

In this embodiment of this application, when an autocorrelation feature between different chip sequences is ensured, the minimum Hamming distance can be effectively increased, the bit error rate at the receive end can be reduced, and system performance can be improved.

With reference to the first aspect or the second aspect, in a possible implementation, the chip sequence is obtained based on a Hadamard matrix, and an order of the Hadamard matrix is related to the length of the chip sequence.

In this embodiment of this application, when an autocorrelation feature between different chip sequences is ensured, a Hamming distance between chip sequences corresponding to different data symbols is 16, so that system performance can be effectively improved.

With reference to the first aspect or the second aspect, in a possible implementation, at least two columns of elements in a matrix formed by the chip sequence are the same.

In this embodiment of this application, each data symbol has at least two fixed chip values whose positions are fixed. Because each data symbol may have at least two fixed chip values whose positions are fixed, the fixed chip values may be used as a pilot, so that the receive end can perform frequency offset estimation and compensation based on the fixed chip values, to improve an anti-frequency offset capability of a system.

With reference to the first aspect or the second aspect, in a possible implementation, the chip sequence is obtained based on the following two sequences:

[1 0 0 1 0 1 1 0 1 1 1 1 0 1 0 1 0 0 0 1 0 0 1 1 1 0 0 0 0 0 1]; and

[0 0 0 1 1 1 0 1 0 1 0 0 1 0 1 1 1 1 0 0 1 1 0 1 1 0 0 0 0 0 1].

In this embodiment of this application, when an autocorrelation feature between different chip sequences is ensured, Hamming distances between different chip sequences may include 16, 17, and 20. Therefore, there are the fewest cases in which a Hamming distance between different chip sequences is equal to 16, and a bit error rate at the receive end can be further reduced.

With reference to the first aspect or the second aspect, in a possible implementation, the mapping relationship between a data symbol and a chip sequence is as follows:

| Data symbol | Chip sequence |
|---|---|
| 0 | 1 1 1 1 0 1 0 0 0 1 0 0 1 1 0 1 0 1 1 0 0 1 1 1 1 0 1 0 1 0 0 1 |
| 1 | 1 0 0 1 1 1 1 1 0 1 0 0 0 1 0 0 1 1 0 1 0 1 1 0 0 1 1 1 1 0 1 0 |
| 2 | 1 0 1 0 1 0 0 1 1 1 1 0 1 0 0 0 1 0 0 1 1 0 1 0 1 1 0 0 1 1 1 |
| 3 | 0 1 1 1 1 0 1 0 1 0 0 1 1 1 1 0 1 0 0 0 1 0 0 1 1 0 1 0 1 1 0 |
| 4 | 0 1 1 0 0 1 1 1 1 0 1 0 1 0 0 1 1 1 1 0 1 0 0 0 1 0 0 1 1 0 1 |
| 5 | 1 1 0 1 0 1 1 0 0 1 1 1 1 0 1 0 1 0 0 1 1 1 1 0 1 0 0 0 1 0 0 |
| 6 | 0 1 0 0 1 1 0 1 0 1 1 0 0 1 1 1 1 0 1 0 1 0 0 1 1 1 1 0 1 0 0 |
| 7 | 0 1 0 0 0 1 0 0 1 1 0 1 0 1 1 0 0 1 1 1 1 0 1 0 1 0 0 1 1 1 1 1 |

(continued)

| Data symbol | Chip sequence |
|---|---|
| 8 | 1 0 1 0 0 0 0 1 0 0 0 1 1 0 0 0 0 0 1 1 0 0 1 0 1 1 1 1 1 1 0 0 |
| 9 | 1 1 0 0 1 0 1 0 0 0 0 1 0 0 0 1 1 0 0 0 0 0 1 1 0 0 1 0 1 1 1 1 |
| 10 | 1 1 1 1 1 1 0 0 1 0 1 0 0 0 0 1 0 0 0 1 1 0 0 0 0 0 1 1 0 0 1 0 |
| 11 | 0 0 1 0 1 1 1 1 1 0 0 1 0 1 0 0 0 0 1 0 0 0 1 1 0 0 0 0 0 0 1 1 |
| 12 | 0 0 1 1 0 0 1 0 1 1 1 1 1 0 0 1 0 1 0 0 0 0 1 0 0 0 1 1 0 0 0 |
| 13 | 1 0 0 0 0 0 1 1 0 0 1 0 1 1 1 1 1 0 0 1 0 1 0 0 0 0 1 0 0 0 1 |
| 14 | 0 0 0 1 1 0 0 0 0 0 1 1 0 0 1 0 1 1 1 1 1 0 0 1 0 1 0 0 0 0 1 |
| 15 | 0 0 0 1 0 0 0 1 1 0 0 0 0 0 1 1 0 0 1 0 1 1 1 1 1 0 0 1 0 1 0 |

With reference to the first aspect or the second aspect, in a possible implementation, the mapping relationship between a data symbol and a chip sequence is as follows:

| Data symbol | Chip sequence |
|---|---|
| 0 | 1 1 1 1 1 0 1 1 0 0 1 1 1 1 0 1 0 0 0 0 1 0 0 1 0 1 1 0 0 1 0 1 |
| 1 | 0 1 0 1 1 1 1 1 1 0 1 1 0 0 1 1 1 1 0 1 0 0 0 0 1 0 0 1 0 1 1 0 |
| 2 | 0 1 1 0 0 1 0 1 1 1 1 1 1 0 1 1 0 0 1 1 1 1 0 1 0 0 0 0 1 0 0 1 |
| 3 | 1 0 0 1 0 1 1 0 0 1 0 1 1 1 1 1 1 0 1 1 0 0 1 1 1 1 0 1 0 0 0 0 |
| 4 | 0 0 0 0 1 0 0 1 0 1 1 0 0 1 0 1 1 1 1 1 1 0 1 1 0 0 1 1 1 1 0 1 |
| 5 | 1 1 0 1 0 0 0 0 1 0 0 1 0 1 1 0 0 1 0 1 1 1 1 1 1 0 1 1 0 0 1 1 |
| 6 | 0 0 1 1 1 1 0 1 0 0 0 0 1 0 0 1 0 1 1 0 0 1 0 1 1 1 1 1 1 0 1 1 |
| 7 | 1 0 1 1 0 0 1 1 1 1 0 1 0 0 0 0 1 0 0 1 0 1 1 0 0 1 0 1 1 1 1 1 |
| 8 | 1 0 1 0 1 1 1 0 0 1 1 0 1 0 0 0 0 1 0 1 1 1 0 0 0 0 1 1 0 0 0 0 |
| 9 | 0 0 0 0 1 0 1 0 1 1 1 0 0 1 1 0 1 0 0 0 0 1 0 1 1 1 0 0 0 0 1 1 |
| 10 | 0 0 1 1 0 0 0 0 1 0 1 0 1 1 1 0 0 1 1 0 1 0 0 0 0 1 0 1 1 1 0 0 |
| 11 | 1 1 0 0 0 0 1 1 0 0 0 0 1 0 1 0 1 1 1 0 0 1 1 0 1 0 0 0 0 1 0 1 |
| 12 | 0 1 0 1 1 1 0 0 0 0 1 1 0 0 0 0 1 0 1 0 1 1 1 0 0 1 1 0 1 0 0 0 |
| 13 | 1 0 0 0 0 1 0 1 1 1 0 0 0 0 1 1 0 0 0 0 1 0 1 0 1 1 1 0 0 1 1 0 |
| 14 | 0 1 1 0 1 0 0 0 0 1 0 1 1 1 0 0 0 0 1 1 0 0 0 0 1 0 1 0 1 1 1 0 |
| 15 | 1 1 1 0 0 1 1 0 1 0 0 0 0 1 0 1 1 1 0 0 0 0 1 1 0 0 0 0 1 0 1 0 |

With reference to the first aspect or the second aspect, in a possible implementation, the mapping relationship between a data symbol and a chip sequence is as follows:

| Data symbol | Chip sequence |
|---|---|
| 0 | 1 1 1 0 0 0 0 1 1 1 0 0 0 0 1 0 1 1 1 1 0 1 1 1 0 1 1 1 1 1 1 0 |
| 1 | 1 1 1 0 1 1 1 0 0 0 0 1 1 1 0 0 0 0 1 0 1 1 1 1 0 1 1 1 0 1 1 1 |
| 2 | 0 1 1 1 1 1 1 0 1 1 1 0 0 0 0 1 1 1 0 0 0 0 1 0 1 1 1 1 0 1 1 1 |
| 3 | 0 1 1 1 0 1 1 1 1 1 1 0 1 1 1 0 0 0 0 1 1 1 0 0 0 0 1 0 1 1 1 1 |
| 4 | 1 1 1 1 0 1 1 1 0 1 1 1 1 1 1 0 1 1 1 0 0 0 0 1 1 1 0 0 0 0 1 0 |
| 5 | 0 0 1 0 1 1 1 1 0 1 1 1 0 1 1 1 1 1 1 0 1 1 1 0 0 0 0 1 1 1 0 0 |
| 6 | 1 1 0 0 0 0 1 0 1 1 1 1 0 1 1 1 0 1 1 1 1 1 1 0 1 1 1 0 0 0 0 1 |

(continued)

| Data symbol | Chip sequence |
|---|---|
| 7 | 0 0 0 1 1 1 0 0 0 0 1 0 1 1 1 1 0 1 1 1 0 1 1 1 1 1 0 1 1 1 0 |
| 8 | 1 0 1 1 0 1 0 0 1 0 0 1 0 1 1 1 1 0 1 0 0 0 1 0 0 0 1 0 1 0 1 1 |
| 9 | 1 0 1 1 1 0 1 1 0 1 0 0 1 0 0 1 0 1 1 1 1 0 1 0 0 0 1 0 0 0 1 0 |
| 10 | 0 0 1 0 1 0 1 1 1 0 1 1 0 1 0 0 1 0 0 1 0 1 1 1 1 0 1 0 0 0 1 0 |
| 11 | 0 0 1 0 0 0 1 0 1 0 1 1 1 0 1 1 0 1 0 0 1 0 0 1 0 1 1 1 1 0 1 0 |
| 12 | 1 0 1 0 0 0 1 0 0 0 1 0 1 0 1 1 1 0 1 1 0 1 0 0 1 0 0 1 0 1 1 1 |
| 13 | 0 1 1 1 1 0 1 0 0 0 1 0 0 0 1 0 1 0 1 1 1 0 1 1 0 1 0 0 1 0 0 1 |
| 14 | 1 0 0 1 0 1 1 1 1 0 1 0 0 0 1 0 0 0 1 0 1 0 1 1 1 0 1 1 0 1 0 0 |
| 15 | 0 1 0 0 1 0 0 1 0 1 1 1 1 0 1 0 0 0 1 0 0 0 1 0 1 0 1 1 1 0 1 1 |

With reference to the first aspect or the second aspect, in a possible implementation, the mapping relationship between a data symbol and a chip sequence is as follows:

| Data symbol | Chip sequence |
|---|---|
| 0 | 1 1 0 0 1 0 1 0 1 0 0 1 0 0 0 0 1 1 0 0 1 0 1 0 0 1 1 0 1 1 1 1 |
| 1 | 1 0 1 0 1 1 0 0 1 1 1 1 0 1 1 0 1 0 1 0 1 1 0 0 0 0 0 0 1 0 0 1 |
| 2 | 1 0 0 1 0 0 0 0 1 1 0 0 1 0 1 0 1 0 0 1 0 0 0 0 0 0 1 1 0 1 0 1 |
| 3 | 1 1 1 1 0 1 1 0 1 0 1 0 1 1 0 0 1 1 1 1 0 1 1 0 0 1 0 1 0 0 1 1 |
| 4 | 1 0 0 1 1 1 1 1 0 0 1 1 1 0 1 0 1 0 0 1 1 1 1 1 1 0 0 0 1 0 1 |
| 5 | 1 1 1 1 1 0 0 1 0 1 0 1 1 1 0 0 1 1 1 1 1 0 0 1 1 0 1 0 0 0 1 1 |
| 6 | 1 1 0 0 0 1 0 1 0 1 1 0 0 0 0 0 1 1 0 0 0 1 0 1 1 0 0 1 1 1 1 1 |
| 7 | 1 0 1 0 0 0 1 1 0 0 0 0 0 1 1 0 1 0 1 0 0 0 1 1 1 1 1 1 1 0 0 1 |
| 8 | 1 0 0 1 1 1 1 1 1 0 0 0 1 0 1 0 1 1 0 0 0 0 0 1 1 0 0 0 1 0 1 |
| 9 | 1 1 1 1 1 0 0 1 1 0 1 0 0 0 1 1 0 0 0 0 0 1 1 0 1 0 1 0 0 0 1 1 |
| 10 | 1 1 0 0 0 1 0 1 1 0 0 1 1 1 1 1 0 0 1 1 1 0 1 0 1 0 0 1 1 1 1 1 |
| 11 | 1 0 1 0 0 0 1 1 1 1 1 1 0 0 1 0 1 0 1 1 1 0 0 1 1 1 1 1 0 0 1 |
| 12 | 1 1 0 0 1 0 1 0 0 1 1 0 1 1 1 1 0 0 1 1 0 1 0 1 0 1 1 0 1 1 1 1 |
| 13 | 1 0 1 0 1 1 0 0 0 0 0 0 1 0 0 1 0 1 0 1 0 0 1 1 0 0 0 0 1 0 0 1 |
| 14 | 1 0 0 1 0 0 0 0 0 0 1 1 0 1 0 1 0 1 1 0 1 1 1 1 0 0 1 1 0 1 0 1 |
| 15 | 1 1 1 1 0 1 1 0 0 1 0 1 0 0 1 1 0 0 0 0 1 0 0 1 0 1 0 1 0 0 1 1 |

With reference to the first aspect or the second aspect, in a possible implementation, the mapping relationship between a data symbol and a chip sequence is as follows:

| Data symbol | Chip sequence |
|---|---|
| 0 | 1 0 0 1 1 1 0 1 0 1 1 0 0 0 1 1 0 0 0 1 0 1 0 0 0 1 0 0 0 1 0 0 |
| 1 | 1 0 1 0 1 0 1 1 0 1 1 1 1 1 1 1 0 0 1 0 0 1 0 1 1 1 1 1 0 0 1 |
| 2 | 1 1 1 1 0 0 1 0 1 0 1 0 1 1 0 1 1 1 1 1 1 1 0 0 1 0 0 1 0 1 1 |
| 3 | 0 1 1 1 1 0 0 1 0 1 0 1 0 1 1 0 1 1 1 1 1 1 1 0 0 1 0 0 1 0 1 |
| 4 | 1 0 1 0 1 1 1 1 0 0 1 0 1 0 1 0 1 1 0 1 1 1 1 1 1 1 0 0 1 0 |
| 5 | 1 1 0 0 0 0 0 1 0 0 0 0 1 0 0 1 0 0 1 0 0 1 1 1 0 0 1 0 1 1 1 0 |

(continued)

| Data symbol | Chip sequence |
|---|---|
| 6 | 1 0 1 0 0 0 0 0 1 0 0 0 1 0 0 1 0 0 1 0 0 1 1 1 0 0 1 0 1 1 1 |
| 7 | 1 0 1 1 1 0 1 0 0 0 0 0 1 0 0 0 0 1 0 0 1 0 0 1 0 0 1 1 1 0 0 1 |
| 8 | 0 1 1 0 0 1 0 1 1 1 0 1 0 0 0 0 0 1 0 0 0 0 1 0 0 1 0 0 1 0 0 1 |
| 9 | 0 0 0 1 0 1 0 0 0 1 1 1 1 0 0 0 1 0 0 0 1 1 1 1 1 1 1 0 0 0 1 1 |
| 10 | 0 1 0 1 0 0 1 1 1 1 0 0 1 1 0 0 1 1 0 0 0 1 0 0 1 1 1 1 0 1 0 0 |
| 11 | 0 0 1 0 0 1 0 0 0 1 1 0 1 1 1 0 0 1 1 0 1 1 1 0 1 0 0 1 1 1 0 0 |
| 12 | 1 1 0 1 1 1 0 0 1 1 0 1 1 1 0 1 0 0 1 1 1 0 0 0 1 0 0 1 0 0 0 1 |
| 13 | 0 0 0 0 0 0 1 1 1 0 1 1 0 0 1 0 0 0 1 1 1 0 0 0 0 0 0 1 1 0 1 0 |
| 14 | 0 1 0 1 1 0 0 0 0 0 1 1 0 1 1 1 1 1 0 0 0 1 0 1 1 0 0 1 1 0 1 0 |
| 15 | 0 1 1 0 1 1 0 0 1 1 0 0 1 0 1 1 1 1 0 1 1 0 0 1 1 1 1 0 1 1 1 0 |

With reference to the first aspect or the second aspect, in a possible implementation, the mapping relationship between a data symbol and a chip sequence is as follows:

| Data symbol | Chip sequence |
|---|---|
| 0 | 1 0 1 1 0 1 1 0 1 1 0 0 0 1 0 0 |
| 1 | 0 0 1 0 1 1 0 1 1 0 1 1 0 0 0 1 |
| 2 | 0 1 0 0 1 0 1 1 0 1 1 0 1 1 0 0 |
| 3 | 0 0 0 1 0 0 1 0 1 1 0 1 1 0 1 1 |
| 4 | 1 1 0 0 0 1 0 0 1 0 1 1 0 1 1 0 |
| 5 | 1 0 1 1 0 0 0 1 0 0 1 0 1 1 0 1 |
| 6 | 0 1 1 0 1 1 0 0 0 1 0 0 1 0 1 1 |
| 7 | 1 1 0 1 1 0 1 1 0 0 0 1 0 0 1 0 |
| 8 | 1 1 1 0 0 0 1 1 1 0 0 1 0 0 0 1 |
| 9 | 0 1 1 1 1 0 0 0 1 1 1 0 0 1 0 0 |
| 10 | 0 0 0 1 1 1 1 0 0 0 1 1 1 0 0 1 |
| 11 | 0 1 0 0 0 1 1 1 1 0 0 0 1 1 1 0 |
| 12 | 1 0 0 1 0 0 0 1 1 1 1 0 0 0 1 1 |
| 13 | 1 1 1 0 0 1 0 0 0 1 1 1 1 0 0 0 |
| 14 | 0 0 1 1 1 0 0 1 0 0 0 1 1 1 1 0 |
| 15 | 1 0 0 0 1 1 1 0 0 1 0 0 0 1 1 1 |

With reference to the first aspect or the second aspect, in a possible implementation, the mapping relationship between a data symbol and a chip sequence is as follows:

| Data symbol | Chip sequence |
|---|---|
| 0 | 1 1 0 1 1 0 0 0 |
| 1 | 1 0 0 0 0 0 1 0 |
| 2 | 1 0 1 1 1 1 1 0 |
| 3 | 1 1 1 0 0 1 0 0 |
| 4 | 1 0 1 1 0 0 0 1 |

(continued)

| Data symbol | Chip sequence |
| --- | --- |
| 5 | 1 1 1 0 1 0 1 1 |
| 6 | 1 1 0 1 0 1 1 1 |
| 7 | 1 0 0 0 1 1 0 1 |
| 8 | 1 1 0 1 1 0 0 0 |
| 9 | 1 0 0 0 0 0 1 0 |
| 10 | 1 0 1 1 1 1 1 0 |
| 11 | 1 1 1 0 0 1 0 0 |
| 12 | 1 0 1 1 0 0 0 1 |
| 13 | 1 1 1 0 1 0 1 1 |
| 14 | 1 1 0 1 0 1 1 1 |
| 15 | 1 0 0 0 1 1 0 1 |

According to a third aspect, an embodiment of this application provides a communication apparatus, configured to perform the method in the first aspect or any one of the possible implementations of the first aspect. The communication apparatus includes units that perform the method in the first aspect or any one of the possible implementations of the first aspect. For example, the communication apparatus includes a processing unit and a transceiver unit.

The processing unit is configured to generate a PPDU based on a mapping relationship between a data symbol and a chip sequence, where a length of each chip sequence is L, a minimum Hamming distance is greater than or equal to L/2, L is a positive integer, a bit length corresponding to a data symbol is less than a bit length of a chip sequence, and the minimum Hamming distance indicates a smallest Hamming distance between any two different chip sequences; and the transceiver unit is configured to send the PPDU.

In a possible implementation, the processing unit is specifically configured to generate a modulated symbol of the PPDU based on the mapping relationship between a data symbol and a chip sequence.

According to a fourth aspect, an embodiment of this application provides a communication apparatus, configured to perform the method in the second aspect or any one of the possible implementations of the second aspect. The communication apparatus includes units that perform the method in the second aspect or any one of the possible implementations of the second aspect. For example, the communication apparatus includes a processing unit and a transceiver unit.

The transceiver unit is configured to receive a PPDU; and the processing unit is configured to process the PPDU based on a mapping relationship between a data symbol and a chip sequence, where a length of each chip sequence is L, a minimum Hamming distance is greater than or equal to L/2, L is a positive integer, a bit length corresponding to a data symbol is less than a bit length of a chip sequence, and the minimum Hamming distance indicates a smallest Hamming distance between any two different chip sequences.

In a possible implementation, the processing unit is specifically configured to: obtain a first sequence in the PPDU, where a length of the first sequence is L; determine, based on N chip sequences included in the mapping relationship between a data symbol and a chip sequence, a first chip sequence corresponding to the first sequence, where the first chip sequence is one of the N chip sequences, and N is a positive integer; determine, based on the mapping relationship between a data symbol and a chip sequence, a data symbol corresponding to the first chip sequence; and determine, based on the data symbol corresponding to the first chip sequence, an information bit corresponding to the first chip sequence.

With reference to the third aspect or the fourth aspect, in a possible implementation, L=32, or L=16, or L=8.

With reference to the third aspect or the fourth aspect, in a possible implementation, the chip sequence is obtained based on at least one of the following:

[1 1 -1 -1 -1 -1 -1 -1] and [1 1 -1 1 -1 1 -1 -1];

[1 -1 1 -1 -1 -1 -1 -1] and [1 1 -1 1 1 -1 -1 -1]; and

[1 -1 -1 1 -1 -1 -1 -1] and [1 1 1 -1 1 -1 -1 -1].

With reference to the third aspect or the fourth aspect, in a possible implementation, the chip sequence is obtained based on at least two of the following:

$$[\,1 \quad 1 \quad -1 \quad 1 \quad -1 \quad 1 \quad -1 \quad -1\,]$$
$$[\,1 \quad 1 \quad -1 \quad 1 \quad 1 \quad -1 \quad -1 \quad -1\,].$$
$$[\,1 \quad 1 \quad 1 \quad -1 \quad 1 \quad -1 \quad -1 \quad -1\,]$$

With reference to the third aspect or the fourth aspect, in a possible implementation, the chip sequence is obtained based on a Hadamard matrix, and an order of the Hadamard matrix is related to the length of the chip sequence.

With reference to the third aspect or the fourth aspect, in a possible implementation, at least two columns of elements in a matrix formed by the chip sequence are the same.

With reference to the third aspect or the fourth aspect, in a possible implementation, the chip sequence is obtained based on the following two sequences:

[1 0 0 1 0 1 1 0 1 1 1 1 0 1 0 1 0 0 0 1 0 0 1 1 1 0 0 0 0 0 1]; and

[0 0 0 1 1 1 0 1 0 1 0 0 1 0 1 1 1 1 0 0 1 1 0 1 1 0 0 0 0 0 1].

With reference to the third aspect or the fourth aspect, in a possible implementation, the mapping relationship between a data symbol and a chip sequence is as follows:

| Data symbol | Chip sequence |
|---|---|
| 0 | 1 1 1 1 0 1 0 0 0 1 0 0 1 1 0 1 0 1 1 0 0 1 1 1 1 0 1 0 1 0 0 1 |
| 1 | 1 0 0 1 1 1 1 1 0 1 0 0 0 1 0 0 1 1 0 1 0 1 1 0 0 1 1 1 1 0 1 0 |
| 2 | 1 0 1 0 1 0 0 1 1 1 1 0 1 0 0 0 1 0 0 1 1 0 1 0 1 1 0 0 1 1 1 |
| 3 | 0 1 1 1 1 0 1 0 1 0 0 1 1 1 1 0 1 0 0 0 1 0 0 1 1 0 1 0 1 1 0 |
| 4 | 0 1 1 0 0 1 1 1 1 0 1 0 1 0 0 1 1 1 1 0 1 0 0 0 1 0 0 1 1 0 1 |
| 5 | 1 1 0 1 0 1 1 0 0 1 1 1 1 0 1 0 1 0 0 1 1 1 1 0 1 0 0 0 1 0 0 |
| 6 | 0 1 0 0 1 1 0 1 0 1 1 0 0 1 1 1 1 0 1 0 1 0 0 1 1 1 1 0 1 0 0 |
| 7 | 0 1 0 0 0 1 0 0 1 1 0 1 0 1 1 0 0 1 1 1 1 0 1 0 1 0 0 1 1 1 1 |
| 8 | 1 0 1 0 0 0 0 1 0 0 0 1 1 0 0 0 0 0 1 1 0 0 1 0 1 1 1 1 1 1 0 0 |
| 9 | 1 1 0 0 1 0 1 0 0 0 0 1 0 0 0 1 1 0 0 0 0 0 1 1 0 0 1 0 1 1 1 1 |
| 10 | 1 1 1 1 1 1 0 0 1 0 1 0 0 0 0 1 0 0 0 1 1 0 0 0 0 0 1 1 0 0 1 0 |
| 11 | 0 0 1 0 1 1 1 1 1 0 0 1 0 1 0 0 0 0 1 0 0 0 1 1 0 0 0 0 0 1 1 |
| 12 | 0 0 1 1 0 0 1 0 1 1 1 1 1 0 0 1 0 1 0 0 0 0 1 0 0 0 1 1 0 0 0 |
| 13 | 1 0 0 0 0 0 1 1 0 0 1 0 1 1 1 1 1 1 0 0 1 0 1 0 0 0 0 1 0 0 0 1 |
| 14 | 0 0 0 1 1 0 0 0 0 0 1 1 0 0 1 0 1 1 1 1 1 1 0 0 1 0 1 0 0 0 0 1 |
| 15 | 0 0 0 1 0 0 0 1 1 0 0 0 0 0 1 1 0 0 1 0 1 1 1 1 1 1 0 0 1 0 1 0 |

With reference to the third aspect or the fourth aspect, in a possible implementation, the mapping relationship between a data symbol and a chip sequence is as follows:

| Data symbol | Chip sequence |
|---|---|
| 0 | 1 1 1 1 1 0 1 1 0 0 1 1 1 1 0 1 0 0 0 0 1 0 0 1 0 1 1 0 0 1 0 1 |
| 1 | 0 1 0 1 1 1 1 1 1 0 1 1 0 0 1 1 1 1 0 1 0 0 0 0 1 0 0 1 0 1 1 0 |
| 2 | 0 1 1 0 0 1 0 1 1 1 1 1 1 0 1 1 0 0 1 1 1 1 0 1 0 0 0 0 1 0 0 1 |
| 3 | 1 0 0 1 0 1 1 0 0 1 0 1 1 1 1 1 1 0 1 1 0 0 1 1 1 1 0 1 0 0 0 0 |

(continued)

| Data symbol | Chip sequence |
|---|---|
| 4 | 0 0 0 0 1 0 0 1 0 1 1 0 0 1 0 1 1 1 1 1 1 0 1 1 0 0 1 1 1 1 0 1 |
| 5 | 1 1 0 1 0 0 0 0 1 0 0 1 0 1 1 0 0 1 0 1 1 1 1 1 1 0 1 1 0 0 1 1 |
| 6 | 0 0 1 1 1 1 0 1 0 0 0 0 1 0 0 1 0 1 1 0 0 1 0 1 1 1 1 1 1 0 1 1 |
| 7 | 1 0 1 1 0 0 1 1 1 1 0 1 0 0 0 0 1 0 0 1 0 1 1 0 0 1 0 1 1 1 1 1 |
| 8 | 1 0 1 0 1 1 1 0 0 1 1 0 1 0 0 0 0 1 0 1 1 1 0 0 0 0 1 1 0 0 0 0 |
| 9 | 0 0 0 0 1 0 1 0 1 1 1 0 0 1 1 0 1 0 0 0 0 1 0 1 1 1 0 0 0 0 1 1 |
| 10 | 0 0 1 1 0 0 0 0 1 0 1 0 1 1 1 0 0 1 1 0 1 0 0 0 0 1 0 1 1 1 0 0 |
| 11 | 1 1 0 0 0 0 1 1 0 0 0 0 1 0 1 0 1 1 1 0 0 1 1 0 1 0 0 0 0 1 0 1 |
| 12 | 0 1 0 1 1 1 0 0 0 0 1 1 0 0 0 0 1 0 1 0 1 1 1 0 0 1 1 0 1 0 0 0 |
| 13 | 1 0 0 0 0 1 0 1 1 1 0 0 0 0 1 1 0 0 0 0 1 0 1 0 1 1 1 0 0 1 1 0 |
| 14 | 0 1 1 0 1 0 0 0 0 1 0 1 1 1 0 0 0 0 1 1 0 0 0 0 1 0 1 0 1 1 1 0 |
| 15 | 1 1 1 0 0 1 1 0 1 0 0 0 0 1 0 1 1 1 0 0 0 0 1 1 0 0 0 0 1 0 1 0 |

With reference to the third aspect or the fourth aspect, in a possible implementation, the mapping relationship between a data symbol and a chip sequence is as follows:

| Data symbol | Chip sequence |
|---|---|
| 0 | 1 1 1 0 0 0 0 1 1 1 0 0 0 0 1 0 1 1 1 1 0 1 1 1 0 1 1 1 1 1 1 0 |
| 1 | 1 1 1 0 1 1 1 0 0 0 0 1 1 1 0 0 0 0 1 0 1 1 1 1 0 1 1 1 0 1 1 1 |
| 2 | 0 1 1 1 1 1 1 0 1 1 1 0 0 0 0 1 1 1 0 0 0 0 1 0 1 1 1 1 0 1 1 1 |
| 3 | 0 1 1 1 0 1 1 1 1 1 1 0 1 1 1 0 0 0 0 1 1 1 0 0 0 0 1 0 1 1 1 1 |
| 4 | 1 1 1 1 0 1 1 1 0 1 1 1 1 1 1 0 1 1 1 0 0 0 0 1 1 1 0 0 0 0 1 0 |
| 5 | 0 0 1 0 1 1 1 1 0 1 1 1 0 1 1 1 1 1 1 0 1 1 1 0 0 0 0 1 1 1 0 0 |
| 6 | 1 1 0 0 0 0 1 0 1 1 1 1 0 1 1 1 0 1 1 1 1 1 1 0 1 1 1 0 0 0 0 1 |
| 7 | 0 0 0 1 1 1 0 0 0 0 1 0 1 1 1 1 0 1 1 1 0 1 1 1 1 1 1 0 1 1 1 0 |
| 8 | 1 0 1 1 0 1 0 0 1 0 0 1 0 1 1 1 1 0 1 0 0 0 1 0 0 0 1 0 1 0 1 1 |
| 9 | 1 0 1 1 1 0 1 1 0 1 0 0 1 0 0 1 0 1 1 1 1 0 1 0 0 0 1 0 0 0 1 0 |
| 10 | 0 0 1 0 1 0 1 1 1 0 1 1 0 1 0 0 1 0 0 1 0 1 1 1 1 0 1 0 0 0 1 0 |
| 11 | 0 0 1 0 0 0 1 0 1 0 1 1 1 0 1 1 0 1 0 0 1 0 0 1 0 1 1 1 1 0 1 0 |
| 12 | 1 0 1 0 0 0 1 0 0 0 1 0 1 0 1 1 1 0 1 1 0 1 0 0 1 0 0 1 0 1 1 1 |
| 13 | 0 1 1 1 1 0 1 0 0 0 1 0 0 0 1 0 1 0 1 1 1 0 1 1 0 1 0 0 1 0 0 1 |
| 14 | 1 0 0 1 0 1 1 1 1 0 1 0 0 0 1 0 0 0 1 0 1 0 1 1 1 0 1 1 0 1 0 0 |
| 15 | 0 1 0 0 1 0 0 1 0 1 1 1 1 0 1 0 0 0 1 0 0 0 1 0 1 0 1 1 1 0 1 1 |

With reference to the third aspect or the fourth aspect, in a possible implementation, the mapping relationship between a data symbol and a chip sequence is as follows:

| Data symbol | Chip sequence |
|---|---|
| 0 | 1 1 0 0 1 0 1 0 1 0 0 1 0 0 0 0 1 1 0 0 1 0 1 0 0 1 1 0 1 1 1 1 |
| 1 | 1 0 1 0 1 1 0 0 1 1 1 1 0 1 1 0 1 0 1 0 1 1 0 0 0 0 0 0 1 0 0 1 |
| 2 | 1 0 0 1 0 0 0 0 1 1 0 0 1 0 1 0 1 0 0 1 0 0 0 0 0 0 1 1 0 1 0 1 |

(continued)

| Data symbol | Chip sequence |
|---|---|
| 3 | 1 1 1 1 0 1 1 0 1 0 1 0 1 1 0 0 1 1 1 1 0 1 1 0 0 1 0 1 0 0 1 1 |
| 4 | 1 0 0 1 1 1 1 1 0 0 1 1 1 0 1 0 1 0 0 1 1 1 1 1 1 0 0 0 1 0 1 |
| 5 | 1 1 1 1 1 0 0 1 0 1 0 1 1 0 0 1 1 1 1 1 0 0 1 1 0 1 0 0 0 1 1 |
| 6 | 1 1 0 0 0 1 0 1 0 1 1 0 0 0 0 0 1 1 0 0 0 1 0 1 1 0 0 1 1 1 1 1 |
| 7 | 1 0 1 0 0 0 1 1 0 0 0 0 0 1 1 0 1 0 1 0 0 0 1 1 1 1 1 1 1 0 0 1 |
| 8 | 1 0 0 1 1 1 1 1 1 0 0 0 1 0 1 0 1 1 0 0 0 0 0 1 1 0 0 0 1 0 1 |
| 9 | 1 1 1 1 1 0 0 1 1 0 1 0 0 0 1 1 0 0 0 0 0 1 1 0 1 0 1 0 0 0 1 1 |
| 10 | 1 1 0 0 0 1 0 1 1 0 0 1 1 1 1 1 0 0 1 1 1 0 1 0 1 0 0 1 1 1 1 1 |
| 11 | 1 0 1 0 0 0 1 1 1 1 1 1 0 0 1 0 1 0 1 1 1 0 0 1 1 1 1 1 0 0 1 |
| 12 | 1 1 0 0 1 0 1 0 0 1 1 0 1 1 1 0 0 1 1 0 1 0 1 0 1 1 0 1 1 1 1 |
| 13 | 1 0 1 0 1 1 0 0 0 0 0 0 1 0 0 1 0 1 0 1 0 0 1 1 0 0 0 0 1 0 0 1 |
| 14 | 1 0 0 1 0 0 0 0 0 0 1 1 0 1 0 1 0 1 1 0 1 1 1 1 0 0 1 1 0 1 0 1 |
| 15 | 1 1 1 1 0 1 1 0 0 1 0 1 0 0 1 1 0 0 0 0 1 0 0 1 0 1 0 1 0 0 1 1 |

With reference to the third aspect or the fourth aspect, in a possible implementation, the mapping relationship between a data symbol and a chip sequence is as follows:

| Data symbol | Chip sequence |
|---|---|
| 0 | 1 0 0 1 1 1 0 1 0 1 1 0 0 0 1 1 0 0 0 1 0 1 0 0 0 1 0 0 0 1 0 0 |
| 1 | 1 0 1 0 1 0 1 1 0 1 1 1 1 1 1 1 0 0 1 0 0 1 0 1 1 1 1 1 0 0 1 |
| 2 | 1 1 1 1 0 0 1 0 1 0 1 0 1 1 0 1 1 1 1 1 1 1 0 0 1 0 0 1 0 1 1 |
| 3 | 0 1 1 1 1 0 0 1 0 1 0 1 0 1 1 0 1 1 1 1 1 1 1 0 0 1 0 0 1 0 1 |
| 4 | 1 0 1 0 1 1 1 1 0 0 1 0 1 0 1 0 1 1 0 1 1 1 1 1 1 1 1 0 0 1 0 |
| 5 | 1 1 0 0 0 0 0 1 0 0 0 0 1 0 0 1 0 0 1 0 0 1 1 1 0 0 1 0 1 1 1 0 |
| 6 | 1 0 1 0 0 0 0 0 1 0 0 0 0 1 0 0 1 0 0 1 0 0 1 1 1 0 0 1 0 1 1 1 |
| 7 | 1 0 1 1 1 0 1 0 0 0 0 0 1 0 0 0 0 1 0 0 1 0 0 1 0 0 1 1 1 0 0 1 |
| 8 | 0 1 1 0 0 1 0 1 1 1 0 1 0 0 0 0 0 1 0 0 0 0 1 0 0 1 0 0 1 0 0 1 |
| 9 | 0 0 0 1 0 1 0 0 0 1 1 1 1 0 0 0 1 0 0 0 1 1 1 1 1 1 1 0 0 0 1 1 |
| 10 | 0 1 0 1 0 0 1 1 1 1 0 0 1 1 0 0 1 1 0 0 0 1 0 0 1 1 1 1 0 1 0 0 |
| 11 | 0 0 1 0 0 1 0 0 0 1 1 0 1 1 1 0 0 1 1 0 1 1 1 0 1 0 0 1 1 1 0 0 |
| 12 | 1 1 0 1 1 1 0 0 1 1 0 1 1 1 0 1 0 0 1 1 1 0 0 0 1 0 0 1 0 0 0 1 |
| 13 | 0 0 0 0 0 0 1 1 1 0 1 1 0 0 1 0 0 0 1 1 1 0 0 0 0 0 0 1 1 0 1 0 |
| 14 | 0 1 0 1 1 0 0 0 0 0 1 1 0 1 1 1 1 1 0 0 0 1 0 1 1 0 0 1 1 0 1 0 |
| 15 | 0 1 1 0 1 1 0 0 1 1 0 0 1 0 1 1 1 1 0 1 1 0 0 1 1 1 1 0 1 1 1 0 |

With reference to the third aspect or the fourth aspect, in a possible implementation, the mapping relationship between a data symbol and a chip sequence is as follows:

| Data symbol | Chip sequence |
|---|---|
| 0 | 1 0 1 1 0 1 1 0 1 1 0 0 0 1 0 0 |
| 1 | 0 0 1 0 1 1 0 1 1 0 1 1 0 0 0 1 |

(continued)

| Data symbol | Chip sequence |
|---|---|
| 2 | 0 1 0 0 1 0 1 1 0 1 1 0 1 1 0 0 |
| 3 | 0 0 0 1 0 0 1 0 1 1 0 1 1 0 1 1 |
| 4 | 1 1 0 0 0 1 0 0 1 0 1 1 0 1 1 0 |
| 5 | 1 0 1 1 0 0 0 1 0 0 1 0 1 1 0 1 |
| 6 | 0 1 1 0 1 1 0 0 0 1 0 0 1 0 1 1 |
| 7 | 1 1 0 1 1 0 1 1 0 0 0 1 0 0 1 0 |
| 8 | 1 1 1 0 0 0 1 1 1 0 0 1 0 0 0 1 |
| 9 | 0 1 1 1 1 0 0 0 1 1 1 0 0 1 0 0 |
| 10 | 0 0 0 1 1 1 1 0 0 0 1 1 1 0 0 1 |
| 11 | 0 1 0 0 0 1 1 1 1 0 0 0 1 1 1 0 |
| 12 | 1 0 0 1 0 0 0 1 1 1 1 0 0 0 1 1 |
| 13 | 1 1 1 0 0 1 0 0 0 1 1 1 1 0 0 0 |
| 14 | 0 0 1 1 1 0 0 1 0 0 0 1 1 1 1 0 |
| 15 | 1 0 0 0 1 1 1 0 0 1 0 0 0 1 1 1 |

With reference to the third aspect or the fourth aspect, in a possible implementation, the mapping relationship between a data symbol and a chip sequence is as follows:

| Data symbol | Chip sequence |
|---|---|
| 0 | 1 1 0 1 1 0 0 0 |
| 1 | 1 0 0 0 0 0 1 0 |
| 2 | 1 0 1 1 1 1 1 0 |
| 3 | 1 1 1 0 0 1 0 0 |
| 4 | 1 0 1 1 0 0 0 1 |
| 5 | 1 1 1 0 1 0 1 1 |
| 6 | 1 1 0 1 0 1 1 1 |
| 7 | 1 0 0 0 1 1 0 1 |
| 8 | 1 1 0 1 1 0 0 0 |
| 9 | 1 0 0 0 0 0 1 0 |
| 10 | 1 0 1 1 1 1 1 0 |
| 11 | 1 1 1 0 0 1 0 0 |
| 12 | 1 0 1 1 0 0 0 1 |
| 13 | 1 1 1 0 1 0 1 1 |
| 14 | 1 1 0 1 0 1 1 1 |
| 15 | 1 0 0 0 1 1 0 1 |

According to a fifth aspect, an embodiment of this application provides a communication apparatus. The communication apparatus includes a processor, configured to perform the method in the first aspect or any one of the possible implementations of the first aspect. Alternatively, the processor is configured to execute a program stored in a memory. When the program is executed, the method shown in the first aspect or any one of the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to send a PPDU or the like.

According to a sixth aspect, an embodiment of this application provides a communication apparatus. The communication apparatus includes a processor, configured to perform the method according to the second aspect or any one of the possible implementations of the second aspect. Alternatively, the processor is configured to execute a program stored in a memory. When the program is executed, the method shown in the second aspect or any one of the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to receive a PPDU or the like.

According to a seventh aspect, an embodiment of this application provides a chip. The communication apparatus includes a logic circuit and an interface, and the logic circuit is coupled to the interface. The logic circuit is configured to generate a PPDU based on a mapping relationship between a data symbol and a chip sequence, and the interface is configured to output the PPDU.

According to an eighth aspect, an embodiment of this application provides a chip. The communication apparatus includes a logic circuit and an interface, and the logic circuit is coupled to the interface. The interface is configured to input a PPDU, and the logic circuit is configured to process the PPDU based on a mapping relationship between a data symbol and a chip sequence.

According to a ninth aspect, an embodiment of this application provides a computer-readable storage medium. The computer-readable storage medium is configured to store a computer program, and when the computer program is run on a computer, the method shown in the first aspect or any one of the possible implementations of the first aspect is performed.

According to a tenth aspect, an embodiment of this application provides a computer-readable storage medium. The computer-readable storage medium is configured to store a computer program, and when the computer program is run on a computer, the method shown in the second aspect or any one of the possible implementations of the second aspect is performed.

According to an eleventh aspect, an embodiment of this application provides a computer program product. The computer program product includes a computer program or computer code (which may also be referred to as instructions). When the computer program or computer code is run on a computer, the method shown in the first aspect or any one of the possible implementations of the first aspect is performed.

According to a twelfth aspect, an embodiment of this application provides a computer program product. The computer program product includes a computer program or computer code (which may also be referred to as instructions). When the computer program or computer code is run on a computer, the method shown in the second aspect or any one of the possible implementations of the second aspect is performed.

According to a thirteenth aspect, an embodiment of this application provides a computer program. When the computer program is run on a computer, the method shown in the first aspect or any one of the possible implementations of the first aspect is performed.

According to a fourteenth aspect, an embodiment of this application provides a computer program. When the computer program is run on a computer, the method shown in the second aspect or any one of the possible implementations of the second aspect is performed.

According to a fifteenth aspect, an embodiment of this application provides a wireless communication system. The wireless communication system includes a transmit end and a receive end. The transmit end is configured to perform the method shown in the first aspect or any one of the possible implementations of the first aspect, and the receive end is configured to perform the method shown in the second aspect or any one of the possible implementations of the second aspect.

**BRIEF DESCRIPTION OF DRAWINGS**

FIG. 1 is a diagram of an architecture of a communication system according to an embodiment of this application;

FIG. 2 is a diagram of an architecture of a communication system according to an embodiment of this application;

FIG. 3 is a schematic flowchart of a PPDU-based communication method according to an embodiment of this application;

FIG. 4a is a diagram of a structure of a PPDU according to an embodiment of this application;

FIG. 4b is a diagram of an O-QPSK modulation and spreading procedure according to an embodiment of this application;

FIG. 4c is a diagram of an O-QPSK modulation and spreading procedure according to an embodiment of this application;

FIG. 5a is a diagram of a mapping relationship between a data symbol and a chip sequence;

FIG. 5b shows Hamming distances between different chip sequences in the mapping relationship shown in FIG. 5a;

FIG. 6 is a diagram of a structure of a communication apparatus according to an embodiment of this application;

FIG. 7 is a diagram of a structure of a communication apparatus according to an embodiment of this application; and

FIG. 8 is a diagram of a structure of a chip according to an embodiment of this application.

## DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to the embodiment may be included in at least one embodiment of this application. The phrase shown in various positions in the specification may not necessarily refer to a same embodiment, and is not an independent or optional embodiment exclusive from another embodiment. It may be understood explicitly and implicitly by a person skilled in the art that the embodiments described in this specification may be combined with other embodiments.

In this application, "at least one piece (item)" means one or more, "a plurality of" means two or more, "at least two pieces (items)" means two or three or more, and "and/or" is used to describe an association relationship between associated objects, and indicates that three relationships may exist. For example, "A and/or B" may indicate: Only A exists, only B exists, and both A and B exist, where A and B may be singular or plural. "Or" indicates that two relationships may exist, for example, only A exists and only B exists; and when A and B are not mutually exclusive, indicates that three relationships may exist, for example, only A exists, only B exists, and both A and B exist. The character "/" generally represents an "or" relationship between the associated objects. "At least one of the following items (pieces)" or a similar expression thereof means any combination of these items. For example, at least one of a, b, or c may indicate: a, b, c, "a and b", "a and c", "b and c", or "a and b and c".

The technical solutions provided in embodiments of this application are applicable to a UWB-based wireless personal area network (wireless personal area network, WPAN). For example, the method provided in embodiments of this application is applicable to institute of electrical and electronics engineers (institute of electrical and electronics engineers, IEEE) 802.15 series protocols, for example, the 802.15.4a protocol, the 802.15.4z protocol, the 802.15.4ab protocol, or a future generation of UWB WPAN standard. Examples are not enumerated herein. The technical solutions provided in embodiments of this application are further applied to various communication systems, for example, an internet of things (internet of things, IoT) system, vehicle-to-everything (vehicle to X, V2X), a narrowband internet of things (narrowband internet of things, NB-IoT) system, and are applied to a device used in vehicle-to-everything, an internet of things node, a sensor, or the like in the internet of things (IoT, internet of things), a smart camera, a smart remote control, and a smart water or electricity meter in a smart home, a sensor in a smart city, and the like. The technical solutions provided in embodiments of this application are further applicable to an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a long term evolution (long term evolution, LTE) system, a 5th-generation (5th-generation, 5G) communication system, a 6th-generation (6th-generation, 6G) communication system, or the like.

A UWB technology is a new wireless communication technology in which a nanosecond-level non-sinusoidal narrow impulse is used for data transmission. Modulation is performed on impulses with very steep rise and fall time, and therefore, UWB occupies a wide spectrum range, so that a signal has a bandwidth of a Giga Hertz (GHz) magnitude. A bandwidth used by UWB is generally above 1 GHz. A UWB system does not need to generate a sinusoidal carrier signal and can directly transmit an impulse sequence. Therefore, the UWB system has a wide spectrum and low average power. A UWB wireless communication system has advantages such as a high multi-path resolution capacity, low power consumption, and high confidentiality. This facilitates coexistence with another system, thereby improving spectrum utilization and system capacity. In addition, in a short-range communication application, transmit power of a UWB transmitter may be generally lower than 1 mW (milliwatt). Theoretically, interference generated by a UWB signal is equivalent to white noise with one broadband only. This facilitates good coexistence between ultra-wideband and existing narrowband communication. Therefore, the UWB system and a narrowband (narrowband, NB) communication system can simultaneously operate without interfering with each other. The method provided in embodiments of this application may be implemented by a communication apparatus in a wireless communication system. In a communication apparatus, a module that implements a UWB system function may be referred to as a UWB module, and a module that implements a narrowband communication system function may be referred to as a narrowband communication module. The UWB module and the narrowband communication module may be different apparatuses, chips, or the like. This is not limited in embodiments of this application. Certainly, the UWB module and the narrowband communication module may alternatively be integrated into one apparatus or chip. Implementations of the UWB module and the narrowband communication module in the communication apparatus are not limited in embodiments of this application. For example, the method provided in embodiments of this application may be implemented by the narrowband communication module. Optionally, a part of the method provided in embodiments of this application may be implemented by the narrowband communication module, and the other part may be implemented by the UWB module. For example, after a modulated symbol is obtained based on a mapping relationship provided in embodiments of this application, the modulated symbol may be sent by using a UWB impulse, for example, may be sent by the UWB module. For example, after an information bit of a PPDU is mapped to a chip sequence based on the mapping relationship provided in embodiments of this application, BPSK modulation, QPSK modulation, or the like may be performed on the chip sequence, and then be sent by using a UWB impulse. A processing manner other than the mapping relationship is not limited in embodiments of this application.

Embodiments of this application are mainly described by using a WPAN as an example, and in particular, by using a network used in IEEE 802.15 series standards as an example. However, a person skilled in the art easily understands that, various aspects in embodiments of this application may be extended to another network using various standards or protocols, for example, a wireless local area network (Wireless Local Area Network, WLAN), Bluetooth (BLUETOOTH), high performance radio LAN (High Performance Radio LAN, HIPERLAN) (a wireless standard similar to the IEEE 802.11 standard, mainly used in Europe), a wide area network (WAN), or another network that is known currently or developed in the future. Therefore, regardless of a used coverage area and a used wireless access protocol, the various aspects provided in embodiments of this application are applicable to any suitable wireless network.

The method provided in embodiments of this application may be implemented by a communication apparatus in a wireless communication system. The communication apparatus may be an apparatus in a UWB system. For example, the communication apparatus may include but is not limited to a communication server, a router, a switch, a bridge, a computer, a mobile phone, and the like. For another example, the communication apparatus may include user equipment (user equipment, UE). The user equipment may include various handheld devices, vehicle-mounted devices (for example, an automobile or a component mounted in the automobile), wearable devices, internet of things (internet of things, IoT) devices, or computing devices that have a wireless communication function, another processing device connected to a wireless modem, or the like. Examples are not enumerated one by one herein. For another example, the communication apparatus may include a central control point, for example, a personal area network (personal area network, PAN) or a PAN coordinator. The PAN coordinator or the PAN may be a mobile phone, a vehicle-mounted device, a tag, a smart home, or the like. For another example, the communication apparatus may include a chip, and the chip may be disposed in a communication server, a router, a switch, a terminal device, or the like. Examples are not enumerated one by one herein. It may be understood that the descriptions of the communication apparatus are also applicable to a first communication apparatus and a second communication apparatus shown below.

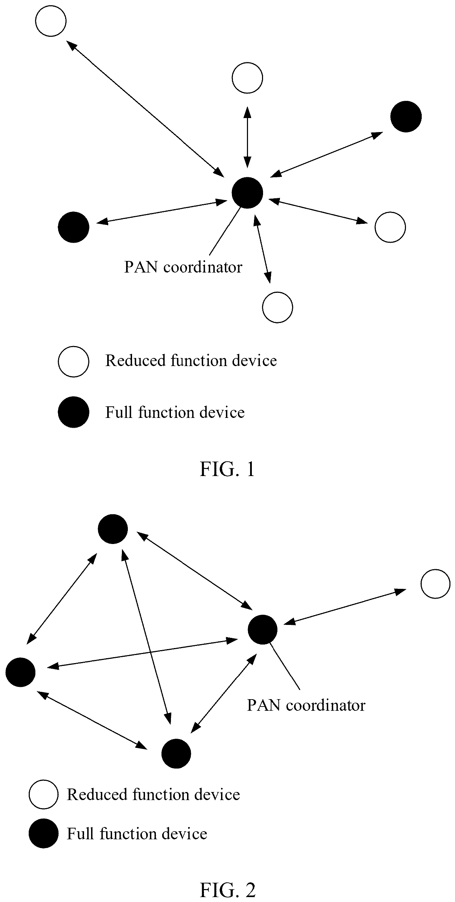

For example, FIG. 1 and FIG. 2 are diagrams of an architecture of a communication system according to an embodiment of this application. FIG. 1 shows a star topology structure according to an embodiment of this application, and FIG. 2 shows a point-to-point topology structure according to an embodiment of this application. As shown in FIG. 1, in a star topology, one central control node may perform data communication with one or more other devices. As shown in FIG. 2, in the point-to-point topology structure, data communication may be performed between different devices. In FIG. 1 and FIG. 2, both a full function device (full function device) and a reduced function device (reduced function device) may be understood as communication apparatuses shown in embodiments of this application. The full function device and the reduced function device are relative to each other. For example, the reduced function device may not be a PAN coordinator (coordinator). For another example, compared with the full function device, the reduced function device may have no coordination capability or have a lower communication rate than the full function device. It may be understood that the PAN coordinator shown in FIG. 2 is merely an example, and other three full function devices shown in FIG. 2 may also be used as PAN coordinators, which are not shown one by one herein.

In an example, in embodiments of this application, a transmit end may be a full function device, and a receive end may be a reduced function device; or a transmit end may be a reduced function device, and a receive end may be a full function device; or both a transmit end and a receive end may be full function devices; or both a transmit end and a receive end may be reduced function devices. In another example, a transmit end may be a coordinator, and a receive end may be a non-coordinator; or a transmit end may be a non-coordinator, and a receive end may be a coordinator; or both a transmit end and a receive end may be coordinators; or the like. Examples are not enumerated one by one herein.

It may be understood that the full function device and the reduced function device shown in embodiments of this application are merely examples of the communication apparatus. However, any communication apparatus that can implement the PPDU-based communication method provided in embodiments of this application falls within the protection scope of embodiments of this application.

Generally, a narrowband signal used to assist UWB may be sent in an offset quadrature phase shift keying (offset quadrature phase shift keying, O-QPSK) modulation scheme. To enhance system robustness, before O-QPSK modulation, four encoded (or unencoded) information bits need to be mapped to a chip sequence. Therefore, the receive end determines the sent information bits by using the chip sequence. Generally, when four information bits are mapped to a chip sequence of a specific length, a minimum Hamming distance between any two chip sequences is less than L/2, where L is a bit length of the chip sequence. However, the minimum Hamming distance may be further increased.

In view of this, embodiments of this application provide a PPDU-based communication method and an apparatus, to effectively increase a minimum Hamming distance between chip sequences. In an example, after receiving a PPDU, the receive end may compare a sequence in the PPDU with a chip sequence in a mapping relationship, and then determine, based on similarity, a data symbol corresponding to the sequence. Generally, if a Hamming distance between any two chip sequences is large, it indicates that more bits are allowed to be erroneous. Therefore, the minimum Hamming distance between chip sequences is increased, so that a probability that an error occurs when the receive end identifies a sequence is lower, to effectively improve accuracy of identifying the sequence by the receive end and improve system performance. Optionally, in the method provided in embodiments of this application, each data symbol may have at least two fixed chip values whose positions are fixed. Because each data symbol may have at least two fixed chip values whose positions are fixed, the fixed chip values may be used as a pilot (the pilot is generally a known signal), so that the receive end can perform frequency offset estimation and compensation based on the fixed chip values, to improve an anti-frequency offset capability of the system.

It should be noted that the minimum Hamming distance shown in this embodiment of this application may be understood as a smallest Hamming distance between any two chip sequences in a mapping relationship between a data symbol and a chip sequence. The Hamming distance may be described as follows: In the information theory, a Hamming distance (Hamming distance) between two equal-length sequences is a quantity of different values at corresponding positions in the two sequences. In other words, the Hamming distance is a quantity of sequence values that need to be replaced when a sequence is converted into another sequence. For example, a Hamming distance between 1011101 and 1001001 is 2.

For descriptions of the transmit end and the receive end in embodiments of this application, refer to the descriptions of FIG. 1 and FIG. 2. The transmit end may be understood as a communication apparatus for sending a PPDU, and the receive end may be understood as a communication apparatus for receiving the PPDU. Whether another forwarding device is further included between the transmit end and the receive end is not limited in embodiments of this application. Similarly, a function of the PPDU is not limited in embodiments of this application.

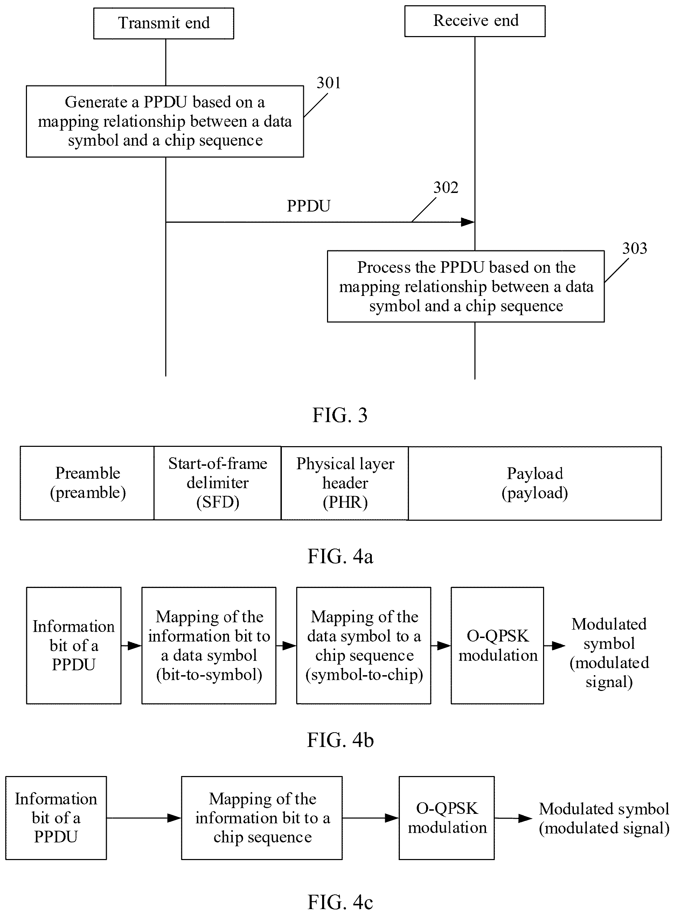

FIG. 3 is a schematic flowchart of a PPDU-based communication method according to an embodiment of this application. As shown in FIG. 3, the method includes the following steps.

301: A transmit end generates a PPDU based on a mapping relationship between a data symbol and a chip sequence.

In an example, a minimum Hamming distance is greater than or equal to L/2, where L represents a bit length of the chip sequence, and L is a positive integer.

In another example, a minimum Hamming distance is greater than or equal to floor{L/2}, where floor represents rounding down.

For example, in this embodiment of this application, N may be further used to represent a quantity of different data symbols in the mapping relationship between a data symbol and a chip sequence, and a value of N is related to a first length shown below. For example, when the first length is 4 bits, N=16. For another example, when the first length is 3 bits, N=8. Certainly, a relationship between the first length and N shown herein is merely an example, and should not be construed as a limitation on embodiments of this application. For ease of description, an example in which the first length is 4 bits is used below, but this should not be construed as a limitation on embodiments of this application.

For example, when L=32, the minimum Hamming distance is greater than or equal to 16. For another example, when L=16, the minimum Hamming distance is greater than or equal to 8. For another example, when L=8, the minimum Hamming distance is greater than or equal to 4. It may be understood that a value of L shown herein is merely an example. In a specific implementation, a chip sequence of another length (for example, L may be an even number or an odd number) may be further used. This is not limited in embodiments of this application.

Spread spectrum is a communication technology that spreads a spectrum (spectrum) of a transmitted signal to a wider bandwidth than an original bandwidth. Through spread spectrum, an original bandwidth of the PPDU can be effectively extended, and a spectrum of the PPDU can be expanded. Spread spectrum shown in this embodiment of this application may be understood as mapping an information bit of the first length to a sequence of a second length (or mapping a data symbol to the sequence of the second length, where the data symbol is obtained based on the information bit of the first length), and in a same length measurement standard, the first length is greater than the second length. Because an information bit of a specific length is mapped to a longer sequence, effect of extending the original bandwidth of the PPDU is achieved. Therefore, the sequence of the second length shown in this embodiment of this application may also be referred to as a chip sequence. Certainly, the sequence of the second length may alternatively have another name, for example, a pseudo-random sequence, a sequence whose length is L, or a sequence including L chips (chip) or chip values (chip value). This is not limited in embodiments of this application. It may be understood that the second length shown above is equal to L shown in this embodiment of this application.

It should be noted that the mapping relationship between a data symbol and a chip sequence shown in this embodiment of this application is merely an example. In a specific implementation, the transmit end may alternatively generate the PPDU based on a mapping relationship between an information bit and a chip sequence. The following describes in detail the process of generating the PPDU.

FIG. 4a is a diagram of a structure of the PPDU according to an embodiment of this application. As shown in FIG. 4a, the PPDU may include at least the following: a preamble (preamble), a start-of-frame delimiter (start-of-frame delimiter, SFD), a physical layer header (physical layer header, PHR), and a payload (payload). It may be understood that content and an order in the PPDU shown in FIG. 4a are merely examples, and should not be construed as a limitation on embodiments of this application. In a specific implementation, the PPDU may alternatively have another structure. This is not limited in embodiments of this application.

FIG. 4b is a diagram of an O-QPSK modulation and spreading procedure according to an embodiment of this application. As shown in FIG. 4b, an information bit (which may also be referred to as a data bit such as binary data, or a binary bitstream) of the PPDU undergoes mapping of the information bit to a data symbol (bit-to-symbol), mapping of the data symbol to a chip sequence (symbol-to-chip) (which may also be referred to as spreading) is performed, and then O-QPSK modulation is performed, to output a modulated symbol (modulated signal). In other words, after obtaining the information bit based on the structure of the PPDU, the transmit end may map the information bit to the data symbol, for example, map every 4 bits to one data symbol; then map each data symbol to a different chip sequence based on the mapping relationship between a data symbol and a chip sequence; and finally perform O-QPSK modulation to obtain a modulated symbol. Therefore, the transmit end may send the modulated symbol shown in FIG. 4b.

FIG. 4c is a diagram of an O-QPSK modulation and spreading procedure according to an embodiment of this application. As shown in FIG. 4c, an information bit of the PPDU undergoes mapping of the information bit of the PPDU to a chip sequence, and then O-QPSK modulation is performed, to output a modulated symbol (modulated signal). In other words, after obtaining the information bit based on an inner structure of the PPDU, the transmit end may map every 4 information bits to a different chip sequence based on the mapping relationship between an information bit and a chip sequence, perform O-QPSK modulation, and send a modulated symbol shown in FIG. 4c.

In the flowcharts shown in FIG. 4b and FIG. 4c, after O-QPSK modulation is performed on a chip value obtained based on the mapping relationship between a data symbol and a chip sequence or the mapping relationship between an information bit and a chip sequence, it can be ensured that formed signals are orthogonal, so that non-coherent demodulation at a receive end can be supported, and complexity is low.

It should be noted that the data symbol shown in FIG. 4b is different from an orthogonal frequency division multiplexing (orthogonal frequency division multiplexing, OFDM) symbol in a wireless communication network. The data symbol shown in this embodiment of this application may be understood as a value obtained when the information bit of the first length is mapped to a decimal value. For example, when the first length is 4 bits, the data symbol may be represented as a value from 0 to 15. Generally, mapping between a data symbol and a chip sequence may be understood as mapping a data symbol (for example, a decimal value) corresponding to every 4 bits to a chip sequence including L chips. Certainly, the relationship between the information bit of the first length and the data symbol shown in this embodiment of this application is merely an example. For example, the data symbol may alternatively be a value obtained when the information bit of the first length is mapped to a hexadecimal value, a value obtained when the information bit of the first length is mapped to an octal value, or the like. This is not limited in embodiments of this application.

It may be understood that, based on the mapping relationship between a data symbol and a chip sequence (or the mapping relationship between an information bit and a chip sequence) provided in this embodiment of this application, the chip value of the chip sequence may alternatively use another modulation scheme, for example, binary phase shift keying (binary phase shift keying, BPSK) and QPSK. Optionally, the modulated symbol may be directly sent. Alternatively, the modulated symbol may be carried by using a group of UWB impulses, so as to be transmitted on a UWB channel. The group of UWB impulses shown herein may be sent continuously, or may be sent in segments. This is not limited in embodiments of this application. Further, a guard interval may be reserved between segments and between different modulated symbols, that is, no signal may be sent within the guard interval, to effectively avoid interference between modulated symbols caused by multipath.

Based on FIG. 4a to FIG. 4c, the generating a PPDU shown in this embodiment of this application may be further understood as: The transmit end obtains the information bit of the PPDU, and then performs processing based on the information bit of the PPDU and the mapping relationship between a data symbol and a chip sequence, to obtain the modulated symbol. The processing herein may include at least one of the following: mapping from an information bit to a data symbol, mapping from a data symbol to a chip sequence, and modulation. For example, the generating a PPDU shown in step 301 may include generating the modulated symbol of the PPDU.

The following uses examples to describe the mapping relationship in this embodiment of this application. It may be understood that the following mapping relationships are merely examples.

In a possible implementation, the mapping relationship includes that every 4 information bits are mapped to a chip sequence whose length is 32 bits. In another possible implementation, the mapping relationship includes that every 4 information bits are mapped to a chip sequence whose length is 16 bits. In still another possible implementation, the mapping relationship includes that every 4 information bits are mapped to a chip sequence whose length is 8 bits. Certainly, in a specific implementation, another mapping relationship may alternatively be included. This is not limited in embodiments of this application. For specific descriptions of the mapping relationship, refer to the following descriptions. The following shows only several mapping relationships as examples.

It may be understood that the following merely shows examples of the mapping relationship between a data symbol and a chip sequence. For the mapping relationship between an information bit and a chip sequence, adaptively refer to the mapping relationship between a data symbol and a chip sequence shown below. A mapping relationship between a data symbol and a chip sequence in each of Table 1, Table 3, Table 5, Table 6, Table 7, Table 9, and Table 10 shown below is not limited in embodiments of this application. In other words, a specific data symbol to which a chip sequence is mapped is not limited in embodiments of this application. The mapping relationships shown below are merely examples.

In an example, Table 1 is a mapping relationship provided in this embodiment of this application. A person skilled in the art may appropriately modify the mapping relationship shown in Table 1 to a mapping relationship between an information bit and a chip sequence. Whether the transmit end maps an information bit to a chip sequence or maps a data symbol to a chip sequence is not limited in embodiments of this application.

**Table 1**

| Data symbol (data symbol) | Chip sequence (chip values ($c_0c_1...c_{30}c_{31}$)) |
|---|---|
| 0 | 1 1 1 1 0 1 0 0 0 1 0 0 1 1 0 1 0 1 1 0 0 1 1 1 1 0 1 0 1 0 0 1 |
| 1 | 1 0 0 1 1 1 1 1 0 1 0 0 0 1 0 0 1 1 0 1 0 1 1 0 0 1 1 1 1 0 1 0 |
| 2 | 1 0 1 0 1 0 0 1 1 1 1 1 0 1 0 0 0 1 0 0 1 1 0 1 0 1 1 0 0 1 1 1 |
| 3 | 0 1 1 1 1 0 1 0 1 0 0 1 1 1 1 1 0 1 0 0 0 1 0 0 1 1 0 1 0 1 1 0 |
| 4 | 0 1 1 0 0 1 1 1 1 0 1 0 1 0 0 1 1 1 1 1 0 1 0 0 0 1 0 0 1 1 0 1 |
| 5 | 1 1 0 1 0 1 1 0 0 1 1 1 1 0 1 0 1 0 0 1 1 1 1 1 0 1 0 0 0 1 0 0 |
| 6 | 0 1 0 0 1 1 0 1 0 1 1 0 0 1 1 1 1 0 1 0 1 0 0 1 1 1 1 1 0 1 0 0 |
| 7 | 0 1 0 0 0 1 0 0 1 1 0 1 0 1 1 0 0 1 1 1 1 0 1 0 1 0 0 1 1 1 1 1 |
| 8 | 1 0 1 0 0 0 0 1 0 0 0 1 1 0 0 0 0 0 1 1 0 0 1 0 1 1 1 1 1 1 0 0 |
| 9 | 1 1 0 0 1 0 1 0 0 0 0 1 0 0 0 1 1 0 0 0 0 0 1 1 0 0 1 0 1 1 1 1 |
| 10 | 1 1 1 1 1 1 0 0 1 0 1 0 0 0 0 1 0 0 0 1 1 0 0 0 0 0 1 1 0 0 1 0 |
| 11 | 0 0 1 0 1 1 1 1 1 1 0 0 1 0 1 0 0 0 0 1 0 0 0 1 1 0 0 0 0 0 1 1 |
| 12 | 0 0 1 1 0 0 1 0 1 1 1 1 1 1 0 0 1 0 1 0 0 0 0 1 0 0 0 1 1 0 0 0 |
| 13 | 1 0 0 0 0 0 1 1 0 0 1 0 1 1 1 1 1 1 0 0 1 0 1 0 0 0 0 1 0 0 0 1 |
| 14 | 0 0 0 1 1 0 0 0 0 0 1 1 0 0 1 0 1 1 1 1 1 1 0 0 1 0 1 0 0 0 0 1 |
| 15 | 0 0 0 1 0 0 0 1 1 0 0 0 0 0 1 1 0 0 1 0 1 1 1 1 1 1 0 0 1 0 1 0 |

If the chip sequences shown in Table 1 are denoted as $\vec{v}_0$, $\vec{v}_1$, $\vec{v}_2$, ..., and $\vec{v}_{15}$, in sequence, a Hamming distance between any two chip sequences is shown in Table 2.

**Table 2**

| Hamming distance | $\vec{v}_0$ | $\vec{v}_1$ | $\vec{v}_2$ | $\vec{v}_3$ | $\vec{v}_4$ | $\vec{v}_5$ | $\vec{v}_6$ | $\vec{v}_7$ | $\vec{v}_8$ | $\vec{v}_9$ | $\vec{v}_{10}$ | $\vec{v}_{11}$ | $\vec{v}_{12}$ | $\vec{v}_{13}$ | $\vec{v}_{14}$ | $\vec{v}_{15}$ |
|---|---|---|---|---|---|---|---|---|---|---|---|---|---|---|---|---|
| $\vec{v}_0$ | 0 | 16 | 18 | 18 | 16 | 18 | 18 | 16 | 16 | 16 | 18 | 18 | 16 | 18 | 18 | 16 |
| $\vec{v}_1$ | 16 | 0 | 16 | 18 | 18 | 16 | 18 | 18 | 16 | 16 | 16 | 18 | 18 | 16 | 18 | 18 |
| $\vec{v}_2$ | 18 | 16 | 0 | 16 | 18 | 18 | 16 | 18 | 18 | 16 | 16 | 16 | 18 | 18 | 16 | 18 |
| $\vec{v}_3$ | 18 | 18 | 16 | 0 | 16 | 18 | 18 | 16 | 18 | 18 | 16 | 16 | 16 | 18 | 18 | 16 |
| $\vec{v}_4$ | 16 | 18 | 18 | 16 | 0 | 16 | 18 | 18 | 16 | 18 | 18 | 16 | 16 | 16 | 18 | 18 |
| $\vec{v}_5$ | 18 | 16 | 18 | 18 | 16 | 0 | 16 | 18 | 18 | 16 | 18 | 18 | 16 | 16 | 16 | 18 |
| $\vec{v}_6$ | 18 | 18 | 16 | 18 | 18 | 16 | 0 | 16 | 18 | 18 | 16 | 18 | 18 | 16 | 16 | 16 |
| $\vec{v}_7$ | 16 | 18 | 18 | 16 | 18 | 18 | 16 | 0 | 16 | 18 | 18 | 16 | 18 | 18 | 16 | 16 |
| $\vec{v}_8$ | 16 | 16 | 18 | 18 | 16 | 18 | 18 | 16 | 0 | 16 | 18 | 18 | 16 | 18 | 18 | 16 |
| $\vec{v}_9$ | 16 | 16 | 16 | 18 | 18 | 16 | 18 | 18 | 16 | 0 | 16 | 18 | 18 | 16 | 18 | 18 |
| $\vec{v}_{10}$ | 18 | 16 | 16 | 16 | 18 | 18 | 16 | 18 | 18 | 16 | 0 | 16 | 18 | 18 | 16 | 18 |
| $\vec{v}_{11}$ | 18 | 18 | 16 | 16 | 16 | 18 | 18 | 16 | 18 | 18 | 16 | 0 | 16 | 18 | 18 | 16 |
| $\vec{v}_{12}$ | 16 | 18 | 18 | 16 | 16 | 16 | 18 | 18 | 16 | 18 | 18 | 16 | 0 | 16 | 18 | 18 |
| $\vec{v}_{13}$ | 18 | 16 | 18 | 18 | 16 | 16 | 16 | 18 | 18 | 16 | 18 | 18 | 16 | 0 | 16 | 18 |
| $\vec{v}_{14}$ | 18 | 18 | 16 | 18 | 18 | 16 | 16 | 16 | 18 | 18 | 16 | 18 | 18 | 16 | 0 | 16 |
| $\vec{v}_{15}$ | 16 | 18 | 18 | 16 | 18 | 18 | 16 | 16 | 16 | 18 | 18 | 16 | 18 | 18 | 16 | 0 |

It can be learned from Table 2 that the minimum Hamming distance in this embodiment of this application is 16. Further, Hamming distances between different chip sequences are distributed from 16 to 18, to avoid an excessively large or excessively small Hamming distance between any two different chip sequences from affecting a Hamming distance between other chip sequences.

In another example, Table 3 is a mapping relationship provided in this embodiment of this application. A person skilled in the art may appropriately modify the mapping relationship shown in Table 3 to a mapping relationship between an information bit and a chip sequence. Whether the transmit end maps an information bit to a chip sequence or maps a data symbol to a chip sequence is not limited in embodiments of this application.

**Table 3**

| Data symbol | Chip sequence (chip values ($c_0c_1...c_{30}c_{31}$)) |
|---|---|
| 0 | 1 1 1 1 1 0 1 1 0 0 1 1 1 1 0 1 0 0 0 0 1 0 0 1 0 1 1 0 0 1 0 1 |
| 1 | 0 1 0 1 1 1 1 1 1 0 1 1 0 0 1 1 1 1 0 1 0 0 0 0 1 0 0 1 0 1 1 0 |
| 2 | 0 1 1 0 0 1 0 1 1 1 1 1 1 0 1 1 0 0 1 1 1 1 0 1 0 0 0 0 1 0 0 1 |
| 3 | 1 0 0 1 0 1 1 0 0 1 0 1 1 1 1 1 1 0 1 1 0 0 1 1 1 1 0 1 0 0 0 0 |
| 4 | 0 0 0 0 1 0 0 1 0 1 1 0 0 1 0 1 1 1 1 1 1 0 1 1 0 0 1 1 1 1 0 1 |
| 5 | 1 1 0 1 0 0 0 0 1 0 0 1 0 1 1 0 0 1 0 1 1 1 1 1 1 0 1 1 0 0 1 1 |
| 6 | 0 0 1 1 1 1 0 1 0 0 0 0 1 0 0 1 0 1 1 0 0 1 0 1 1 1 1 1 1 0 1 1 |
| 7 | 1 0 1 1 0 0 1 1 1 1 0 1 0 0 0 0 1 0 0 1 0 1 1 0 0 1 0 1 1 1 1 1 |
| 8 | 1 0 1 0 1 1 1 0 0 1 1 0 1 0 0 0 0 1 0 1 1 1 0 0 0 0 1 1 0 0 0 0 |
| 9 | 0 0 0 0 1 0 1 0 1 1 1 0 0 1 1 0 1 0 0 0 0 1 0 1 1 1 0 0 0 0 1 1 |
| 10 | 0 0 1 1 0 0 0 0 1 0 1 0 1 1 1 0 0 1 1 0 1 0 0 0 0 1 0 1 1 1 0 0 |
| 11 | 1 1 0 0 0 0 1 1 0 0 0 0 1 0 1 0 1 1 1 0 0 1 1 0 1 0 0 0 0 1 0 1 |
| 12 | 0 1 0 1 1 1 0 0 0 0 1 1 0 0 0 0 1 0 1 0 1 1 1 0 0 1 1 0 1 0 0 0 |

(continued)

| Data symbol | Chip sequence (chip values ($c_0 c_1...c_{30}c_{31}$)) |
|---|---|
| 13 | 1 0 0 0 0 1 0 1 1 1 0 0 0 0 1 1 0 0 0 0 1 0 1 0 1 1 1 0 0 1 1 0 |
| 14 | 0 1 1 0 1 0 0 0 0 1 0 1 1 1 0 0 0 0 1 1 0 0 0 0 1 0 1 0 1 1 1 0 |
| 15 | 1 1 1 0 0 1 1 0 1 0 0 0 0 1 0 1 1 1 0 0 0 0 1 1 0 0 0 0 1 0 1 0 |

If the chip sequences shown in Table 3 are denoted as $\vec{v}_0$, $\vec{v}_1$, $\vec{v}_2$, ..., and $\vec{v}_{15}$ in sequence, Hamming distances between the chip sequences are shown in Table 4.

**Table 4**

| Hamming distance | $\vec{v}_0$ | $\vec{v}_1$ | $\vec{v}_2$ | $\vec{v}_3$ | $\vec{v}_4$ | $\vec{v}_5$ | $\vec{v}_6$ | $\vec{v}_7$ | $\vec{v}_8$ | $\vec{v}_9$ | $\vec{v}_{10}$ | $\vec{v}_{11}$ | $\vec{v}_{12}$ | $\vec{v}_{13}$ | $\vec{v}_{14}$ | $\vec{v}_{15}$ |
|---|---|---|---|---|---|---|---|---|---|---|---|---|---|---|---|---|
| $\vec{v}_0$ | 0 | 18 | 16 | 18 | 16 | 18 | 16 | 18 | 16 | 18 | 16 | 18 | 16 | 18 | 16 | 18 |
| $\vec{v}_1$ | 18 | 0 | 18 | 16 | 18 | 16 | 18 | 16 | 18 | 16 | 18 | 16 | 18 | 16 | 18 | 16 |
| $\vec{v}_2$ | 16 | 18 | 0 | 18 | 16 | 18 | 16 | 18 | 16 | 18 | 16 | 18 | 16 | 18 | 16 | 18 |
| $\vec{v}_3$ | 18 | 16 | 18 | 0 | 18 | 16 | 18 | 16 | 18 | 16 | 18 | 16 | 18 | 16 | 18 | 16 |
| $\vec{v}_4$ | 16 | 18 | 16 | 18 | 0 | 18 | 16 | 18 | 16 | 18 | 16 | 18 | 16 | 18 | 16 | 18 |
| $\vec{v}_5$ | 18 | 16 | 18 | 16 | 18 | 0 | 18 | 16 | 18 | 16 | 18 | 16 | 18 | 16 | 18 | 16 |
| $\vec{v}_6$ | 16 | 18 | 16 | 18 | 16 | 18 | 0 | 18 | 16 | 18 | 16 | 18 | 16 | 18 | 16 | 18 |
| $\vec{v}_7$ | 18 | 16 | 18 | 16 | 18 | 16 | 18 | 0 | 18 | 16 | 18 | 16 | 18 | 16 | 18 | 16 |
| $\vec{v}_8$ | 16 | 18 | 16 | 18 | 16 | 18 | 16 | 18 | 0 | 18 | 16 | 18 | 16 | 18 | 16 | 18 |
| $\vec{v}_9$ | 18 | 16 | 18 | 16 | 18 | 16 | 18 | 16 | 18 | 0 | 18 | 16 | 18 | 16 | 18 | 16 |
| $\vec{v}_{10}$ | 16 | 18 | 16 | 18 | 16 | 18 | 16 | 18 | 16 | 18 | 0 | 18 | 16 | 18 | 16 | 18 |
| $\vec{v}_{11}$ | 18 | 16 | 18 | 16 | 18 | 16 | 18 | 16 | 18 | 16 | 18 | 0 | 18 | 16 | 18 | 16 |
| $\vec{v}_{12}$ | 16 | 18 | 16 | 18 | 16 | 18 | 16 | 18 | 16 | 18 | 16 | 18 | 0 | 18 | 16 | 18 |
| $\vec{v}_{13}$ | 18 | 16 | 18 | 16 | 18 | 16 | 18 | 16 | 18 | 16 | 18 | 16 | 18 | 0 | 18 | 16 |
| $\vec{v}_{14}$ | 16 | 18 | 16 | 18 | 16 | 18 | 16 | 18 | 16 | 18 | 16 | 18 | 16 | 18 | 0 | 18 |
| $\vec{v}_{15}$ | 18 | 16 | 18 | 16 | 18 | 16 | 18 | 16 | 18 | 16 | 18 | 16 | 18 | 16 | 18 | 0 |

It can be learned from Table 4 that the minimum Hamming distance in this embodiment of this application is 16. Further, Hamming distances between different chip sequences are distributed from 16 to 18, to avoid an excessively large or excessively small Hamming distance between any two different chip sequences from affecting a Hamming distance between other chip sequences.

In another example, Table 5 is a mapping relationship provided in this embodiment of this application. A person skilled in the art may appropriately modify the mapping relationship shown in Table 5 to a mapping relationship between an information bit and a chip sequence. Whether the transmit end maps an information bit to a chip sequence or maps a data symbol to a chip sequence is not limited in embodiments of this application. It may be understood that the minimum Hamming distance in Table 5 is 16, or it may be understood that Hamming distances between chip sequences are all 16.

**Table 5**

| Data symbol | Chip sequence |
|---|---|
| 0 | 1 1 1 0 0 0 0 1 1 1 0 0 0 0 1 0 1 1 1 1 0 1 1 1 0 1 1 1 1 1 1 0 |
| 1 | 1 1 1 0 1 1 1 0 0 0 0 1 1 1 0 0 0 0 1 0 1 1 1 1 0 1 1 1 0 1 1 1 |
| 2 | 0 1 1 1 1 1 1 0 1 1 1 0 0 0 0 1 1 1 0 0 0 0 1 0 1 1 1 1 0 1 1 1 |
| 3 | 0 1 1 1 0 1 1 1 1 1 1 0 1 1 1 0 0 0 0 1 1 1 0 0 0 0 1 0 1 1 1 1 |
| 4 | 1 1 1 1 0 1 1 1 0 1 1 1 1 1 1 0 1 1 1 0 0 0 0 1 1 1 0 0 0 0 1 0 |

(continued)

| Data symbol | Chip sequence |
|---|---|
| 5 | 0 0 1 0 1 1 1 1 0 1 1 1 0 1 1 1 1 1 1 0 1 1 1 0 0 0 0 1 1 1 0 0 |
| 6 | 1 1 0 0 0 0 1 0 1 1 1 1 0 1 1 1 0 1 1 1 1 1 1 0 1 1 1 0 0 0 0 1 |
| 7 | 0 0 0 1 1 1 0 0 0 0 1 0 1 1 1 1 0 1 1 1 0 1 1 1 1 1 1 0 1 1 1 0 |
| 8 | 1 0 1 1 0 1 0 0 1 0 0 1 0 1 1 1 1 0 1 0 0 0 1 0 0 0 1 0 1 0 1 1 |
| 9 | 1 0 1 1 1 0 1 1 0 1 0 0 1 0 0 1 0 1 1 1 1 0 1 0 0 0 1 0 0 0 1 0 |
| 10 | 0 0 1 0 1 0 1 1 1 0 1 1 0 1 0 0 1 0 0 1 0 1 1 1 1 0 1 0 0 0 1 0 |
| 11 | 0 0 1 0 0 0 1 0 1 0 1 1 1 0 1 1 0 1 0 0 1 0 0 1 0 1 1 1 1 0 1 0 |
| 12 | 1 0 1 0 0 0 1 0 0 0 1 0 1 0 1 1 1 0 1 1 0 1 0 0 1 0 0 1 0 1 1 1 |
| 13 | 0 1 1 1 1 0 1 0 0 0 1 0 0 0 1 0 1 0 1 1 1 0 1 1 0 1 0 0 1 0 0 1 |
| 14 | 1 0 0 1 0 1 1 1 1 0 1 0 0 0 1 0 0 0 1 0 1 0 1 1 1 0 1 1 0 1 0 0 |
| 15 | 0 1 0 0 1 0 0 1 0 1 1 1 1 0 1 0 0 0 1 0 0 0 1 0 1 0 1 1 1 0 1 1 |

In another example, Table 6 is a mapping relationship provided in this embodiment of this application. A person skilled in the art may appropriately modify the mapping relationship shown in Table 6 to a mapping relationship between an information bit and a chip sequence. Whether the transmit end maps an information bit to a chip sequence or maps a data symbol to a chip sequence is not limited in embodiments of this application. It may be understood that the minimum Hamming distance in Table 6 is 16, or it may be understood that Hamming distances between chip sequences are all 16.

**Table 6**

| Data symbol | Chip sequence |
|---|---|
| 0 | 1 1 0 0 1 0 1 0 1 0 0 1 0 0 0 0 1 1 0 0 1 0 1 0 0 1 1 0 1 1 1 1 |
| 1 | 1 0 1 0 1 1 0 0 1 1 1 1 0 1 1 0 1 0 1 0 1 1 0 0 0 0 0 0 1 0 0 1 |
| 2 | 1 0 0 1 0 0 0 0 1 1 0 0 1 0 1 0 1 0 0 1 0 0 0 0 0 0 1 1 0 1 0 1 |
| 3 | 1 1 1 1 0 1 1 0 1 0 1 0 1 1 0 0 1 1 1 1 0 1 1 0 0 1 0 1 0 0 1 1 |
| 4 | 1 0 0 1 1 1 1 1 0 0 1 1 1 0 1 0 1 0 0 1 1 1 1 1 1 1 0 0 0 1 0 1 |
| 5 | 1 1 1 1 1 0 0 1 0 1 0 1 1 1 0 0 1 1 1 1 1 0 0 1 1 0 1 0 0 0 1 1 |
| 6 | 1 1 0 0 0 1 0 1 0 1 1 0 0 0 0 0 1 1 0 0 0 1 0 1 1 0 0 1 1 1 1 1 |
| 7 | 1 0 1 0 0 0 1 1 0 0 0 0 0 1 1 0 1 0 1 0 0 0 1 1 1 1 1 1 1 0 0 1 |
| 8 | 1 0 0 1 1 1 1 1 1 0 0 0 1 0 1 0 1 1 0 0 0 0 0 1 1 0 0 0 1 0 1 |
| 9 | 1 1 1 1 1 0 0 1 1 0 1 0 0 0 1 1 0 0 0 0 0 1 1 0 1 0 1 0 0 0 1 1 |
| 10 | 1 1 0 0 0 1 0 1 1 0 0 1 1 1 1 0 0 1 1 1 0 1 0 1 0 0 1 1 1 1 1 |
| 11 | 1 0 1 0 0 0 1 1 1 1 1 1 0 0 1 0 1 0 1 1 1 0 0 1 1 1 1 1 0 0 1 |
| 12 | 1 1 0 0 1 0 1 0 0 1 1 0 1 1 1 1 0 0 1 1 0 1 0 1 0 1 1 0 1 1 1 1 |
| 13 | 1 0 1 0 1 1 0 0 0 0 0 0 1 0 0 1 0 1 0 1 0 0 1 1 0 0 0 0 1 0 0 1 |
| 14 | 1 0 0 1 0 0 0 0 0 0 1 1 0 1 0 1 0 1 1 0 1 1 1 1 0 0 1 1 0 1 0 1 |
| 15 | 1 1 1 1 0 1 1 0 0 1 0 1 0 0 1 1 0 0 0 0 1 0 0 1 0 1 0 1 0 0 1 1 |

In another example, Table 7 is a mapping relationship provided in this embodiment of this application. A person skilled in the art may appropriately modify the mapping relationship shown in Table 7 to a mapping relationship between an information bit and a chip sequence. Whether the transmit end maps an information bit to a chip sequence or maps a data symbol to a chip sequence is not limited in embodiments of this application.

**Table 7**

| Data symbol | Chip sequence (chip values ($c_0 c_1 ... c_{30} c_{31}$)) |
|---|---|
| 0 | 1 0 0 1 1 1 0 1 0 1 1 0 0 0 1 1 0 0 0 1 0 1 0 0 0 1 0 0 0 1 0 0 |
| 1 | 1 0 1 0 1 0 1 1 0 1 1 1 1 1 1 1 0 0 1 0 0 1 0 1 1 1 1 1 0 0 1 |
| 2 | 1 1 1 1 0 0 1 0 1 0 1 0 1 1 0 1 1 1 1 1 1 1 0 0 1 0 0 1 0 1 1 |
| 3 | 0 1 1 1 1 0 0 1 0 1 0 1 0 1 1 0 1 1 1 1 1 1 1 0 0 1 0 0 1 0 1 |
| 4 | 1 0 1 0 1 1 1 1 0 0 1 0 1 0 1 0 1 1 0 1 1 1 1 1 1 1 0 0 1 0 |
| 5 | 1 1 0 0 0 0 0 1 0 0 0 0 1 0 0 1 0 0 1 0 0 1 1 1 0 0 1 0 1 1 1 0 |
| 6 | 1 0 1 0 0 0 0 0 1 0 0 0 0 1 0 0 1 0 0 1 0 0 1 1 1 0 0 1 0 1 1 1 |
| 7 | 1 0 1 1 1 0 1 0 0 0 0 0 1 0 0 0 0 1 0 0 1 0 0 1 0 0 1 1 1 0 0 1 |
| 8 | 0 1 1 0 0 1 0 1 1 1 0 1 0 0 0 0 0 1 0 0 0 0 1 0 0 1 0 0 1 0 0 1 |
| 9 | 0 0 0 1 0 1 0 0 0 1 1 1 1 0 0 0 1 0 0 0 1 1 1 1 1 1 0 0 0 1 1 |
| 10 | 0 1 0 1 0 0 1 1 1 1 0 0 1 1 0 0 1 1 0 0 0 1 0 0 1 1 1 1 0 1 0 0 |
| 11 | 0 0 1 0 0 1 0 0 0 1 1 0 1 1 1 0 0 1 1 0 1 1 1 0 1 0 0 1 1 1 0 0 |
| 12 | 1 1 0 1 1 1 0 0 1 1 0 1 1 1 0 1 0 0 1 1 1 0 0 0 1 0 0 1 0 0 0 1 |
| 13 | 0 0 0 0 0 0 1 1 1 0 1 1 0 0 1 0 0 0 1 1 1 0 0 0 0 0 0 1 1 0 1 0 |
| 14 | 0 1 0 1 1 0 0 0 0 0 1 1 0 1 1 1 1 1 0 0 0 1 0 1 1 0 0 1 1 0 1 0 |
| 15 | 0 1 1 0 1 1 0 0 1 1 0 0 1 0 1 1 1 1 0 1 1 0 0 1 1 1 1 0 1 1 1 0 |

If the chip sequences shown in Table 7 are denoted as M1, M2, ..., M16 in sequence, Hamming distances between the chip sequences are shown in Table 8.

**Table 8**

| Hamming distance | M1 | M2 | M3 | M4 | M5 | M6 | M7 | M8 | M9 | M10 | M11 | M12 | M13 | M14 | M15 | M16 |
|---|---|---|---|---|---|---|---|---|---|---|---|---|---|---|---|---|
| M1 | 0 | 16 | 20 | 17 | 20 | 16 | 20 | 20 | 17 | 17 | 17 | 17 | 16 | 17 | 17 | 17 |
| M2 | 16 | 0 | 16 | 17 | 16 | 20 | 16 | 16 | 17 | 17 | 17 | 17 | 16 | 17 | 17 | 17 |
| M3 | 20 | 16 | 0 | 17 | 16 | 16 | 16 | 16 | 17 | 17 | 17 | 17 | 16 | 17 | 17 | 17 |
| M4 | 17 | 17 | 17 | 0 | 17 | 17 | 17 | 17 | 16 | 16 | 16 | 16 | 17 | 20 | 16 | 16 |
| M5 | 20 | 16 | 16 | 17 | 0 | 16 | 16 | 16 | 17 | 17 | 17 | 17 | 16 | 17 | 17 | 17 |
| M6 | 16 | 20 | 16 | 17 | 16 | 0 | 16 | 16 | 17 | 17 | 17 | 17 | 20 | 17 | 17 | 17 |
| M7 | 20 | 16 | 16 | 17 | 16 | 16 | 0 | 16 | 17 | 17 | 17 | 17 | 16 | 17 | 17 | 17 |
| M8 | 20 | 16 | 16 | 17 | 16 | 16 | 16 | 0 | 17 | 17 | 17 | 17 | 16 | 17 | 17 | 17 |
| M9 | 17 | 17 | 17 | 16 | 17 | 17 | 17 | 17 | 0 | 16 | 16 | 16 | 17 | 16 | 20 | 16 |
| M10 | 17 | 17 | 17 | 16 | 17 | 17 | 17 | 17 | 16 | 0 | 16 | 16 | 17 | 20 | 16 | 16 |
| M11 | 17 | 17 | 17 | 16 | 17 | 17 | 17 | 17 | 16 | 16 | 0 | 16 | 17 | 20 | 16 | 16 |
| M12 | 17 | 17 | 17 | 16 | 17 | 17 | 17 | 17 | 16 | 16 | 16 | 0 | 17 | 16 | 16 | 16 |
| M13 | 16 | 16 | 16 | 17 | 16 | 20 | 16 | 16 | 17 | 17 | 17 | 17 | 0 | 17 | 17 | 17 |
| M14 | 17 | 17 | 17 | 20 | 17 | 17 | 17 | 17 | 16 | 20 | 20 | 16 | 17 | 0 | 16 | 20 |
| M15 | 17 | 17 | 17 | 16 | 17 | 17 | 17 | 17 | 20 | 16 | 16 | 16 | 17 | 16 | 0 | 16 |
| M16 | 17 | 17 | 17 | 16 | 17 | 17 | 17 | 17 | 16 | 16 | 16 | 16 | 17 | 20 | 16 | 0 |

It can be learned from Table 8 that the minimum Hamming distance in this embodiment of this application is 16. Further, Hamming distances between different chip sequences are distributed from 16 to 20, to avoid an excessively large or excessively small Hamming distance between any two different chip sequences from affecting a Hamming distance between other chip sequences.

In another example, Table 9 is a mapping relationship provided in this embodiment of this application. Table 9 shows a mapping relationship in a case in which L=16 and a data symbol of every 4 information bits is mapped to a chip sequence whose length is 16 (or referred to as a sequence including 16 chips). A person skilled in the art may appropriately modify the mapping relationship shown in Table 9 to a mapping relationship between an information bit and a chip sequence. Whether the transmit end maps an information bit to a chip sequence or maps a data symbol to a chip sequence is not limited in embodiments of this application.

**Table 9**

| Data symbol | Chip sequence (chip values ($c_0 c_1 ... c_{14} c_{15}$)) |
|---|---|
| 0 | 1 0 1 1 0 1 1 0 1 1 0 0 0 1 0 0 |
| 1 | 0 0 1 0 1 1 0 1 1 0 1 1 0 0 0 1 |
| 2 | 0 1 0 0 1 0 1 1 0 1 1 0 1 1 0 0 |
| 3 | 0 0 0 1 0 0 1 0 1 1 0 1 1 0 1 1 |
| 4 | 1 1 0 0 0 1 0 0 1 0 1 1 0 1 1 0 |
| 5 | 1 0 1 1 0 0 0 1 0 0 1 0 1 1 0 1 |
| 6 | 0 1 1 0 1 1 0 0 0 1 0 0 1 0 1 1 |
| 7 | 1 1 0 1 1 0 1 1 0 0 0 1 0 0 1 0 |
| 8 | 1 1 1 0 0 0 1 1 1 0 0 1 0 0 0 1 |
| 9 | 0 1 1 1 1 0 0 0 1 1 1 0 0 1 0 0 |
| 10 | 0 0 0 1 1 1 1 0 0 0 1 1 1 0 0 1 |
| 11 | 0 1 0 0 0 1 1 1 1 0 0 0 1 1 1 0 |
| 12 | 1 0 0 1 0 0 0 1 1 1 1 0 0 0 1 1 |
| 13 | 1 1 1 0 0 1 0 0 0 1 1 1 1 0 0 0 |
| 14 | 0 0 1 1 1 0 0 1 0 0 0 1 1 1 1 0 |
| 15 | 1 0 0 0 1 1 1 0 0 1 0 0 0 1 1 1 |

In another example, Table 10 is a mapping relationship provided in this embodiment of this application. A person skilled in the art may appropriately modify the mapping relationship shown in Table 10 to a mapping relationship between an information bit and a chip sequence. Whether the transmit end maps an information bit to a chip sequence or maps a data symbol to a chip sequence is not limited in embodiments of this application.

**Table 10**

| Data symbol | Chip sequence (chip values ($c_0 c_1 ... c_6 c_7$)) |
|---|---|
| 0 | 1 1 0 1 1 0 0 0 |
| 1 | 1 0 0 0 0 0 1 0 |
| 2 | 1 0 1 1 1 1 1 0 |
| 3 | 1 1 1 0 0 1 0 0 |
| 4 | 1 0 1 1 0 0 0 1 |
| 5 | 1 1 1 0 1 0 1 1 |
| 6 | 1 1 0 1 0 1 1 1 |
| 7 | 1 0 0 0 1 1 0 1 |
| 8 | 1 1 0 1 1 0 0 0 |
| 9 | 1 0 0 0 0 0 1 0 |

(continued)

| Data symbol | Chip sequence (chip values ($c_0 c_1 ... c_6 c_7$)) |
| --- | --- |
| 10 | 1 0 1 1 1 1 1 0 |
| 11 | 1 1 1 0 0 1 0 0 |
| 12 | 1 0 1 1 0 0 0 1 |
| 13 | 1 1 1 0 1 0 1 1 |
| 14 | 1 1 0 1 0 1 1 1 |
| 15 | 1 0 0 0 1 1 0 1 |

It may be understood that Table 1 to Table 10 are merely examples. For another mapping relationship or Hamming distance, refer to the following descriptions. Details are not described herein.

302: The transmit end sends the PPDU, and correspondingly, the receive end receives the PPDU.

303: The receive end processes the PPDU based on the mapping relationship between a data symbol and a chip sequence.

For example, that the receive end processes the PPDU includes: A first sequence in the PPDU is obtained, where a length of the first sequence is L. In other words, the length of the first sequence obtained by the receive end is the same as the length of the chip sequence shown above. Then, a first chip sequence corresponding to the first sequence is determined based on N chip sequences included in the mapping relationship between a data symbol and a chip sequence (for example, the mapping relationship in Table 1, Table 3, Table 5, Table 6, Table 7, Table 9, or Table 10), where the first chip sequence is one of the N chip sequences, and N is a positive integer. Further, a data symbol corresponding to the first chip sequence is determined based on the mapping relationship between a data symbol and a chip sequence, and an information bit corresponding to the first chip sequence is determined based on the data symbol corresponding to the first chip sequence. Certainly, after determining the first chip sequence, the receive end may alternatively determine, based on the mapping relationship between an information bit and a chip sequence (adaptively refer to Table 1, Table 3, Table 5, Table 6, Table 7, Table 9, or Table 10), the information bit corresponding to the first chip sequence. It may be understood that, for the mapping relationship shown in Table 1, Table 3, Table 5, Table 6, Table 7, Table 9, or Table 10, there may be other mapping relationships based on the following five implementations. The mapping relationships are not enumerated one by one in embodiments of this application. However, the mapping relationship shown in Table 1, Table 3, Table 5, Table 6, Table 7, Table 9, or Table 10 should not be construed as a limitation on embodiments of this application. It may be understood that the first sequence shown above is merely an example, and a manner of processing another sequence in the PPDU by the receive end is the same as the manner of processing the first sequence. Details are not described herein again.

For example, that the receive end processes the PPDU may alternatively include: The receive end demodulates a sequence received by the receive end. For example, when the transmit end performs modulation based on O-QPSK, the receive end may perform demodulation based on O-QPSK. For another example, when the transmit end performs modulation based on BPSK, the receive end may perform demodulation based on BPSK. For another example, when the transmit end performs modulation based on QPSK, the receive end may perform demodulation based on QPSK. Another manner in which the receive end processes the PPDU is not limited in embodiments of this application.

In this embodiment of this application, the minimum Hamming distance in the mapping relationship is increased, so that a probability that the receive end incorrectly determines a data symbol can be effectively reduced, to reduce a probability that the receive end incorrectly determines an information bit, effectively ensure reliability of communication between two communication parties, and improve system performance.

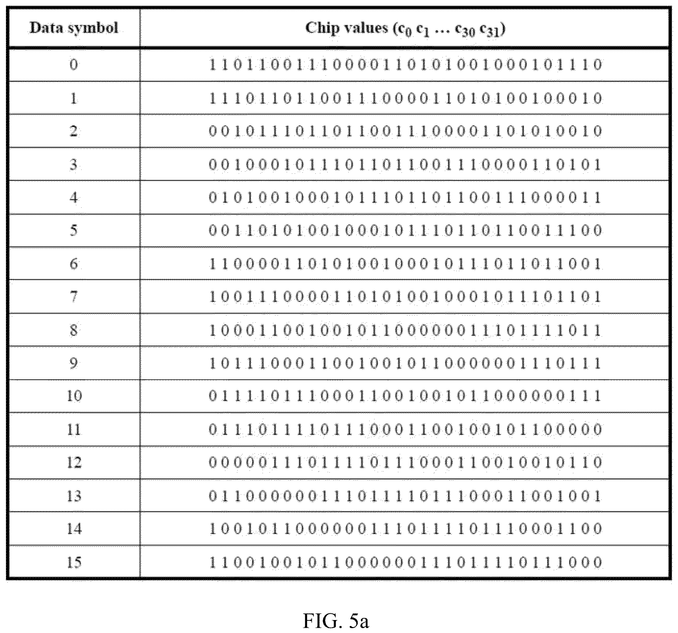

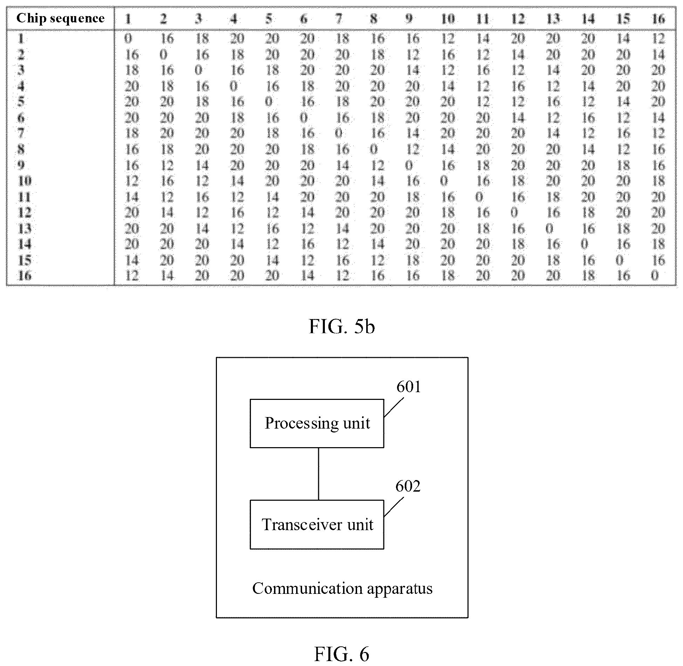

In comparison with a mapping relationship shown in FIG. 5a, the minimum Hamming distance in the mapping relationship provided in this embodiment of this application is greater than a minimum Hamming distance shown in FIG. 5a. Hamming distances between different chip sequences in the mapping relationship shown in FIG. 5a may be shown in FIG. 5b, where the minimum Hamming distance is 12. In the mapping relationship shown in FIG. 5a, Hamming distances between different chip sequences are from 12 to 20, and an autocorrelation feature between different chip sequences is ensured by sacrificing the Hamming distance. Consequently, a bit error rate at the receive end is high. However, according to the mapping relationship provided in this embodiment of this application, the minimum Hamming distance is effectively increased while an autocorrelation feature between different chip sequences is ensured, so that a probability that the receive end incorrectly determines an information bit is effectively reduced, a bit error rate at the receive end is reduced, reliability of communication between two communication parties is ensured, and system performance is improved.

The following describes in detail the mapping relationship provided in this embodiment of this application.

It should be noted that the following design processes of the chip sequences are merely examples. Optionally, the chip sequences may be predefined in a standard, or may be preset sequences or the like. In other words, the chip sequences shown in this embodiment of this application are not necessarily implemented by using the following steps (for example, Formula (1) to Formula (6)). For example, for the mapping relationship between a chip sequence and an information bit, or the mapping relationship between a chip sequence and a data symbol, refer to Table 1, Table 3, Table 5, Table 6, Table 7, Table 9, Table 10, or the like. For example, in actual application, two communication parties may store, for interaction, the mapping relationship between an information bit and a chip sequence or the mapping relationship between a data symbol and a chip sequence. The following manner of determining the chip sequence may not exist. Instead, the method shown in FIG. 3 is executed by storing the mapping relationship between an information bit and a chip sequence or the mapping relationship between a data symbol and a chip sequence. Therefore, any method in which a PPDU can be generated based on the mapping relationship between an information bit and a chip sequence or the mapping relationship between a data symbol and a chip sequence shown in this embodiment of this application, and a minimum Hamming distance between chip sequences is greater than or equal to L/2 shall fall within the protection scope of embodiments of this application.

Implementation 1

It is assumed that $\vec{s}$ = $[s_0,s_1,s_2,s_3,s_4,s_5,s_6,s_7]$ is a sequence whose length is 8, and a periodic autocorrelation function of each element $s_i$ = 1/ -1 in the sequence is defined as:

$$R_s(\tau) = \sum_{i=0}^{7} s_i s_{(i+\tau)_8} \quad (1)$$

A value of $i$ is 0 to 7, a value of $\tau$ is related to the length of the sequence, and $(i + \tau)_8$ = mod(i + $\tau$,8), namely, a remainder obtained by dividing $i + \tau$ by 8. In this case, $(8-R_s(\tau))/2$ is equal to a Hamming distance between the sequence $\vec{s}$ and a sequence obtained by cyclically shifting $\vec{s}$ by $\tau$. Based on a relationship between a Hamming distance and an autocorrelation function, it can be learned that a smaller $R_s(\tau)$ indicates a larger Hamming distance. A case in which the Hamming distance is 0 is excluded. When $\tau$ is set to different values, a Hamming distance between cyclic sequences has the following 14 cases, as shown in Table 11.

**Table 11**

| Hamming distance | $\tau$=1 | $\tau$=2 | $\tau$=3 | $\tau$=4 | $\tau$=5 | $\tau$=6 | $\tau$=7 |
|---|---|---|---|---|---|---|---|
| Case 1 | 2 | 2 | 2 | 2 | 2 | 2 | 2 |
| Case 2 | 2 | 4 | 4 | 4 | 4 | 4 | 2 |
| Case 3 | 2 | 4 | 6 | 6 | 6 | 4 | 2 |
| Case 4 | 2 | 4 | 6 | 8 | 6 | 4 | 2 |
| Case 5 | 4 | 2 | 4 | 4 | 4 | 2 | 4 |
| Case 6 | 4 | 4 | 2 | 4 | 2 | 4 | 4 |
| Case 7 | 4 | 4 | 4 | 6 | 4 | 4 | 4 |
| Case 8 | 4 | 4 | 6 | 4 | 6 | 4 | 4 |
| Case 9 | 4 | 6 | 4 | 2 | 4 | 6 | 4 |
| Case 10 | 4 | 6 | 4 | 4 | 4 | 6 | 4 |
| Case 11 | 6 | 2 | 6 | 2 | 6 | 2 | 6 |
| Case 12 | 6 | 4 | 2 | 6 | 2 | 4 | 6 |
| Case 13 | 6 | 4 | 2 | 8 | 2 | 4 | 6 |
| Case 14 | 6 | 4 | 4 | 4 | 4 | 4 | 6 |

It is assumed that four sequences whose length is 8 and that include 1 and -1 are respectively $\vec{a}$ = $[a_0,a_1,a_2,a_3,a_4,a_5,a_6,a_7]$, $\vec{b}$ = $[b_0,b_1,b_2,b_3,b_4,b_5,b_6,b_7]$, $\vec{c}$ = $[c_0,c_1,c_2,c_3,c_4,c_5,c_6,c_7]$, and $\vec{d}$ = $[d_0,d_1,d_2,d_3,d_4,d_5,d_6,d_7]$. The four sequences are evenly spliced together to form a sequence $\vec{v}$ = $[a_0,b_0,c_0,d_0,a_1,b_1,c_1,d_1,\cdots,a_7,b_7,c_7,d_7]$ whose length is 32. The sequence $\vec{v}$ is cyclically shifted by 0 bits, 4 bits, 8 bits, 12 bits, 16 bits, 20 bits, 24 bits, and 28 bits, to obtain eight sequences whose length is 32, and then values of even bits (or odd bits) of the sequences obtained through cyclical shifting are negated, to obtain other eight sequences. Herein, $\vec{v}_i$ is used to represent the 16 sequences, and i=0, 1, 2, ..., or 15. Periodic autocorrelation functions of sequences $\vec{a}, \vec{b}, \vec{c}$, and $\vec{d}$ are respectively denoted as $R_a(\tau), R_b(\tau), R_c(\tau)$, and $R_d(\tau)$. Therefore, a Hamming distance between sequences $\vec{v}_i$ and $\vec{v}_j$ meets Formula (2):

$$d(\vec{v}_i, \vec{v}_j) = \begin{cases} (32 - R_a(\tau) - R_b(\tau) - R_c(\tau) - R_d(\tau))/2 \\ 16 \\ (32 - R_a(\tau) + R_b(\tau) - R_c(\tau) + R_d(\tau))/2 \end{cases} \quad (2)$$

It may be understood that a condition of a first formula in Formula (2) is that i is less than or equal to 7 and j is less than or equal to 7, or i is greater than or equal to 8 and j is greater than or equal to 8. A condition of a second formula in Formula (2) is |i-j|=8. A condition of a third formula in Formula (2) is that i is greater than or equal to 8 and j is less than or equal to 7, or i is less than or equal to 7 and j is greater than or equal to 8.

Herein, $\tau = |i - j|$. Therefore, Hamming distances between different sequences are shown in the following Table 12 (i<j). It may be understood that because a Hamming distance in a case in which i is less than j is symmetric to a Hamming distance in a case in which i is greater than j, Table 12 merely shows examples of the Hamming distance in the case in which i is less than j.

**Table 12**

| d | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| 0 | A(1) | A(2) | A(3) | A(4) | A(5) | A(6) | A(7) | 16 | B(1) | B(2) | B(3) | B(4) | B(5) | B(6) | B(7) |
| 1 | | A(1) | A(2) | A(3) | A(4) | A(5) | A(6) | A(7) | 16 | B(1) | B(2) | B(3) | B(4) | B(5) | B(6) |
| 2 | | | A(1) | A(2) | A(3) | A(4) | A(5) | A(6) | A(7) | 16 | B(1) | B(2) | B(3) | B(4) | B(5) |
| 3 | | | | A(1) | A(2) | A(3) | A(4) | A(5) | A(6) | A(7) | 16 | B(1) | B(2) | B(3) | B(4) |
| 4 | | | | | A(1) | A(2) | A(3) | A(4) | A(5) | A(6) | A(7) | 16 | B(1) | B(2) | B(3) |
| 5 | | | | | | A(1) | A(2) | A(3) | A(4) | A(5) | A(6) | A(7) | 16 | B(1) | B(2) |
| 6 | | | | | | | A(1) | A(2) | A(3) | A(4) | A(5) | A(6) | A(7) | 16 | B(1) |
| 7 | | | | | | | | A(1) | A(2) | A(3) | A(4) | A(5) | A(6) | A(7) | 16 |
| 8 | | | | | | | | | A(1) | A(2) | A(3) | A(4) | A(5) | A(6) | A(7) |
| 9 | | | | | | | | | | A(1) | A(2) | A(3) | A(4) | A(5) | A(6) |
| 10 | | | | | | | | | | | A(1) | A(2) | A(3) | A(4) | A(5) |
| 11 | | | | | | | | | | | | A(1) | A(2) | A(3) | A(4) |
| 12 | | | | | | | | | | | | | A(1) | A(2) | A(3) |
| d | 1 | 2 | 3 | 4 | 5 | 6 | 7 | 8 | 9 | 10 | 11 | 12 | 13 | 14 | 15 |
| 13 | | | | | | | | | | | | | | A(1) | A(2) |
| 14 | | | | | | | | | | | | | | | A(1) |

In Table 12, the Hamming distance may meet Formula (3) and Formula (4):

$$A(\tau) = (32 - R_a(\tau) - R_b(\tau) - R_c(\tau) - R_d(\tau))/2 \quad (3)$$

$$B(\tau) = (32 - R_a(\tau) + R_b(\tau) - R_c(\tau) + R_d(\tau))/2 \quad (4)$$

Therefore, in a possible implementation, to make the Hamming distances between different sequences as large as possible, $R_b(\tau) + R_d(\tau) = 0$, for $\tau \neq 0$, and $R_a(\tau) + R_c(\tau)$ is as small as possible. Therefore, based on distribution of Hamming distances between cyclic sequences in Table 11, a Hamming distance between the sequence $\vec{b}$ and a cyclic sequence of the sequence $\vec{b}$ and a Hamming distance between the sequence a and a cyclic sequence of the sequence $\vec{d}$ are cases in which a sum of Hamming distances is equal to 8 in Table 11, for example, the case 2 and the case 14, the case 5 and the case 10, or the case 6 and the case 8. Therefore, the sequences $\vec{b}$ and $\vec{d}$ may be obtained according to any one of the following formulas:

$$[1\ 1\ -1\ -1\ -1\ -1\ -1\ -1]\ \text{and}\ [1\ 1\ -1\ 1\ -1\ 1\ -1\ -1]\ (5)$$

$$[1\ -1\ 1\ -1\ -1\ -1\ -1\ -1]\ \text{and}\ [1\ 1\ -1\ 1\ 1\ -1\ -1\ -1]\ (6)$$

$$[1\ -1\ -1\ 1\ -1\ -1\ -1\ -1]\ \text{and}\ [1\ 1\ 1\ -1\ 1\ -1\ -1\ -1]\ (7)$$

The sequences $\vec{b}$ and $\vec{d}$ may be respectively shown in any one of Formula (5) to Formula (7), or may be obtained by performing cyclical shifting, a negation operation, or a reversal order operation according to any one of Formula (5) to Formula (7). Because the cyclical shifting, the negation operation, or the reversal order operation does not affect autocorrelation of the sequences, and this embodiment of this application focuses on a sum of the autocorrelation of the two sequences, cyclical shifting, negation, and exchange performed on any one of the sequences shown in Formula (5) to Formula (7) do not affect the Hamming distance.

It may be understood that, whether the sequences $\vec{b}$ and $\vec{d}$ are Formula (5), Formula (6), or Formula (7) is not limited in embodiments of this application.

Based on the distribution of the Hamming distances between the cyclic sequences in Table 11, a Hamming distance between the sequence $\vec{a}$ and a cyclic sequence of the sequence $\vec{a}$ and a Hamming distance between the sequence $\vec{c}$ and a cyclic sequence of the sequence $\vec{c}$ are cases in which a Hamming distance is large in Table 11, for example, the case 8, the case 10, or the case 14. Therefore, the sequences $\vec{a}$ and $\vec{c}$ may be obtained based on any one of the sequences in the following Formula (8). For example, the sequences $\vec{a}$ and $\vec{c}$ may be any two different sequences selected from the three sequences shown in Formula (8), or may be sequences obtained by separately performing cyclical shifting, a negation operation, or a reversal order operation on two sequences in the three sequences shown in Formula (8).

$$\begin{aligned} &[\ 1\quad 1\quad -1\quad 1\quad -1\quad 1\quad -1\quad -1],\\ &[\ 1\quad 1\quad -1\quad 1\quad 1\quad -1\quad -1\quad -1],\quad (8)\\ &[\ 1\quad 1\quad 1\quad -1\quad 1\quad -1\quad -1\quad -1] \end{aligned}$$

After the sequences $\vec{b}$ and $\vec{d}$ and the sequences $\vec{a}$ and $\vec{c}$ are obtained according to Formula (5) to Formula (8), the sequence $\vec{v}$ may be obtained. Then, the sequence $\vec{v}$, is cyclically shifted by 0 bits, 4 bits, 8 bits, 12 bits, 16 bits, 20 bits, 24 bits, and 28 bits, to obtain eight sequences whose length is 32, and then values of even bits (or odd bits) of the sequences obtained through cyclical shifting are negated, to obtain other eight sequences. Therefore, a Hamming distance between any two different sequences in the formed 16 sequences $\vec{v}_i$ is 16, 18, or 20. In other words, a minimum Hamming distance is 16.

For example, when $\vec{a}$=[-1 1 1 -1 1 1 -1 -1] (a 1st sequence in Formula (8) is cyclically shifted by 1 bit to the right), $\vec{b}$ = [ -1 -1 -1 -1 -1 -1 1 1] (a 1st sequence in Formula (5) is cyclically shifted by 2 bits to the left), $\vec{c}$=[ -1 1 1 1 -1 -1 -1 1] (a 3rd sequence in Formula (8) is cyclically shifted by 4 bits to the right, and a reversal order operation is performed), and $\vec{d}$ = [-1 1 1 -1 1 -1 1 -1] (a 2nd sequence in Formula (5) is cyclically shifted by 1 bit to the right), the 16 sequences $\vec{v}_i$ form the following matrix $M_1$.

$$M_1=[-1\ -1\ -1\ -1\ 1\ -1\ 1\ 1\ 1\ -1\ 1\ 1\ -1\ -1\ 1\ -1\ 1\ -1\ -1\ 1\ 1\ -1\ -1\ -1\ -1\ 1\ -1\ 1\ -1\ 1\ 1\ -1$$

$$-1\ 1\ 1\ -1\ -1\ -1\ -1\ -1\ 1\ -1\ 1\ 1\ 1\ -1\ 1\ 1\ -1\ -1\ 1\ 1\ -1\ 1\ 1\ -1\ -1\ 1\ 1\ 1\ -1\ -1\ -1\ -1\ 1\ -1$$

$$-1\ 1\ -1\ 1\ -1\ 1\ 1\ -1\ -1\ -1\ -1\ -1\ 1\ 1\ -1\ 1\ 1\ 1\ -1\ 1\ 1\ 1\ -1\ -1\ 1\ 1\ -1\ 1\ -1\ -1\ 1\ 1\ 1\ -1\ -1\ -1$$

$$1\ -1\ -1\ -1\ -1\ 1\ -1\ 1\ -1\ 1\ 1\ -1\ -1\ -1\ -1\ -1\ 1\ -1\ 1\ 1\ 1\ -1\ 1\ 1\ -1\ -1\ 1\ -1\ 1\ -1\ -1$$

$$1\ -1\ -1\ 1\ 1\ -1\ -1\ -1\ -1\ 1\ -1\ 1\ 1\ -1\ 1\ 1\ -1\ -1\ -1\ -1\ -1\ 1\ -1\ 1\ 1\ 1\ -1\ 1\ 1\ -1\ -1\ 1\ 1\ -1$$

$$-1\ -1\ 1\ -1\ 1\ -1\ -1\ 1\ 1\ -1\ -1\ -1\ -1\ 1\ -1\ 1\ 1\ -1\ 1\ 1\ -1\ -1\ -1\ -1\ -1\ 1\ 1\ -1\ 1\ 1\ 1\ -1\ 1$$

$$1\ -1\ 1\ 1\ -1\ -1\ 1\ -1\ 1\ -1\ -1\ 1\ 1\ -1\ -1\ -1\ -1\ 1\ -1\ 1\ 1\ -1\ 1\ 1\ -1\ -1\ -1\ -1\ -1\ 1\ 1\ -1\ 1$$

$$1\ -1\ 1\ 1\ 1\ -1\ 1\ 1\ -1\ -1\ 1\ 1\ -1\ 1\ 1\ -1\ -1\ -1\ -1\ 1\ 1\ -1\ 1\ 1\ -1\ 1\ 1\ -1\ -1\ -1\ -1\ -1\ 1$$

$$-1\ 1\ -1\ 1\ 1\ 1\ 1\ -1\ 1\ 1\ 1\ -1\ -1\ 1\ 1\ 1\ 1\ 1\ -1\ -1\ 1\ 1\ -1\ 1\ 1\ -1\ -1\ -1\ -1\ -1\ -1\ -1\ 1\ 1$$

$$-1\ -1\ 1\ 1\ -1\ 1\ -1\ 1\ 1\ 1\ 1\ -1\ 1\ 1\ 1\ -1\ -1\ 1\ 1\ 1\ 1\ 1\ -1\ -1\ 1\ 1\ 1\ -1\ 1\ 1\ -1\ -1\ -1\ -1$$

$$-1\ -1\ -1\ -1\ -1\ -1\ 1\ 1\ -1\ 1\ -1\ 1\ 1\ 1\ 1\ -1\ 1\ 1\ 1\ -1\ -1\ 1\ 1\ 1\ 1\ 1\ -1\ -1\ 1\ 1\ -1\ 1$$

$$1\ 1\ -1\ 1\ -1\ -1\ -1\ -1\ -1\ -1\ 1\ 1\ -1\ 1\ -1\ 1\ 1\ 1\ 1\ -1\ 1\ 1\ 1\ -1\ -1\ 1\ 1\ 1\ 1\ 1\ -1\ -1$$

$$1\ 1\ -1\ -1\ 1\ 1\ -1\ 1\ -1\ -1\ -1\ -1\ -1\ 1\ 1\ 1\ -1\ 1\ 1\ -1\ 1\ 1\ 1\ 1\ -1\ 1\ 1\ 1\ -1\ -1\ 1\ 1\ 1$$

$$-1\ 1\ 1\ 1\ 1\ 1\ -1\ -1\ 1\ 1\ -1\ 1\ 1\ -1\ -1\ -1\ -1\ -1\ -1\ 1\ 1\ -1\ 1\ 1\ -1\ 1\ 1\ 1\ 1\ -1\ 1\ 1\ 1\ -1$$

$$1\ 1\ 1\ -1\ -1\ 1\ 1\ 1\ 1\ 1\ -1\ -1\ 1\ 1\ -1\ 1\ 1\ -1\ -1\ -1\ -1\ -1\ -1\ 1\ 1\ -1\ 1\ 1\ -1\ 1\ 1\ 1\ 1\ -1$$

$$1\ 1\ 1\ -1\ 1\ 1\ 1\ -1\ -1\ 1\ 1\ 1\ 1\ 1\ -1\ -1\ 1\ 1\ -1\ 1\ -1\ -1\ -1\ -1\ -1\ -1\ 1\ 1\ -1\ 1\ -1\ 1]\ (9)$$

In the matrix $M_1$ or the matrix ($-M_1$) (that is, the matrix $M_1$ is negated as a whole), -1 is replaced with 1, and 1 is replaced with 0, so that the matrix may be used as a mapping relationship between 16 information bits whose length is 4 and a chip sequence, or may be used as a mapping relationship between 16 data symbols and a chip sequence whose length is 32, as shown in Table 1. For Hamming distances between different chip sequences, refer to Table 2. Details are not described herein again. Certainly, -1 in the matrix may alternatively be replaced with 0. This is not limited in embodiments of this application. It may be understood that, if each element in the matrix $M_1$ is denoted as m, and each element in the chip sequence whose length is 32 is denoted as m', the following operation may alternatively be performed on each element in the matrix $M_1$ to obtain 16 chip sequences whose length is 32: m'=(m+1)/2 or m'=(1-m)/2. It may be understood that the descriptions of replacing are also applicable to the following descriptions.

It should be noted that, for the matrix $M_1$ shown in Formula (9), each row of the matrix $M_1$ may correspond to one data symbol, and there are 16 rows in total. Therefore, the matrix $M_1$ corresponds to 16 data symbols. Therefore, after -1 in the matrix $M_1$ is replaced with 0, and 1 is replaced with 0, the mapping relationship shown in Table 1 may be obtained. Therefore, a quantity of sequences (for example, the foregoing four sequences $\vec{a}$, $\vec{b}$, $\vec{c}$, and $\vec{d}$) (or a length of a sequence) shown in this embodiment of this application may be related to a quantity of different data symbols and a length of a chip sequence. All mapping relationships obtained according to the foregoing rules fall within the protection scope of embodiments of this application. This description is also applicable to the following descriptions.

For another example, when $\vec{a}$=[-1 -1 -1 1 1 -1 1 1] (the 1st sequence in Formula (8) is reversed), $\vec{b}$ = [-1 1 1 -1 1 1 -1 -1] (a 2nd sequence in Formula (6) is cyclically shifted by 1 bit to the left), $\vec{c}$=[ -1 -1 -1 1 1 1 -1 1] (the 3rd sequence in Formula (8) is cyclically shifted by 3 bits to the right), and $\vec{d}$ = [-1 -1 -1 -1 1 -1 1 -1] (a 1st sequence in Formula (6) is cyclically shifted by 4 bits to the right), the 16 sequences $\vec{v}_i$ form the following matrix $M_2$.

$$M_2=[-1 \ -1 \ -1 \ -1 \ -1 \ 1 \ -1 \ -1 \ 1 \ 1 \ -1 \ -1 \ -1 \ -1 \ 1 \ -1 \ 1 \ 1 \ 1 \ 1 \ -1 \ 1 \ 1 \ -1 \ 1 \ -1 \ -1 \ 1 \ 1 \ -1 \ 1 \ -1$$

$$1 \ -1 \ 1 \ -1 \ -1 \ -1 \ -1 \ -1 \ -1 \ 1 \ 1 \ -1 \ -1 \ 1 \ 1 \ -1 \ -1 \ -1 \ -1 \ 1 \ -1 \ 1 \ 1 \ 1 \ 1 \ -1 \ 1 \ 1 \ -1 \ 1 \ -1 \ -1$$

$$1 \ -1 \ -1 \ 1 \ 1 \ -1 \ 1 \ -1 \ -1 \ -1 \ -1 \ -1 \ -1 \ 1 \ 1 \ -1 \ -1 \ 1 \ 1 \ -1 \ -1 \ -1 \ -1 \ 1 \ -1 \ 1 \ 1 \ 1 \ 1 \ -1 \ 1 \ 1 \ -1$$

$$-1 \ 1 \ 1 \ -1 \ 1 \ -1 \ -1 \ 1 \ 1 \ -1 \ 1 \ -1 \ -1 \ -1 \ -1 \ -1 \ -1 \ 1 \ -1 \ -1 \ 1 \ 1 \ -1 \ -1 \ -1 \ -1 \ 1 \ -1 \ 1 \ 1 \ 1 \ 1$$

$$1 \ 1 \ 1 \ 1 \ -1 \ 1 \ 1 \ -1 \ 1 \ -1 \ -1 \ 1 \ 1 \ -1 \ 1 \ -1 \ -1 \ -1 \ -1 \ -1 \ -1 \ -1 \ 1 \ -1 \ -1 \ 1 \ 1 \ -1 \ -1 \ -1 \ -1 \ 1 \ -1$$

$$-1 \ -1 \ 1 \ -1 \ 1 \ 1 \ 1 \ 1 \ -1 \ 1 \ 1 \ -1 \ 1 \ -1 \ -1 \ 1 \ 1 \ 1 \ -1 \ 1 \ -1 \ -1 \ -1 \ -1 \ -1 \ -1 \ 1 \ 1 \ -1 \ -1 \ 1 \ 1 \ -1 \ -1$$

$$1 \ 1 \ -1 \ -1 \ -1 \ -1 \ 1 \ -1 \ 1 \ 1 \ 1 \ 1 \ -1 \ 1 \ 1 \ -1 \ 1 \ -1 \ -1 \ 1 \ 1 \ -1 \ 1 \ -1 \ -1 \ -1 \ -1 \ -1 \ -1 \ 1 \ -1 \ -1$$

$$-1 \ 1 \ -1 \ -1 \ 1 \ 1 \ -1 \ -1 \ -1 \ -1 \ 1 \ -1 \ 1 \ 1 \ 1 \ 1 \ -1 \ 1 \ 1 \ -1 \ 1 \ -1 \ -1 \ 1 \ 1 \ -1 \ 1 \ -1 \ -1 \ -1 \ -1 \ -1$$

$$-1 \ 1 \ -1 \ 1 \ -1 \ -1 \ -1 \ 1 \ 1 \ -1 \ -1 \ 1 \ 1 \ -1 \ 1 \ 1 \ 1 \ 1 \ -1 \ 1 \ 1 \ -1 \ -1 \ -1 \ -1 \ 1 \ 1 \ 1 \ 1 \ -1 \ -1 \ 1 \ 1 \ 1 \ 1$$

$$1 \ 1 \ 1 \ 1 \ -1 \ 1 \ 1 \ -1 \ 1 \ -1 \ -1 \ -1 \ 1 \ 1 \ -1 \ -1 \ 1 \ 1 \ -1 \ 1 \ 1 \ 1 \ 1 \ -1 \ 1 \ 1 \ -1 \ -1 \ -1 \ 1 \ 1 \ 1 \ 1 \ -1 \ -1$$

$$1 \ 1 \ -1 \ -1 \ 1 \ 1 \ 1 \ 1 \ -1 \ 1 \ 1 \ -1 \ 1 \ -1 \ -1 \ -1 \ 1 \ 1 \ 1 \ -1 \ -1 \ 1 \ -1 \ 1 \ 1 \ 1 \ 1 \ -1 \ 1 \ 1 \ -1 \ -1 \ -1 \ 1 \ 1$$

$$-1 \ -1 \ 1 \ 1 \ 1 \ 1 \ -1 \ -1 \ 1 \ 1 \ 1 \ 1 \ -1 \ 1 \ -1 \ 1 \ 1 \ -1 \ -1 \ -1 \ 1 \ 1 \ -1 \ -1 \ 1 \ 1 \ -1 \ 1 \ 1 \ 1 \ 1 \ -1 \ 1 \ -1$$

$$1 \ -1 \ 1 \ -1 \ -1 \ -1 \ 1 \ 1 \ 1 \ 1 \ -1 \ -1 \ 1 \ 1 \ 1 \ 1 \ 1 \ -1 \ 1 \ -1 \ 1 \ 1 \ -1 \ -1 \ -1 \ 1 \ 1 \ -1 \ -1 \ 1 \ 1 \ -1 \ 1 \ 1 \ 1$$

$$-1 \ 1 \ 1 \ 1 \ 1 \ -1 \ 1 \ -1 \ -1 \ -1 \ 1 \ 1 \ 1 \ 1 \ -1 \ -1 \ 1 \ 1 \ 1 \ 1 \ -1 \ 1 \ 1 \ -1 \ 1 \ 1 \ -1 \ -1 \ -1 \ 1 \ 1 \ -1 \ -1 \ 1$$

$$1 \ -1 \ -1 \ 1 \ 1 \ -1 \ 1 \ 1 \ 1 \ 1 \ -1 \ 1 \ 1 \ -1 \ -1 \ 1 \ 1 \ 1 \ 1 \ 1 \ -1 \ -1 \ 1 \ 1 \ 1 \ 1 \ 1 \ -1 \ 1 \ 1 \ -1 \ 1 \ 1 \ -1 \ -1 \ -1 \ 1$$

$$-1 \ -1 \ -1 \ 1 \ 1 \ -1 \ -1 \ 1 \ 1 \ -1 \ 1 \ 1 \ 1 \ 1 \ -1 \ 1 \ 1 \ -1 \ -1 \ -1 \ 1 \ 1 \ 1 \ 1 \ -1 \ -1 \ 1 \ 1 \ 1 \ 1 \ -1 \ 1 \ 1 \ -1 \ 1 \ 1] \ (10)$$

In the matrix $M_2$ or the matrix (-$M_2$) (that is, the matrix $M_2$ is negated as a whole), -1 is replaced with 1, and 1 is replaced with 0, so that the matrix may be used as a mapping relationship between 16 information bits whose length is 4 and a chip sequence, or may be used as a mapping relationship between 16 data symbols and a chip sequence whose length is 32, as shown in Table 3. For Hamming distances between different chip sequences, refer to Table 4. Details are not described herein again.

In the mapping relationship shown in this embodiment of this application, it can be learned from Table 2 and Table 4 that Hamming distances between different chip sequences include 16 and 18, so that a value obtained when the Hamming distances between the different chip sequences are added is the largest, to effectively reduce a bit error rate at the receive end.

In another possible implementation, $R_b(\tau) + R_d(\tau)$=0, for $\tau \neq 0$ , and $R_a(\tau) + R_c(\tau)$=0, for $\tau \neq 0$. In this case, a Hamming distance between any two sequences $\vec{v}_i$ and $\vec{v}_j$ is equal to 16, signals formed by performing O-QPSK modulation on a formed chip sequence are orthogonal to each other, and non-coherent reception (or referred to as non-coherent demodulation) may be supported. In this case, the sequences $\vec{b}$ and $\vec{d}$ may be any pair of the three pairs of sequences in Formulas (5), (6), and (7). In addition, the sequences $\vec{a}$ and $\vec{c}$ may also be any pair of the three pairs of sequences in Formulas (5), (6), and (7).

Because the cyclical shifting, the negation operation, and the reversal order operation do not affect autocorrelation of the sequences, when at least one of the following operations may be separately performed on the sequences $\vec{a}$ and $\vec{c}$: cyclical shifting, reversal, negation, or exchanging $\vec{a}$ and $\vec{c}$, the Hamming distance and orthogonality after the O-QPSK modulation are not affected. In addition, when at least one of the following operations is performed on the sequences $\vec{b}$ and $\vec{d}$: cyclical shifting, reversal, negation, or exchanging $\vec{b}$ and $\vec{d}$, the Hamming distance and orthogonality after the O-QPSK modulation are not affected either.

For example, when $\vec{a}$=[ -1 1 -1 1 -1 1 1 -1] (the 2nd sequence in Formula (5) is cyclically shifted by 1 bit to the right and then reversed), $\vec{b}$ = [ -1 -1 -1 -1 -1 -1 1 1] (the 1st sequence in Formula (6) is cyclically shifted by 1 bit to the right), $\vec{c}$=[-1 1 1 -1 -1 -1 -1 -1] (the 1st sequence in Formula (5) is cyclically shifted by 1 bit to the right), and $\vec{d}$ = [-1 1 1 -1 1 -1 1 -1] (the 2nd sequence in Formula (6) is cyclically shifted by 1 bit to the left), the 16 sequences $\vec{v}_i$ form the following matrix M₃.

$$M_3=[-1\ -1\ -1\ 1\ 1\ 1\ 1\ -1\ -1\ -1\ 1\ 1\ 1\ 1\ -1\ 1\ -1\ -1\ -1\ -1\ 1\ 1\ -1\ -1\ -1\ 1\ 1\ -1\ -1\ -1\ -1\ -1\ -1\ 1\ 1$$

$$-1\ -1\ -1\ 1\ -1\ -1\ -1\ 1\ 1\ 1\ 1\ -1\ -1\ -1\ 1\ 1\ 1\ 1\ -1\ 1\ -1\ -1\ -1\ -1\ 1\ -1\ -1\ -1\ 1\ -1\ -1\ -1$$

$$1\ -1\ -1\ -1\ -1\ -1\ -1\ 1\ -1\ -1\ -1\ 1\ 1\ 1\ 1\ -1\ -1\ -1\ 1\ 1\ 1\ 1\ -1\ 1\ -1\ -1\ -1\ -1\ 1\ -1\ -1$$

$$1\ -1\ -1\ -1\ 1\ -1\ -1\ -1\ -1\ -1\ -1\ 1\ -1\ -1\ -1\ 1\ 1\ 1\ 1\ -1\ -1\ -1\ 1\ 1\ 1\ 1\ -1\ 1\ -1\ -1\ -1$$

$$-1\ -1\ -1\ -1\ 1\ -1\ -1\ 1\ 1\ -1\ -1\ -1\ -1\ -1\ -1\ 1\ 1\ -1\ -1\ -1\ 1\ 1\ 1\ 1\ -1\ -1\ -1\ 1\ 1\ 1\ 1\ -1\ 1$$

$$1\ 1\ -1\ 1\ -1\ -1\ -1\ -1\ 1\ 1\ -1\ -1\ 1\ 1\ -1\ -1\ -1\ -1\ -1\ -1\ 1\ 1\ -1\ -1\ -1\ 1\ 1\ 1\ 1\ -1\ -1\ -1$$

1 1

−1 −1 1 1 1 1 −1 1 −1 −1 −1 −1 1 −1 −1 −1 1 1 −1 −1 −1 −1 −1 −1 1 −1 −1 −1 1 1 1 1

−1

1 1 1 −1 −1 −1 1 1 1 1 −1 1 −1 −1 −1 −1 1 −1 −1 −1 1 −1 −1 −1 −1 −1 −1 1 −1 −1 −

1 1

−1 1 −1 −1 1 1 −1 1 1 −1 1 1 −1 1 1 −1 −1 −1 −1 1 −1 1 1 1 −1 1 1 1 1 −1 1 1 −1 1 1 −1 1 −1 1

−1 1 −1 −1 −1 1 1 −1 −1 1 1 −1 1 1 1 −1 1 1 1 −1 1 1 −1 −1 −1 −1 −1 1 −1 1 1 1 1 −1 1 1 1 1 −1 1

1 1 −1 1 −1 1 −1 −1 −1 1 1 −1 −1 1 1 −1 1 1 1 −1 1 1 −1 1 −1 −1 −1 −1 −1 1 −1 1 1 1 1 −1 1

1 1 −1 1 1 1 −1 1 −1 1 1 −1 −1 −1 1 1 −1 −1 1 1 −1 1 1 1 −1 1 1 −1 1 −1 −1 −1 −1 1 1 −1 1

−1 1 −1 1 1 1 −1 1 1 1 1 −1 1 1 −1 1 1 −1 −1 −1 1 1 −1 −1 1 1 −1 1 1 1 −1 1 1 1 −1 1 −1 −1 −1

1 −1 −1 −1 −1 1 1 −1 1 1 1 1 −1 1 1 1 1 −1 1 1 −1 1 −1 −1 1 1 −1 −1 1 1 −1 1 1 −1 1 1 1 −1

−1 1 1 1 −1 1 1 −1 −1 −1 −1 −1 1 1 −1 1 1 1 1 −1 1 1 1 1 −1 1 1 −1 1 1 −1 1 1 −1 1 1 −1 1 1

1 −1 1 1 1 −1 1 1 1 −1 1 1 −1 −1 −1 −1 −1 1 −1 1 1 1 1 −1 1 1 1 1 −1 1 1 −1 1 1 −1 1 −1 −1 −1 1 1 −1 −1]

(11)

A Hamming distance between any two different sequences is 16.

In the matrix $M_3$ or the matrix (-$M_3$) (that is, the matrix $M_3$ is negated as a whole), -1 is replaced with 1, and 1 is replaced with 0, so that the matrix may be used as a mapping relationship between 16 information bits whose length is 4 and a chip sequence, or may be used as a mapping relationship between 16 data symbols and a chip sequence whose length is 32, as shown in Table 5.

It may be understood that the matrices shown in the implementation 1 are merely examples, and other mapping relationships may be further included based on the method shown above. Examples are enumerated herein one by one.

In the mapping relationship shown in this embodiment of this application, Hamming distances between different chip sequences are all 16. Therefore, the signals formed by performing O-QPSK modulation on the formed chip sequences are orthogonal to each other, and non-coherent demodulation at the receive end can be supported, thereby reducing demodulation complexity at the receive end.

Based on the mapping relationship shown in this embodiment of this application, when an autocorrelation feature between different chip sequences is ensured, the minimum Hamming distance can be effectively increased, the bit error rate at the receive end can be reduced, and system performance can be improved.

Implementation 2

In mathematics, a Hadamard matrix (Hadamard matrix) is a square matrix, each element is +1 or -1, rows are orthogonal to each other, and columns are also orthogonal to each other. An n*n-order Hadamard matrix $H$ meets $HH^T = nI_n$, and $I_n$ is an n*n-order unit matrix herein. Because all rows of the Hadamard matrix are orthogonal to each other, a Hamming distance between different rows is n/2.

Therefore, in a mapping matrix M of 16 rows and 32 columns including 16 chip sequences whose length is 32 in this embodiment of this application, odd columns may be formed by a 16*16 Hadamard matrix, and even columns may also be formed by a 16*16 Hadamard matrix. In addition, each row in the matrix forming the odd columns and each row in the matrix forming the even columns form a Gray complementary pair sequence. In this way, the following effects can be achieved: 1. A Hamming distance between any two different sequences is 16. 2. Different symbols obtained through O-QPSK modulation are orthogonal, and non-coherent demodulation may be supported. 3. Each data symbol has two fixed chip values whose positions are fixed, and the fixed chip values can be used by the receive end to perform frequency offset estimation and compensation, to improve an anti-frequency offset capability of the system. 4. A modulated symbol has a low peak to average power ratio (peak to average power ratio, PAPR), and a PAPR of the Gray sequence is not greater than 3 dB.

For example, an element in an $r^{th}$ row and a $c^{th}$ column of the Hadamard matrix may meet Formula (12):

$$\mathrm{H}(r,c)=\left(-1\right)^{\sum\limits_{i=1}^{4}\left(\text{bitget}(r\text{-}1,i)+\text{bitget}(c\text{-}1,i+1)+\text{bitget}(K,i)\right)\times\text{bitget}(c\text{-}1,i)}$$

(12)

Herein, bitget(x,n) is equal to a value of an $n^{th}$ bit represented by x in a binary manner, K is a parameter in a range of 0 to 15, and different Ks may be used to generate different Hadamard matrices. Therefore, two different Ks may be selected to form an even column and an odd column in the mapping matrix.

For example, when K=1 and K=14, the following matrix $M_4$ may be formed.

$M_4$=[−1 −1 1 1 −1 1 −1 1 −1 1 1 −1 1 1 1 1 −1 −1 1 1 −1 1 −1 1 1 −1 −1 1 −1 −1 −1 −1

−1 1 −1 1 −1 −1 1 1 −1 −1 −1 −1 1 −1 −1 1 1 −1 1 −1 1 −1 −1 1 1 1 1 1 1 −1 1 1 −1

−1 1 1 −1 1 1 1 1 −1 −1 1 1 −1 1 −1 1 −1 1 1 −1 1 1 1 1 1 1 −1 −1 1 1 −1 1 −1

−1 −1 −1 −1 1 −1 −1 1 −1 1 −1 1 −1 −1 1 1 −1 −1 −1 −1 1 −1 −1 1 1 −1 1 −1 1 1 −1

−1

−1 1 1 −1 −1 −1 −1 −1 1 1 −1 −1 −1 1 −1 1 1 −1 1 1 −1 −1 −1 −1 −1 −1 −1 1 1 1 −1 1

−1

−1 −1 −1 −1 −1 1 1 −1 1 −1 1 −1 −1 −1 1 1 −1 −1 −1 −1 −1 1 1 −1 −1 1 1 −1 1 1 1 −1

−1

−1 −1 1 1 1 −1 1 −1 1 −1 −1 1 1 1 1 1 −1 −1 1 1 1 1 −1 1 −1 −1 1 1 −1 −1 −1 −1 −1

−1 1 −1 1 1 1 −1 −1 1 1 1 1 1 −1 −1 1 −1 1 −1 1 1 1 1 −1 −1 −1 −1 −1 −1 −1 1 1 −1

−1 1 1 −1 −1 −1 −1 −1 −1 −1 1 1 1 −1 1 −1 1 −1 −1 1 1 1 1 1 1 −1 −1 1 1 1 −1 1 −1

−1 −1 −1 −1 −1 1 1 −1 −1 1 1 −1 1 1 1 −1 −1 1 1 1 1 1 −1 −1 1 1 −1 1 1 −1 1 1 1 −1 −1

−1 −1 1 1 1 −1 1 −1 −1 1 1 −1 −1 −1 −1 −1 1 1 −1 −1 −1 1 −1 1 −1 1 1 −1 −1 −1 −1

−1

−1 1 −1 1 1 1 −1 −1 −1 −1 −1 −1 −1 1 1 −1 1 1 −1 1 −1 −1 −1 1 1 −1 −1 −1 −1 −1 1 1

−1

−1 −1 1 1 −1 1 −1 1 1 −1 −1 1 1 −1 −1 −1 −1 1 1 −1 −1 1 1 −1 1 −1 1 1 −1 −1 1 1 −1 −1 −1

−1

−1 1 −1 1 −1 −1 1 1 1 1 1 1 −1 1 1 −1 1 −1 1 −1 1 1 −1 −1 1 1 1 1 −1 1 1 −1

−1 1 1 −1 1 1 1 1 1 1 −1 −1 1 −1 1 −1 1 −1 −1 1 −1 −1 −1 −1 1 1 −1 −1 1 1 −1 1 1 −1

−1 −1 −1 −1 1 −1 −1 1 1 −1 1 −1 1 1 −1 −1 1 1 1 1 −1 1 1 −1 1 −1 1 −1 1 1 −1 −1]

(13)

In the matrix $M_4$ or −$M_4$, -1 is replaced with 1, and 1 is replaced with 0, so that the matrix may be used as a mapping relationship between 16 information bits whose length is 4 and a chip sequence, or may be used as a mapping relationship between 16 data symbols and a chip sequence whose length is 32, as shown in Table 6.

Based on the mapping relationship shown in this embodiment of this application, when an autocorrelation feature between different chip sequences is ensured, a Hamming distance between chip sequences corresponding to different data symbols can be 16, so that system performance can be effectively improved. In addition, each data symbol has at least two fixed chip values whose positions are fixed. Because each data symbol may have at least two fixed chip values whose positions are fixed, the fixed chip values may be used as a pilot, so that the receive end can perform frequency offset estimation and compensation based on the fixed chip values, to improve an anti-frequency offset capability of the system.

Implementation 3

m1=[1 0 0 1 0 1 1 0 1 1 1 1 0 1 0 1 0 0 0 1 0 0 1 1 1 0 0 0 0 0 1] and m2=[0 0 0 1 1 1 0 1 0 1 0 0 1 0 1 1 1 1 0 0 1 1 0 1 1 0 0 0 0 0 1] are two m-sequences whose length is 31. An element-by-element exclusive OR operation is performed on sequences obtained by cyclically shifting m2 and m1 by i bits, to obtain a Gold (Gold) sequence gi, where i=0, 1, 2, ..., 30, as shown in Table 13.

## Table 13

| g0 | 1 | 1 | 0 | 1 | 0 | 1 | 1 | 0 | 0 | 0 | 1 | 1 | 0 | 0 | 0 | 1 | 0 | 1 | 0 | 0 | 0 | 1 | 0 | 0 | 0 | 1 | 0 | 0 | 0 | 0 | 1 |
|---|---|---|---|---|---|---|---|---|---|---|---|---|---|---|---|---|---|---|---|---|---|---|---|---|---|---|---|---|---|---|---|
| g1 | 0 | 1 | 1 | 1 | 1 | 0 | 0 | 0 | 1 | 1 | 1 | 1 | 0 | 1 | 1 | 0 | 1 | 0 | 0 | 0 | 1 | 0 | 0 | 1 | 0 | 1 | 1 | 0 | 0 | 0 | 1 |

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| g2 | 0 | 0 | 1 | 0 | 1 | 1 | 1 | 1 | 1 | 0 | 0 | 1 | 0 | 1 | 0 | 1 | 0 | 1 | 1 | 0 | 1 | 1 | 1 | 1 | 1 | 1 | 1 | 0 | 0 | 1 |
| g3 | 0 | 0 | 0 | 0 | 0 | 1 | 0 | 0 | 0 | 0 | 1 | 0 | 0 | 1 | 0 | 0 | 1 | 0 | 0 | 1 | 1 | 1 | 0 | 0 | 1 | 0 | 1 | 1 | 1 | 0 | 1 |
| g4 | 0 | 0 | 0 | 1 | 0 | 0 | 0 | 1 | 1 | 1 | 1 | 1 | 1 | 1 | 0 | 0 | 0 | 1 | 1 | 0 | 0 | 1 | 0 | 1 | 0 | 0 | 0 | 1 | 1 | 1 | 1 |
| g5 | 0 | 0 | 0 | 1 | 1 | 0 | 1 | 1 | 0 | 0 | 0 | 1 | 0 | 0 | 0 | 0 | 0 | 0 | 0 | 1 | 1 | 0 | 0 | 1 | 1 | 1 | 0 | 0 | 1 | 1 | 0 |
| g6 | 1 | 0 | 0 | 1 | 1 | 1 | 1 | 0 | 0 | 1 | 1 | 0 | 0 | 1 | 1 | 0 | 0 | 0 | 1 | 0 | 0 | 1 | 1 | 1 | 1 | 0 | 1 | 0 | 0 | 1 | 0 |
| g7 | 1 | 1 | 0 | 1 | 1 | 1 | 0 | 0 | 1 | 1 | 0 | 1 | 1 | 1 | 0 | 1 | 0 | 0 | 1 | 1 | 1 | 0 | 0 | 0 | 1 | 0 | 0 | 1 | 0 | 0 | 0 |
| g8 | 1 | 1 | 1 | 1 | 1 | 1 | 0 | 1 | 1 | 0 | 0 | 0 | 0 | 0 | 0 | 0 | 1 | 0 | 1 | 1 | 0 | 1 | 1 | 1 | 0 | 0 | 0 | 0 | 1 | 0 | 1 |
| g9 | 0 | 1 | 1 | 0 | 1 | 1 | 0 | 1 | 0 | 0 | 1 | 0 | 1 | 1 | 1 | 0 | 0 | 1 | 1 | 1 | 0 | 0 | 0 | 0 | 1 | 1 | 0 | 0 | 0 | 1 | 1 |
| g10 | 0 | 0 | 1 | 0 | 0 | 1 | 0 | 1 | 0 | 1 | 1 | 1 | 1 | 0 | 0 | 1 | 0 | 0 | 0 | 1 | 0 | 0 | 1 | 1 | 0 | 0 | 1 | 0 | 0 | 0 | 0 |
| g11 | 1 | 0 | 0 | 0 | 0 | 0 | 0 | 1 | 0 | 1 | 0 | 1 | 0 | 0 | 1 | 0 | 1 | 0 | 1 | 0 | 0 | 0 | 1 | 0 | 1 | 1 | 0 | 1 | 0 | 0 | 1 |
| g12 | 0 | 1 | 0 | 1 | 0 | 0 | 1 | 1 | 0 | 1 | 0 | 0 | 0 | 1 | 1 | 1 | 0 | 1 | 1 | 1 | 1 | 0 | 1 | 0 | 0 | 0 | 1 | 0 | 1 | 0 | 1 |
| g13 | 0 | 0 | 1 | 1 | 1 | 0 | 1 | 0 | 0 | 1 | 0 | 0 | 1 | 1 | 0 | 1 | 1 | 0 | 0 | 1 | 0 | 1 | 1 | 0 | 0 | 1 | 0 | 1 | 0 | 1 | 1 |
| g14 | 0 | 0 | 0 | 0 | 1 | 1 | 1 | 0 | 1 | 1 | 0 | 0 | 1 | 0 | 0 | 0 | 1 | 1 | 1 | 0 | 0 | 0 | 0 | 0 | 1 | 1 | 0 | 1 | 0 | 0 | |
| g15 | 1 | 0 | 0 | 1 | 0 | 1 | 0 | 0 | 1 | 0 | 0 | 0 | 1 | 0 | 1 | 0 | 0 | 1 | 0 | 1 | 1 | 0 | 1 | 1 | 0 | 1 | 1 | 1 | 0 | 1 | 1 |
| g16 | 0 | 1 | 0 | 1 | 1 | 0 | 0 | 1 | 1 | 0 | 1 | 0 | 1 | 0 | 1 | 1 | 0 | 0 | 0 | 0 | 0 | 1 | 1 | 0 | 1 | 1 | 1 | 1 | 1 | 0 | 0 |
| g17 | 1 | 0 | 1 | 1 | 1 | 1 | 1 | 1 | 0 | 0 | 1 | 1 | 1 | 0 | 1 | 1 | 1 | 0 | 1 | 0 | 1 | 0 | 0 | 0 | 0 | 0 | 1 | 1 | 1 | 1 | 1 |
| g18 | 0 | 1 | 0 | 0 | 1 | 1 | 0 | 0 | 0 | 1 | 1 | 1 | 0 | 0 | 1 | 1 | 1 | 1 | 1 | 1 | 1 | 1 | 1 | 1 | 0 | 1 | 0 | 1 | 1 | 1 | 0 |
| g19 | 1 | 0 | 1 | 1 | 0 | 1 | 0 | 1 | 1 | 1 | 0 | 1 | 0 | 1 | 1 | 1 | 1 | 1 | 0 | 1 | 0 | 1 | 0 | 0 | 1 | 1 | 1 | 0 | 1 | 1 | 0 |
| g20 | 1 | 1 | 0 | 0 | 1 | 0 | 0 | 1 | 0 | 0 | 0 | 0 | 0 | 1 | 0 | 1 | 1 | 1 | 0 | 0 | 0 | 0 | 0 | 1 | 0 | 0 | 1 | 1 | 0 | 1 | 0 |
| g21 | 1 | 1 | 1 | 1 | 0 | 1 | 1 | 1 | 0 | 1 | 1 | 0 | 1 | 1 | 0 | 0 | 1 | 1 | 0 | 0 | 1 | 0 | 1 | 1 | 1 | 1 | 0 | 1 | 1 | 0 | 0 |
| g22 | 1 | 1 | 1 | 0 | 1 | 0 | 0 | 0 | 0 | 1 | 0 | 1 | 1 | 0 | 0 | 0 | 0 | 1 | 0 | 0 | 1 | 1 | 1 | 0 | 1 | 0 | 1 | 0 | 1 | 1 | 1 |
| g23 | 0 | 1 | 1 | 0 | 0 | 1 | 1 | 1 | 1 | 1 | 0 | 0 | 0 | 0 | 1 | 0 | 0 | 0 | 0 | 0 | 1 | 1 | 0 | 0 | 0 | 0 | 0 | 1 | 0 | 1 | 0 |
| g24 | 1 | 0 | 1 | 0 | 0 | 0 | 0 | 0 | 0 | 0 | 0 | 0 | 1 | 1 | 1 | 1 | 0 | 0 | 1 | 0 | 1 | 1 | 0 | 1 | 0 | 1 | 0 | 0 | 1 | 0 | 0 |
| g25 | 1 | 1 | 0 | 0 | 0 | 0 | 1 | 1 | 1 | 1 | 1 | 0 | 1 | 0 | 0 | 1 | 1 | 0 | 1 | 1 | 1 | 0 | 1 | 1 | 1 | 1 | 0 | 0 | 1 | 1 | |
| g26 | 0 | 1 | 1 | 1 | 0 | 0 | 1 | 0 | 0 | 0 | 0 | 1 | 1 | 0 | 1 | 0 | 1 | 1 | 1 | 1 | 0 | 1 | 0 | 1 | 1 | 0 | 1 | 1 | 0 | 0 | 0 |
| g27 | 1 | 0 | 1 | 0 | 1 | 0 | 1 | 0 | 1 | 1 | 1 | 0 | 0 | 0 | 1 | 1 | 0 | 1 | 0 | 1 | 0 | 0 | 0 | 1 | 1 | 0 | 0 | 1 | 1 | 0 | 1 |
| g28 | 0 | 1 | 0 | 0 | 0 | 1 | 1 | 0 | 1 | 0 | 0 | 1 | 1 | 1 | 1 | 1 | 1 | 0 | 0 | 0 | 0 | 1 | 1 | 1 | 0 | 0 | 0 | 1 | 1 | 1 | |
| g29 | 0 | 0 | 1 | 1 | 0 | 0 | 0 | 0 | 1 | 0 | 1 | 0 | 0 | 0 | 0 | 1 | 1 | 1 | 1 | 0 | 1 | 0 | 1 | 0 | 1 | 0 | 0 | 0 | 0 | 1 | 0 |
| g30 | 1 | 0 | 0 | 0 | 1 | 0 | 1 | 1 | 1 | 0 | 1 | 1 | 1 | 1 | 1 | 0 | 1 | 1 | 0 | 1 | 1 | 1 | 1 | 0 | 0 | 0 | 0 | 0 | 0 | 0 | |

After 16 Gold sequences are randomly selected from the 31 Gold sequences shown in Table 13 (sequences are allowed to be repeatedly selected), and cyclical shifting is performed on the selected sequences (quantities of bits for cyclical shifting may be different), a column of elements is supplemented to the selected 16 sequences (for example, supplemented to a first column of M). Then, different sequence selections, cyclical shifting of each sequence, and element supplementing are attempted, to search for a sequence set with a maximum Hamming distance, so as to obtain the mapping relationship shown in Table 7. For example, a minimum value and a maximum value of a Hamming distance may be set, to search for a sequence that meets a condition, so as to obtain a matrix with 16 rows and 32 columns, and further obtain the mapping relationship. For example, a minimum value of the Hamming distance may be 16, and a maximum value may be 20. For another example, a minimum value of the Hamming distance may be 16, and a maximum value may be 18. For example, the following matrix $M_5$ may be formed in the foregoing manner. Hamming distances between different chip sequences may be shown in Table 8 above.

$$M_5=[1\ 0\ 0\ 1\ 1\ 1\ 0\ 1\ 0\ 1\ 1\ 0\ 0\ 0\ 1\ 1\ 0\ 0\ 0\ 1\ 0\ 1\ 0\ 0\ 0\ 1\ 0\ 0\ 0\ 1\ 0\ 0$$
$$1\ 0\ 1\ 0\ 1\ 0\ 1\ 1\ 0\ 1\ 1\ 1\ 1\ 1\ 1\ 1\ 0\ 0\ 1\ 0\ 0\ 1\ 0\ 1\ 1\ 1\ 1\ 0\ 0\ 1$$
$$1\ 1\ 1\ 1\ 0\ 0\ 1\ 0\ 1\ 0\ 1\ 0\ 1\ 1\ 0\ 1\ 1\ 1\ 1\ 1\ 1\ 1\ 0\ 0\ 1\ 0\ 0\ 1\ 0\ 1\ 1$$
$$0\ 1\ 1\ 1\ 1\ 0\ 0\ 1\ 0\ 1\ 0\ 1\ 0\ 1\ 1\ 0\ 1\ 1\ 1\ 1\ 1\ 1\ 1\ 0\ 0\ 1\ 0\ 0\ 1\ 0\ 1$$
$$1\ 0\ 1\ 0\ 1\ 1\ 1\ 1\ 0\ 0\ 1\ 0\ 1\ 0\ 1\ 0\ 1\ 1\ 0\ 1\ 1\ 1\ 1\ 1\ 1\ 1\ 0\ 0\ 1\ 0$$
$$1\ 1\ 0\ 0\ 0\ 0\ 1\ 0\ 0\ 0\ 0\ 1\ 0\ 0\ 1\ 0\ 0\ 1\ 0\ 0\ 1\ 1\ 1\ 0\ 0\ 1\ 0\ 1\ 1\ 1\ 0$$
$$1\ 0\ 1\ 0\ 0\ 0\ 0\ 0\ 1\ 0\ 0\ 0\ 0\ 1\ 0\ 0\ 1\ 0\ 0\ 1\ 0\ 0\ 1\ 1\ 1\ 0\ 0\ 1\ 0\ 1\ 1\ 1$$
$$1\ 0\ 1\ 1\ 1\ 0\ 1\ 0\ 0\ 0\ 0\ 0\ 1\ 0\ 0\ 0\ 0\ 1\ 0\ 0\ 1\ 0\ 0\ 1\ 0\ 0\ 1\ 1\ 1\ 0\ 0\ 1$$
$$0\ 1\ 1\ 0\ 0\ 1\ 0\ 1\ 1\ 1\ 0\ 1\ 0\ 0\ 0\ 0\ 0\ 1\ 0\ 0\ 0\ 0\ 1\ 0\ 0\ 1\ 0\ 0\ 1\ 0\ 0\ 1$$
$$0\ 0\ 0\ 1\ 0\ 1\ 0\ 0\ 0\ 1\ 1\ 1\ 1\ 0\ 0\ 0\ 1\ 0\ 0\ 0\ 1\ 1\ 1\ 1\ 1\ 1\ 0\ 0\ 0\ 1\ 1$$
$$0\ 1\ 0\ 1\ 0\ 0\ 1\ 1\ 1\ 1\ 0\ 0\ 1\ 1\ 0\ 0\ 1\ 1\ 0\ 0\ 0\ 1\ 0\ 0\ 1\ 1\ 1\ 1\ 0\ 1\ 0\ 0$$
$$0\ 0\ 1\ 0\ 0\ 1\ 0\ 0\ 0\ 1\ 1\ 0\ 1\ 1\ 1\ 0\ 0\ 1\ 1\ 0\ 1\ 1\ 1\ 0\ 1\ 0\ 0\ 1\ 1\ 1\ 0\ 0$$
$$1\ 1\ 0\ 1\ 1\ 1\ 0\ 0\ 1\ 1\ 0\ 1\ 1\ 1\ 0\ 1\ 0\ 0\ 1\ 1\ 1\ 0\ 0\ 0\ 1\ 0\ 0\ 1\ 0\ 0\ 0\ 1$$
$$0\ 0\ 0\ 0\ 0\ 0\ 1\ 1\ 1\ 0\ 1\ 1\ 0\ 0\ 1\ 0\ 0\ 0\ 1\ 1\ 1\ 0\ 0\ 0\ 0\ 0\ 1\ 1\ 0\ 1\ 0$$
$$0\ 1\ 0\ 1\ 1\ 0\ 0\ 0\ 0\ 0\ 1\ 1\ 0\ 1\ 1\ 1\ 1\ 0\ 0\ 0\ 1\ 0\ 1\ 1\ 0\ 0\ 1\ 1\ 0\ 1\ 0$$
$$0\ 1\ 1\ 0\ 1\ 1\ 0\ 0\ 1\ 1\ 0\ 0\ 1\ 0\ 1\ 1\ 1\ 1\ 0\ 1\ 1\ 0\ 0\ 1\ 1\ 1\ 1\ 0\ 1\ 1\ 1\ 0]$$

It may be understood that the matrix obtained based on the Gold sequences and the Hamming distance may be used as a mapping relationship between 16 data symbols and a chip sequence. Alternatively, columns in Table 7 may be rearranged or some columns may be negated, or rows in Table 7 may be arranged, to form a new mapping relationship. The new mapping relationship may alternatively be used as a mapping table relationship between 16 data symbols and a chip sequence.

Based on the mapping relationship shown in this embodiment of this application, when an autocorrelation feature between different chip sequences is ensured, Hamming distances between different chip sequences may include 16, 17, and 20. Therefore, there are the fewest cases in which a Hamming distance between different chip sequences is equal to 16, and a bit error rate at the receive end can be further reduced.

Implementation 4

Refer to Implementation 1. It is assumed that two sequences whose length is 8 and that include 1 and -1 are: $\vec{a}$ = $[a_0,a_1,a_2,a_3,a_4,a_5,a_6,a_7]$ and $\vec{b}$ = $[b_0,b_1,b_2,b_3,b_4,b_5,b_6,b_7]$. The four sequences are evenly spliced together to form a sequence $\vec{v}$ = $[a_0,b_0,a_1,b_1,\cdots,a_7,b_7]$ whose length is 16. The sequence $\vec{v}$ is cyclically shifted by 0 bits, 2 bits, 4 bits, 6 bits, 8 bits, 10 bits, 12 bits, and 14 bits, to obtain eight sequences whose length is 16, and then values of even bits (or odd bits) of the eight sequences obtained through cyclical shifting are negated, to obtain other eight sequences. Herein, $\vec{v}_i$ is used to represent the 16 sequences, and i=0, 1, 2, ..., or 15. The sequences $\vec{a}$ and $\vec{b}$ may be any two sequences selected from the three sequences shown in Formula (8), or may be sequences obtained by performing cyclical shifting, negation, or reversal on the selected sequences. Alternatively, it may be understood that the sequences $\vec{a}$ and $\vec{b}$ are obtained based on any two of the three sequences shown in Formula (8).

For example, $\vec{a}$=[-1 -1 1 -1 -1 1 1 1], and $\vec{b}$=[ 1 -1 -1 1 -1 1 -1 1]. In this case, the 16 sequences form the following

mapping matrix $M_6$.

$$M_6=[-1\ 1\ -1\ -1\ 1\ -1\ -1\ 1\ -1\ -1\ 1\ 1\ 1\ -1\ 1\ 1$$
$$1\ 1\ -1\ 1\ -1\ -1\ 1\ 1\ -1\ -1\ 1\ -1\ -1\ 1\ 1\ 1\ -1$$
$$1\ -1\ 1\ 1\ -1\ 1\ -1\ -1\ 1\ -1\ -1\ 1\ -1\ -1\ 1\ 1$$
$$1\ 1\ 1\ -1\ 1\ 1\ -1\ 1\ -1\ -1\ 1\ -1\ -1\ 1\ -1\ -1$$
$$-1\ -1\ 1\ 1\ 1\ -1\ 1\ 1\ -1\ 1\ -1\ -1\ 1\ -1\ -1\ 1$$
$$-1\ 1\ -1\ -1\ 1\ 1\ 1\ -1\ 1\ 1\ -1\ 1\ -1\ -1\ 1\ -1$$
$$1\ -1\ -1\ 1\ -1\ -1\ 1\ 1\ 1\ -1\ 1\ 1\ -1\ 1\ -1\ -1$$
$$-1\ -1\ 1\ -1\ -1\ 1\ -1\ -1\ 1\ 1\ 1\ -1\ 1\ 1\ -1\ 1$$
$$-1\ -1\ -1\ 1\ 1\ 1\ -1\ -1\ -1\ 1\ 1\ -1\ 1\ 1\ 1\ -1$$
$$1\ -1\ -1\ -1\ -1\ 1\ 1\ 1\ -1\ -1\ -1\ 1\ 1\ -1\ 1\ 1$$
$$1\ 1\ 1\ -1\ -1\ -1\ -1\ 1\ 1\ 1\ -1\ -1\ -1\ 1\ 1\ -1$$
$$1\ -1\ 1\ 1\ 1\ -1\ -1\ -1\ -1\ 1\ 1\ 1\ -1\ -1\ -1\ 1$$
$$-1\ 1\ 1\ -1\ 1\ 1\ 1\ -1\ -1\ -1\ -1\ 1\ 1\ 1\ -1\ -1$$
$$-1\ -1\ -1\ 1\ 1\ -1\ 1\ 1\ 1\ -1\ -1\ -1\ -1\ 1\ 1\ 1$$
$$1\ 1\ -1\ -1\ -1\ 1\ 1\ -1\ 1\ 1\ 1\ -1\ -1\ -1\ -1\ 1$$
$$-1\ 1\ 1\ 1\ -1\ -1\ -1\ 1\ 1\ -1\ 1\ 1\ 1\ -1\ -1\ -1]$$

In the matrix $M_6$ or $-M_6$, -1 is replaced with 1, and 1 is replaced with 0, so that the matrix may be used as a mapping relationship between 16 information bits whose length is 4 and a chip sequence, or may be used as a mapping relationship between 16 data symbols and a chip sequence whose length is 16, as shown in Table 9. A minimum Hamming distance in the mapping relationship shown in Table 9 is greater than or equal to 8.

Based on the mapping relationship shown in this embodiment of this application, when an autocorrelation feature between different chip sequences is ensured, the minimum Hamming distance can be effectively increased, the bit error rate at the receive end can be reduced, and system performance can be improved.

Implementation 5

Refer to Implementation 2. When n=8, a Hadamard matrix with eight rows and eight columns may be obtained, as shown in the following.

```
H=[  1   1  -1   1   1  -1  -1  -1
     1  -1  -1  -1  -1  -1   1  -1
     1  -1   1   1   1   1   1  -1
     1   1   1  -1  -1   1  -1  -1
     1  -1   1   1  -1  -1  -1   1
     1   1   1  -1   1  -1   1   1
     1   1  -1   1  -1   1   1   1
     1  -1  -1  -1   1   1  -1   1]
```

Therefore, the 8*8 Hadamard matrix H shown in the foregoing formula may be selected, or columns of H may be rearranged or some columns may be negated, or rows of H are arranged, to form a matrix in which 16 data symbols are mapped to a chip sequence whose length is 8, as shown in Formula (13):

$$M_7 = \begin{bmatrix} H \\ -H \end{bmatrix} \quad (13)$$

In the matrix $M_7$ or $-M_7$, -1 is replaced with 0, so that the matrix may be used as a mapping relationship between 16 data symbols and a chip sequence whose length is 8, as shown in Table 10. A minimum Hamming distance in the mapping relationship shown in Table 10 is greater than or equal to 4.

In the mapping relationship shown this embodiment of this application, a Hamming distance between chip sequences corresponding to different data symbols is 16, so that system performance can be effectively improved. In addition, each data symbol has two fixed chip values whose positions are fixed. Therefore, the receive end can perform frequency offset estimation and compensation based on the fixed chip values, to improve an anti-frequency offset capability of the system.

It may be understood that, in the foregoing embodiments, for a part that is not described in detail in one embodiment, refer to another embodiment.

Communication apparatuses provided in embodiments of this application are described below.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the communication apparatuses in embodiments of this application with reference to FIG. 6 to FIG. 8.

FIG. 6 is a diagram of a structure of a communication apparatus according to an embodiment of this application. As shown in FIG. 6, the communication apparatus includes a processing unit 601 and a transceiver unit 602.

In some embodiments of this application, the communication apparatus may be the transmit end or the chip shown above, and the chip may be disposed in the transmit end. In other words, the communication apparatus may be configured to perform the steps, functions, or the like performed by the transmit end in the foregoing method embodiments.

The processing unit 601 is configured to generate a PPDU based on a mapping relationship between a data symbol and a chip sequence (or a mapping relationship between an information bit and a chip sequence); and the transceiver unit 602 is configured to output the PPDU.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein. For example, the processing unit 601 may be configured to perform step 301 shown in FIG. 3. The transceiver unit 602 may be configured to perform the sending step in step 302 shown in FIG. 3.

FIG. 6 is reused. In some other embodiments of this application, the communication apparatus may be the receive end or the chip shown above, and the chip may be disposed in the receive end. In other words, the communication apparatus may be configured to perform the steps, functions, or the like performed by the receive end in the foregoing method embodiments.

For example, the transceiver unit 602 is configured to input a PPDU; and the processing unit 601 is configured to process the PPDU based on a mapping relationship between a data symbol and a chip sequence (or a mapping relationship between an information bit and a chip sequence).

For example, the processing unit 601 is specifically configured to: obtain a first sequence in the PPDU; determine, based on N chip sequences included in the mapping relationship, a first chip sequence corresponding to the first sequence; determine, based on the mapping relationship, a data symbol corresponding to the first chip sequence; and determine, based on the data symbol corresponding to the first chip sequence, an information bit corresponding to the first chip sequence.

For another example, the processing unit 601 is specifically configured to perform O-QPSK demodulation, or perform BPSK demodulation, or perform PSK demodulation.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein. For example, the transceiver unit 602 may be further configured to perform the receiving step in step 302 shown in FIG. 3. The processing unit 601 may be further configured to perform step 303 shown in FIG. 3.

In a possible implementation, the communication apparatus may include a storage unit, and the storage unit may be configured to store the mapping relationship shown above.

In the foregoing embodiments, for descriptions of the PPDU, the mapping relationship, the minimum Hamming distance, and the like, refer to the descriptions in the foregoing method embodiments. Details are not described herein again.

It may be understood that the foregoing division manner is merely an example. A division manner of the transmit end (or the chip disposed in the transmit end) and the receive end (or the chip disposed in the receive end) may alternatively be shown as follows: The transmit end may include a generation unit and a sending unit; and the receive end may include a receiving unit and a processing unit, and the processing unit may include at least one of a demodulation processing subunit (for example, demodulating a modulated symbol), and a demapping processing subunit (for example, demapping one or more sequences in the PPDU based on the mapping relationship to obtain one or more data symbols). Details are not listed one by one herein.

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 6 or any form of product having a function of the second communication apparatus in FIG. 6 falls within the protection scope of embodiments of this application. It should be further understood that the following descriptions are merely an example, and the product forms of the first communication apparatus and the second communication apparatus in embodiments of this application are not limited thereto.

In a possible implementation, in the communication apparatus shown in FIG. 6, the processing unit 601 may be one or more processors, the transceiver unit 602 may be a transceiver, or the transceiver unit 602 may include a sending unit and a receiving unit. The sending unit may be a transmitter, the receiving unit may be a receiver, and the sending unit and the receiving unit are integrated into one device, for example, a transceiver. In this embodiment of this application, the processor and the transceiver may be coupled, or the like. A manner of a connection between the processor and the transceiver is not limited in embodiments of this application. In a process of performing the foregoing method, a process of sending information (for example, sending a PPDU) in the foregoing method may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information (for example, receiving a PPDU) in the foregoing method may be understood as a process of receiving the input information by the processor. When the processor receives the input information, the transceiver receives the information, and inputs the information into the processor. Further, after the transceiver receives the information, other processing may need to be performed on the information before the information is input into the processor.

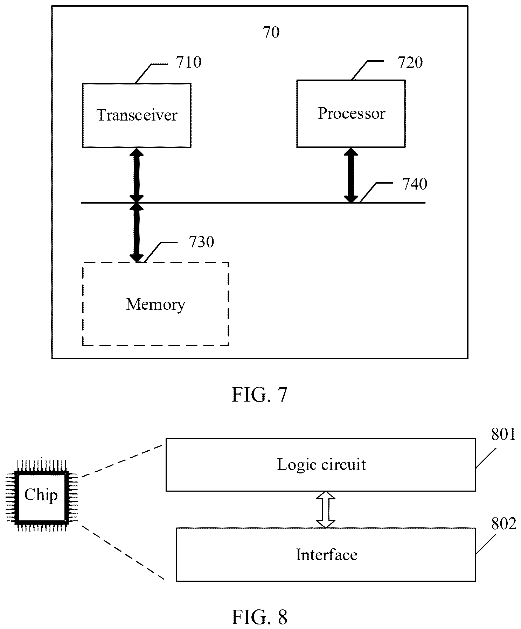

As shown in FIG. 7, a communication apparatus 70 includes one or more processors 720 and a transceiver 710.

For example, when the communication apparatus is configured to perform the steps, methods, or functions performed by the transmit end, the processor 720 is configured to generate a PPDU based on a mapping relationship between a data symbol and a chip sequence (or a mapping relationship between an information bit and a chip sequence); and the transceiver 710 is configured to send the PPDU.

For example, when the communication apparatus is configured to perform the steps, methods, or functions performed by the receive end, the transceiver 710 is configured to receive a PPDU from a transmit end; and the processor 720 is configured to process the PPDU based on a mapping relationship between a data symbol and a chip sequence (or a mapping relationship between an information bit and a chip sequence).

In this embodiment of this application, for descriptions of the PPDU, the mapping relationship, the minimum Hamming distance, and the like, refer to the descriptions in the foregoing method embodiments. Details are not described herein again.

It may be understood that for specific descriptions of the processor and the transceiver, refer to the descriptions of the processing unit and the transceiver unit shown in FIG. 6. Details are not described herein again.

In various implementations of the communication apparatus shown in FIG. 7, the transceiver may include a receiver and a transmitter, the receiver is configured to perform the receiving function (or operation), and the transmitter is configured to perform the transmitting function (or operation). The transceiver is configured to communicate with another device/apparatus through a transmission medium.

Optionally, the communication apparatus 70 may further include one or more memories 730, configured to store program instructions, data, and/or the like. The memory 730 is coupled to the processor 720. The coupling in this embodiment of this application is an indirect coupling or a communication connection between apparatuses, units, or modules, may be in an electrical form, a mechanical form, or another form, and is used for information exchange between the apparatuses, the units, and the modules. The processor 720 may operate with the memory 730. The processor 720 may execute the program instructions stored in the memory 730. Optionally, at least one of the one or more memories may be included in the processor. Optionally, the one or more memories may be configured to store the mapping relationship in this embodiment of this application.

A specific connection medium between the transceiver 710, the processor 720, and the memory 730 is not limited in embodiments of this application. In this embodiment of this application, the memory 730, the processor 720, and the transceiver 710 are connected through a bus 740 in FIG. 7. The bus is represented by using a thick line in FIG. 7. A manner of a connection between other components is schematically described, and is not limited thereto. The bus may be classified into an address bus, a data bus, a control bus, and the like. For ease of representation, only one bold line is used to represent the bus in FIG. 7, but this does not indicate that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like, and may implement or execute the methods, the steps, and the logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module, or the like.

In embodiments of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 720 is mainly configured to: process a communication protocol and communication data, control the entire communication apparatus, perform a software program, and process data of the software program. The memory 730 is mainly configured to store the software program and the data. The transceiver 710 may include a control circuit and an antenna. The control circuit is mainly configured to: perform a conversion between a baseband signal and a radio frequency signal, and process the radio frequency signal. The antenna is mainly configured to receive and send a radio frequency signal in a form of an electromagnetic wave. An input/output apparatus, for example, a touchscreen, a display, or a keyboard, is mainly configured to receive data entered by a user and output data to the user.

After the communication apparatus is powered on, the processor 720 may read the software program in the memory 730, interpret and execute instructions of the software program, and process data of the software program. When data needs to be sent wirelessly, the processor 720 performs baseband processing on the to-be-sent data, and outputs a baseband signal to a radio frequency circuit. After performing radio frequency processing on the baseband signal, the radio frequency circuit sends a radio frequency signal in an electromagnetic wave form through the antenna. When data is sent to the communication apparatus, the radio frequency circuit receives the radio frequency signal through the antenna, converts the radio frequency signal into a baseband signal, and outputs the baseband signal to the processor 720. The processor 720 converts the baseband signal into data and processes the data.

In another implementation, the radio frequency circuit and the antenna may be disposed independently of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components than those shown in FIG. 7, or the like. This is not limited in embodiments of this application. The foregoing methods performed by the processor and the transceiver are merely examples. For specific steps performed by the processor and the transceiver, refer to the methods described above.

In another possible implementation, in the communication apparatus shown in FIG. 6, the processing unit 601 may be one or more logic circuits, and the transceiver unit 602 may be an input/output interface, or may be referred to as a communication interface, an interface circuit, an interface, or the like. Alternatively, the transceiver unit 602 may include a sending unit and a receiving unit. The sending unit may be an output interface, and the receiving unit may be an input interface. The sending unit and the receiving unit are integrated into one unit, for example, an input/output interface. As shown in FIG. 8, a communication apparatus shown in FIG. 8 includes a logic circuit 801 and an interface 802. To be specific, the processing unit 601 may be implemented by using the logic circuit 801, and the transceiver unit 602 may be implemented by using the interface 802. The logic circuit 801 may be a chip, a processing circuit, an integrated circuit, a system on chip (system on chip, SoC), or the like. The interface 802 may be a communication interface, an input/output interface, a pin, or the like. For example, FIG. 8 is an example in which the communication apparatus is a chip. The chip includes the logic circuit 801 and the interface 802. It may be understood that the chip shown in this embodiment of this application may include a narrowband chip, an ultra-wideband chip, or the like. This is not limited in embodiments of this application. A step of sending a UWB impulse described above may be performed by the ultra-wideband chip, and whether another step is performed by the ultra-wideband chip is not limited in embodiments of this application.

In this embodiment of this application, the logic circuit and the interface may be coupled to each other. A specific manner of a connection between the logical circuit and the interface is not limited in embodiments of this application.

For example, when the communication apparatus is configured to perform the methods, functions, or steps performed by the transmit end, the logic circuit 801 is configured to generate a PPDU, and the interface 802 is configured to output the PPDU.

For example, when the communication apparatus is configured to perform the methods, functions, or steps performed by the receive end, the interface 802 is configured to input a PPDU, and the logic circuit 801 is configured to process the PPDU.

In a possible implementation, the foregoing chips may include a storage circuit, and the storage circuit may be configured to store the mapping relationship provided in this embodiment of this application. In another possible implementation, the foregoing chips may alternatively be connected to a memory, so that when the mapping relationship needs to be used, the mapping relationship provided in this embodiment of this application is read from the memory.

It may be understood that the communication apparatus shown in embodiments of this application may implement the methods provided in embodiments of this application in a form of hardware, or may implement the methods provided in embodiments of this application in a form of software. This is not limited in embodiments of this application.

In the foregoing embodiments, for descriptions of the PPDU, the mapping relationship, the minimum Hamming distance, and the like, refer to the descriptions in the foregoing method embodiments. Details are not described herein again.

For specific implementations of embodiments shown in FIG. 8, refer to the foregoing embodiments, and details are not described herein again.

An embodiment of this application further provides a wireless communication system. The wireless communication system includes a transmit end and a receive end. The transmit end and the receive end may be configured to perform the method in any one of the foregoing embodiments (as shown in FIG. 3). Alternatively, for the transmit end and the receive end, refer to the communication apparatuses shown in FIG. 6 to FIG. 8.

In addition, this application further provides a computer program. The computer program is used to implement operations and/or processing performed by the transmit end in the methods provided in this application.

This application further provides a computer program. The computer program is used to implement operations and/or processing performed by the receive end in the methods provided in this application.

This application further provides a computer-readable storage medium. The computer-readable storage medium stores computer code. When the computer code is run on a computer, the computer is enabled to perform operations and/or processing performed by the transmit end in the methods provided in this application.

This application further provides a computer-readable storage medium. The computer-readable storage medium stores computer code. When the computer code is run on a computer, the computer is enabled to perform operations and/or processing performed by the receive end in the methods provided in this application.

This application further provides a computer program product. The computer program product includes computer code or a computer program. When the computer code or the computer program is run on a computer, operations and/or processing performed by the transmit end in the methods provided in this application are/is performed.

This application further provides a computer program product. The computer program product includes computer code or a computer program. When the computer code or the computer program is run on a computer, operations and/or processing performed by the receive end in the methods provided in this application are/is performed.

In the several embodiments provided in this application, it should be understood that the disclosed system, apparatus, and method may be implemented in another manner. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, and may be located in one location, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A physical layer protocol data unit PPDU-based communication method, wherein the method comprises:

   generating a PPDU based on a mapping relationship between a data symbol and a chip sequence, wherein a length of each chip sequence is L, a minimum Hamming distance is greater than or equal to L/2, L is a positive integer, a bit length corresponding to a data symbol is less than a bit length of a chip sequence, and the minimum Hamming distance indicates a smallest Hamming distance between any two different chip sequences; and
   sending the PPDU.

2. A physical layer protocol data unit PPDU communication method, wherein the method comprises:

   receiving a PPDU; and
   processing the PPDU based on a mapping relationship between a data symbol and a chip sequence, wherein a length of each chip sequence is L, a minimum Hamming distance is greater than or equal to L/2, L is a positive integer, a bit length corresponding to a data symbol is less than a bit length of a chip sequence, and the minimum Hamming distance indicates a smallest Hamming distance between any two different chip sequences.

3. The method according to claim 2, wherein the processing the PPDU based on a mapping relationship between a data symbol and a chip sequence comprises:

   obtaining a first sequence in the PPDU, wherein a length of the first sequence is L;
   determining, based on N chip sequences comprised in the mapping relationship between a data symbol and a chip sequence, a first chip sequence corresponding to the first sequence, wherein the first chip sequence is one of the N chip sequences, and N is a positive integer;
   determining, based on the mapping relationship between a data symbol and a chip sequence, a data symbol corresponding to the first chip sequence; and
   determining, based on the data symbol corresponding to the first chip sequence, an information bit corresponding to the first chip sequence.

4. The method according to any one of claims 1 to 3, wherein L=32, L=16, or L=8.

5. The method according to any one of claims 1 to 4, wherein the chip sequence is obtained based on at least one of the following:

   [1 1 -1 -1 -1 -1 -1 -1] and [1 1 -1 1 -1 1 -1 -1];
   [1 -1 1 -1 -1 -1 -1 -1] and [1 1 -1 1 1 -1 -1 -1]; and
   [1 -1 -1 1 -1 -1 -1 -1] and [1 1 1 -1 1 -1 -1 -1].

6. The method according to any one of claims 1 to 5, wherein the chip sequence is obtained based on at least two of the following:

$$\begin{matrix} [ 1 & 1 & -1 & 1 & -1 & 1 & -1 & -1] \\ [ 1 & 1 & -1 & 1 & 1 & -1 & -1 & -1] \\ [ 1 & 1 & 1 & -1 & 1 & -1 & -1 & -1] \end{matrix}.$$

7. The method according to any one of claims 1 to 4, wherein the chip sequence is obtained based on a Hadamard matrix, and an order of the Hadamard matrix is related to the length of the chip sequence.

8. The method according to claim 7, wherein at least two columns of elements in a matrix formed by the chip sequence are the same.

9. The method according to any one of claims 1 to 4, wherein the chip sequence is obtained based on the following two sequences:

[10 0 1 0 1 1 0 1 1 1 10 10 1 0 0 0 10 0 1 1 1 0 0 0 0 0 1]; and
[0 0 0 1 1 1 0 1 0 1 0 0 1 0 1 1 1 1 0 0 1 1 0 1 1 0 0 0 0 0 1].

10. The method according to claim 5 or 6, wherein the mapping relationship between a data symbol and a chip sequence is as follows:

| Data symbol | Chip sequence |
|---|---|
| 0 | 1 1 1 1 0 1 0 0 0 1 0 0 1 1 0 1 0 1 1 0 0 1 1 1 1 0 1 0 1 0 0 1 |
| 1 | 1 0 0 1 1 1 1 1 0 1 0 0 0 1 0 0 1 1 0 1 0 1 1 0 0 1 1 1 1 0 1 0 |
| 2 | 1 0 1 0 1 0 0 1 1 1 1 0 1 0 0 0 1 0 0 1 1 0 1 0 1 1 0 0 1 1 1 |
| 3 | 0 1 1 1 1 0 1 0 1 0 0 1 1 1 1 0 1 0 0 0 1 0 0 1 1 0 1 0 1 1 0 |
| 4 | 0 1 1 0 0 1 1 1 1 0 1 0 1 0 0 1 1 1 1 0 1 0 0 0 1 0 0 1 1 0 1 |
| 5 | 1 1 0 1 0 1 1 0 0 1 1 1 1 0 1 0 1 0 0 1 1 1 1 0 1 0 0 0 1 0 0 |
| 6 | 0 1 0 0 1 1 0 1 0 1 1 0 0 1 1 1 1 0 1 0 1 0 0 1 1 1 1 0 1 0 0 |
| 7 | 0 1 0 0 0 1 0 0 1 1 0 1 0 1 1 0 0 1 1 1 1 0 1 0 1 0 0 1 1 1 1 |
| 8 | 1 0 1 0 0 0 0 1 0 0 0 1 1 0 0 0 0 0 1 1 0 0 1 0 1 1 1 1 1 1 0 0 |
| 9 | 1 1 0 0 1 0 1 0 0 0 0 1 0 0 0 1 1 0 0 0 0 0 1 1 0 0 1 0 1 1 1 1 |
| 10 | 1 1 1 1 1 1 0 0 1 0 1 0 0 0 0 1 0 0 0 1 1 0 0 0 0 0 1 1 0 0 1 0 |
| 11 | 0 0 1 0 1 1 1 1 1 1 0 0 1 0 1 0 0 0 0 1 0 0 0 1 1 0 0 0 0 0 1 1 |
| 12 | 0 0 1 1 0 0 1 0 1 1 1 1 1 1 0 0 1 0 1 0 0 0 0 1 0 0 0 1 1 0 0 0 |
| 13 | 1 0 0 0 0 0 1 1 0 0 1 0 1 1 1 1 1 1 0 0 1 0 1 0 0 0 0 1 0 0 0 1 |
| 14 | 0 0 0 1 1 0 0 0 0 0 1 1 0 0 1 0 1 1 1 1 1 1 0 0 1 0 1 0 0 0 0 1 |
| 15 | 0 0 0 1 0 0 0 1 1 0 0 0 0 0 1 1 0 0 1 0 1 1 1 1 1 1 0 0 1 0 1 0 |

11. The method according to claim 5 or 6, wherein the mapping relationship between a data symbol and a chip sequence is as follows:

| Data symbol | Chip sequence |
|---|---|
| 0 | 1 1 1 1 1 0 1 1 0 0 1 1 1 1 0 1 0 0 0 0 1 0 0 1 0 1 1 0 0 1 0 1 |
| 1 | 0 1 0 1 1 1 1 1 1 0 1 1 0 0 1 1 1 1 0 1 0 0 0 0 1 0 0 1 0 1 1 0 |
| 2 | 0 1 1 0 0 1 0 1 1 1 1 1 1 0 1 1 0 0 1 1 1 1 0 1 0 0 0 0 1 0 0 1 |
| 3 | 1 0 0 1 0 1 1 0 0 1 0 1 1 1 1 1 1 0 1 1 0 0 1 1 1 1 0 1 0 0 0 0 |
| 4 | 0 0 0 0 1 0 0 1 0 1 1 0 0 1 0 1 1 1 1 1 1 0 1 1 0 0 1 1 1 1 0 1 |
| 5 | 1 1 0 1 0 0 0 0 1 0 0 1 0 1 1 0 0 1 0 1 1 1 1 1 1 0 1 1 0 0 1 1 |
| 6 | 0 0 1 1 1 1 0 1 0 0 0 0 1 0 0 1 0 1 1 0 0 1 0 1 1 1 1 1 1 0 1 1 |
| 7 | 1 0 1 1 0 0 1 1 1 1 0 1 0 0 0 0 1 0 0 1 0 1 1 0 0 1 0 1 1 1 1 1 |
| 8 | 1 0 1 0 1 1 1 0 0 1 1 0 1 0 0 0 0 1 0 1 1 1 0 0 0 0 1 1 0 0 0 0 |

(continued)

| Data symbol | Chip sequence |
|---|---|
| 9 | 0 0 0 0 1 0 1 0 1 1 1 0 0 1 1 0 1 0 0 0 0 1 0 1 1 1 0 0 0 0 1 1 |
| 10 | 0 0 1 1 0 0 0 0 1 0 1 0 1 1 1 0 0 1 1 0 1 0 0 0 0 1 0 1 1 1 0 0 |
| 11 | 1 1 0 0 0 0 1 1 0 0 0 0 1 0 1 0 1 1 1 0 0 1 1 0 1 0 0 0 0 1 0 1 |
| 12 | 0 1 0 1 1 1 0 0 0 0 1 1 0 0 0 0 1 0 1 0 1 1 1 0 0 1 1 0 1 0 0 0 |
| 13 | 1 0 0 0 0 1 0 1 1 1 0 0 0 0 1 1 0 0 0 0 1 0 1 0 1 1 1 0 0 1 1 0 |
| 14 | 0 1 1 0 1 0 0 0 0 1 0 1 1 1 0 0 0 0 1 1 0 0 0 0 1 0 1 0 1 1 1 0 |
| 15 | 1 1 1 0 0 1 1 0 1 0 0 0 0 1 0 1 1 1 0 0 0 0 1 1 0 0 0 0 1 0 1 0 |

12. The method according to claim 5 or 6, wherein the mapping relationship between a data symbol and a chip sequence is as follows:

| Data symbol | Chip sequence |
|---|---|
| 0 | 1 1 1 0 0 0 0 1 1 1 0 0 0 0 1 0 1 1 1 1 0 1 1 1 0 1 1 1 1 1 1 0 |
| 1 | 1 1 1 0 1 1 1 0 0 0 0 1 1 1 0 0 0 0 1 0 1 1 1 1 0 1 1 1 0 1 1 1 |
| 2 | 0 1 1 1 1 1 1 0 1 1 1 0 0 0 0 1 1 1 0 0 0 0 1 0 1 1 1 1 0 1 1 1 |
| 3 | 0 1 1 1 0 1 1 1 1 1 1 0 1 1 1 0 0 0 0 1 1 1 0 0 0 0 1 0 1 1 1 1 |
| 4 | 1 1 1 1 0 1 1 1 0 1 1 1 1 1 1 0 1 1 1 0 0 0 0 1 1 1 0 0 0 0 1 0 |
| 5 | 0 0 1 0 1 1 1 1 0 1 1 1 0 1 1 1 1 1 1 0 1 1 1 0 0 0 0 1 1 1 0 0 |
| 6 | 1 1 0 0 0 0 1 0 1 1 1 1 0 1 1 1 0 1 1 1 1 1 1 0 1 1 1 0 0 0 0 1 |
| 7 | 0 0 0 1 1 1 0 0 0 0 1 0 1 1 1 1 0 1 1 1 0 1 1 1 1 1 1 0 1 1 1 0 |
| 8 | 1 0 1 1 0 1 0 0 1 0 0 1 0 1 1 1 1 0 1 0 0 0 1 0 0 0 1 0 1 0 1 1 |
| 9 | 1 0 1 1 1 0 1 1 0 1 0 0 1 0 0 1 0 1 1 1 1 0 1 0 0 0 1 0 0 0 1 0 |
| 10 | 0 0 1 0 1 0 1 1 1 0 1 1 0 1 0 0 1 0 0 1 0 1 1 1 1 0 1 0 0 0 1 0 |
| 11 | 0 0 1 0 0 0 1 0 1 0 1 1 1 0 1 1 0 1 0 0 1 0 0 1 0 1 1 1 1 0 1 0 |
| 12 | 1 0 1 0 0 0 1 0 0 0 1 0 1 0 1 1 1 0 1 1 0 1 0 0 1 0 0 1 0 1 1 1 |
| 13 | 0 1 1 1 1 0 1 0 0 0 1 0 0 0 1 0 1 0 1 1 1 0 1 1 0 1 0 0 1 0 0 1 |
| 14 | 1 0 0 1 0 1 1 1 1 0 1 0 0 0 0 1 0 0 0 1 0 1 0 1 1 1 0 1 1 0 1 0 0 |
| 15 | 0 1 0 0 1 0 0 1 0 1 1 1 1 0 1 0 0 0 0 1 0 0 0 1 0 1 0 1 1 1 0 1 1 |

13. The method according to claim 7, wherein the mapping relationship between a data symbol and a chip sequence is as follows:

| Data symbol | Chip sequence |
|---|---|
| 0 | 1 1 0 0 1 0 1 0 1 0 0 1 0 0 0 0 1 1 0 0 1 0 1 0 0 1 1 0 1 1 1 1 |
| 1 | 1 0 1 0 1 1 0 0 1 1 1 1 0 1 1 0 1 0 1 0 1 1 0 0 0 0 0 0 1 0 0 1 |
| 2 | 1 0 0 1 0 0 0 0 1 1 0 0 1 0 1 0 1 0 0 1 0 0 0 0 0 0 1 1 0 1 0 1 |
| 3 | 1 1 1 1 0 1 1 0 1 0 1 0 1 1 0 0 1 1 1 1 0 1 1 0 0 1 0 1 0 0 1 1 |
| 4 | 1 0 0 1 1 1 1 1 0 0 1 1 1 0 1 0 1 0 0 1 1 1 1 1 1 1 0 0 0 1 0 1 |
| 5 | 1 1 1 1 1 0 0 1 0 1 0 1 1 1 0 0 1 1 1 1 1 0 0 1 1 0 1 0 0 0 1 1 |
| 6 | 1 1 0 0 0 1 0 1 0 1 1 0 0 0 0 0 1 1 0 0 0 1 0 1 1 0 0 1 1 1 1 1 |
| 7 | 1 0 1 0 0 0 1 1 0 0 0 0 0 1 1 0 1 0 1 0 0 0 1 1 1 1 1 1 1 0 0 1 |

(continued)

| Data symbol | Chip sequence |
|---|---|
| 8 | 1 0 0 1 1 1 1 1 1 0 0 0 1 0 1 0 1 1 0 0 0 0 0 1 1 0 0 0 1 0 1 |
| 9 | 1 1 1 1 1 0 0 1 1 0 1 0 0 0 1 1 0 0 0 0 0 1 1 0 1 0 1 0 0 0 1 1 |
| 10 | 1 1 0 0 0 1 0 1 1 0 0 1 1 1 1 1 0 0 1 1 1 0 1 0 1 0 0 1 1 1 1 1 |
| 11 | 1 0 1 0 0 0 1 1 1 1 1 1 0 0 1 0 1 0 1 1 1 0 0 1 1 1 1 1 1 0 0 1 |
| 12 | 1 1 0 0 1 0 1 0 0 1 1 0 1 1 1 0 0 1 1 0 1 0 1 0 1 1 0 1 1 1 1 |
| 13 | 1 0 1 0 1 1 0 0 0 0 0 0 1 0 0 1 0 1 0 1 0 0 1 1 0 0 0 0 1 0 0 1 |
| 14 | 1 0 0 1 0 0 0 0 0 0 1 1 0 1 0 1 0 1 1 0 1 1 1 1 0 0 1 1 0 1 0 1 |
| 15 | 1 1 1 1 0 1 1 0 0 1 0 1 0 0 1 1 0 0 0 0 1 0 0 1 0 1 0 1 0 0 1 1 |

**14.** The method according to claim 9, wherein the mapping relationship between a data symbol and a chip sequence is as follows:

| Data symbol | Chip sequence |
|---|---|
| 0 | 1 0 0 1 1 1 0 1 0 1 1 0 0 0 1 1 0 0 0 1 0 1 0 0 0 1 0 0 0 1 0 0 |
| 1 | 1 0 1 0 1 0 1 1 0 1 1 1 1 1 1 1 0 0 1 0 0 1 0 1 1 1 1 1 0 0 1 |
| 2 | 1 1 1 1 0 0 1 0 1 0 1 0 1 1 0 1 1 1 1 1 1 1 0 0 1 0 0 1 0 1 1 |
| 3 | 0 1 1 1 1 0 0 1 0 1 0 1 0 1 1 0 1 1 1 1 1 1 1 0 0 1 0 0 1 0 1 |
| 4 | 1 0 1 0 1 1 1 1 0 0 1 0 1 0 1 0 1 1 0 1 1 1 1 1 1 1 0 0 1 0 |
| 5 | 1 1 0 0 0 0 0 1 0 0 0 0 1 0 0 1 0 0 1 0 0 1 1 1 0 0 1 0 1 1 1 0 |
| 6 | 1 0 1 0 0 0 0 0 1 0 0 0 0 1 0 0 1 0 0 1 0 0 1 1 1 0 0 1 0 1 1 1 |
| 7 | 1 0 1 1 1 0 1 0 0 0 0 0 1 0 0 0 0 1 0 0 1 0 0 1 0 0 1 1 1 0 0 1 |
| 8 | 0 1 1 0 0 1 0 1 1 1 0 1 0 0 0 0 0 1 0 0 0 0 1 0 0 1 0 0 1 0 0 1 |
| 9 | 0 0 0 1 0 1 0 0 0 1 1 1 1 0 0 0 1 0 0 0 1 1 1 1 1 1 0 0 0 0 1 1 |
| 10 | 0 1 0 1 0 0 1 1 1 1 0 0 1 1 0 0 1 1 0 0 0 1 0 0 1 1 1 1 0 1 0 0 |
| 11 | 0 0 1 0 0 1 0 0 0 1 1 0 1 1 1 0 0 1 1 0 1 1 1 0 1 0 0 1 1 1 0 0 |
| 12 | 1 1 0 1 1 1 0 0 1 1 0 1 1 1 0 1 0 0 1 1 1 0 0 0 1 0 0 1 0 0 0 1 |
| 13 | 0 0 0 0 0 0 1 1 1 0 1 1 0 0 1 0 0 0 1 1 1 0 0 0 0 0 0 1 1 0 1 0 |
| 14 | 0 1 0 1 1 0 0 0 0 0 1 1 0 1 1 1 1 1 0 0 0 1 0 1 1 0 0 1 1 0 1 0 |
| 15 | 0 1 1 0 1 1 0 0 1 1 0 0 1 0 1 1 1 1 0 1 1 0 0 1 1 1 1 0 1 1 1 0 |

**15.** The method according to any one of claims 1 to 4, wherein the mapping relationship between a data symbol and a chip sequence is as follows:

| Data symbol | Chip sequence |
|---|---|
| 0 | 1 0 1 1 0 1 1 0 1 1 0 0 0 1 0 0 |
| 1 | 0 0 1 0 1 1 0 1 1 0 1 1 0 0 0 1 |
| 2 | 0 1 0 0 1 0 1 1 0 1 1 0 1 1 0 0 |
| 3 | 0 0 0 1 0 0 1 0 1 1 0 1 1 0 1 1 |
| 4 | 1 1 0 0 0 1 0 0 1 0 1 1 0 1 1 0 |
| 5 | 1 0 1 1 0 0 0 1 0 0 1 0 1 1 0 1 |
| 6 | 0 1 1 0 1 1 0 0 0 1 0 0 1 0 1 1 |

(continued)

| Data symbol | Chip sequence |
|---|---|
| 7 | 1 1 0 1 1 0 1 1 0 0 0 1 0 0 1 0 |
| 8 | 1 1 1 0 0 0 1 1 1 0 0 1 0 0 0 1 |
| 9 | 0 1 1 1 1 0 0 0 1 1 1 0 0 1 0 0 |
| 10 | 0 0 0 1 1 1 1 0 0 0 1 1 1 0 0 1 |
| 11 | 0 1 0 0 0 1 1 1 1 0 0 0 1 1 1 0 |
| 12 | 1 0 0 1 0 0 0 1 1 1 1 0 0 0 1 1 |
| 13 | 1 1 1 0 0 1 0 0 0 1 1 1 1 0 0 0 |
| 14 | 0 0 1 1 1 0 0 1 0 0 0 1 1 1 1 0 |
| 15 | 1 0 0 0 1 1 1 0 0 1 0 0 0 1 1 1 |

16. The method according to any one of claims 1 to 4, wherein the mapping relationship between a data symbol and a chip sequence is as follows:

| Data symbol | Chip sequence |
|---|---|
| 0 | 1 1 0 1 1 0 0 0 |
| 1 | 1 0 0 0 0 0 1 0 |
| 2 | 1 0 1 1 1 1 1 0 |
| 3 | 1 1 1 0 0 1 0 0 |
| 4 | 1 0 1 1 0 0 0 1 |
| 5 | 1 1 1 0 1 0 1 1 |
| 6 | 1 1 0 1 0 1 1 1 |
| 7 | 1 0 0 0 1 1 0 1 |
| 8 | 1 1 0 1 1 0 0 0 |
| 9 | 1 0 0 0 0 0 1 0 |
| 10 | 1 0 1 1 1 1 1 0 |
| 11 | 1 1 1 0 0 1 0 0 |
| 12 | 1 0 1 1 0 0 0 1 |
| 13 | 1 1 1 0 1 0 1 1 |
| 14 | 1 1 0 1 0 1 1 1 |
| 15 | 1 0 0 0 1 1 0 1 |

17. A communication apparatus, wherein the apparatus comprises:

a processing unit, configured to generate a PPDU based on a mapping relationship between a data symbol and a chip sequence, wherein a length of each chip sequence is L, a minimum Hamming distance is greater than or equal to L/2, L is a positive integer, a bit length corresponding to the data symbol is less than a bit length of a chip sequence, and the minimum Hamming distance indicates a smallest Hamming distance between any two different chip sequences; and
a transceiver unit, configured to send the PPDU.

18. A communication apparatus, wherein the apparatus comprises:

a transceiver unit, configured to receive a PPDU; and
a processing unit, configured to process the PPDU based on a mapping relationship between a data symbol and a chip sequence, wherein a length of each chip sequence is L, a minimum Hamming distance is greater than or equal to L/2, L is a positive integer, a bit length corresponding to the data symbol is less than a bit length of a chip sequence, and the minimum Hamming distance indicates a smallest Hamming distance between any two different chip sequences.

19. The apparatus according to claim 18, wherein the processing unit is specifically configured to: obtain a first sequence in the PPDU, wherein a length of the first sequence is L; determine, based on N chip sequences comprised in the mapping relationship between a data symbol and a chip sequence, a first chip sequence corresponding to the first sequence, wherein the first chip sequence is one of the N chip sequences, and N is a positive integer; determine, based on the mapping relationship between a data symbol and a chip sequence, a data symbol corresponding to the first chip sequence; and determine, based on the data symbol corresponding to the first chip sequence, an information bit corresponding to the first chip sequence.

20. The apparatus according to any one of claims 17 to 19, wherein L=32, L=16, or L=8.

21. The apparatus according to any one of claims 17 to 20, wherein the chip sequence is obtained based on at least one of the following:

   [1 1 -1 -1 -1 -1 -1 -1] and [1 1 -1 1-1 1 -1 -1];
   [1 -1 1 -1 -1 -1 -1 -1] and [1 1 -1 1 1 -1 -1 -1]; and
   [1 -1 -1 1 -1 -1 -1 -1] and [1 1 1 -1 1 -1 -1 -1].

22. The apparatus according to any one of claims 17 to 21, wherein the chip sequence is obtained based on at least two of the following:

$$\begin{bmatrix} 1 & 1 & -1 & 1 & -1 & 1 & -1 & -1 \end{bmatrix}$$
$$\begin{bmatrix} 1 & 1 & -1 & 1 & 1 & -1 & -1 & -1 \end{bmatrix}.$$
$$\begin{bmatrix} 1 & 1 & 1 & -1 & 1 & -1 & -1 & -1 \end{bmatrix}$$

23. The apparatus according to any one of claims 17 to 20, wherein the chip sequence is obtained based on a Hadamard matrix, and an order of the Hadamard matrix is related to the length of the chip sequence.

24. The apparatus according to claim 23, wherein at least two columns of elements in a matrix formed by the chip sequence are the same.

25. The apparatus according to any one of claims 17 to 20, wherein the chip sequence is obtained based on the following two sequences:

   [1 0 0 1 0 1 1 0 1 1 1 10 10 1 0 0 0 10 0 1 1 1 0 0 0 0 0 1]; and
   [0 0 0 1 1 1 0 1 0 1 0 0 1 0 1 1 1 1 0 0 1 1 0 1 1 0 0 0 0 0 1].

26. A communication apparatus, comprising a processor and a memory, wherein

   the memory is configured to store instructions; and
   the processor is configured to execute the instructions, so that the method according to any one of claims 1 to 16 is implemented.

27. A chip, comprising a logic circuit and an interface, wherein the logic circuit is coupled to the interface; and the interface is configured to input and/or output code instructions, and the logic circuit is configured to execute the code instructions, so that the method according to any one of claims 1 to 16 is implemented.

28. A computer-readable storage medium, wherein the computer-readable storage medium is configured to store a computer program, and when the computer program is executed, the method according to any one of claims 1 to 16 is performed.

29. A communication system, wherein the communication system comprises a transmit end and a receive end, the transmit end is configured to perform the method according to any one of claims 1 and 4 to 16, and the receive end is configured to perform the method according to any one of claims 2 to 16.

Reduced function device

Full function device

FIG. 1

Reduced function device

Full function device

FIG. 2

Transmit end

Receive end

Generate a PPDU based on a
mapping relationship between a data
symbol and a chip sequence          301

PPDU                                302

Process the PPDU based on the
mapping relationship between a data
symbol and a chip sequence          303

FIG. 3

| Preamble (preamble) | Start-of-frame delimiter (SFD) | Physical layer header (PHR) | Payload (payload) |
|---|---|---|---|

FIG. 4a

| Information bit of a PPDU | Mapping of the information bit to a data symbol (bit-to-symbol) | Mapping of the data symbol to a chip sequence (symbol-to-chip) | O-QPSK modulation | Modulated symbol (modulated signal) |
|---|---|---|---|---|

FIG. 4b

| Information bit of a PPDU | Mapping of the information bit to a chip sequence | O-QPSK modulation | Modulated symbol (modulated signal) |
|---|---|---|---|

FIG. 4c

| Data symbol | Chip values ($c_0$ $c_1$ ... $c_{30}$ $c_{31}$) |
|:---:|:---:|
| 0 | 1 1 0 1 1 0 0 1 1 1 0 0 0 0 1 1 0 1 0 1 0 0 1 0 0 0 1 0 1 1 1 0 |
| 1 | 1 1 1 0 1 1 0 1 1 0 0 1 1 1 0 0 0 0 1 1 0 1 0 1 0 0 1 0 0 0 1 0 |
| 2 | 0 0 1 0 1 1 1 0 1 1 0 1 1 0 0 1 1 1 0 0 0 0 1 1 0 1 0 1 0 0 1 0 |
| 3 | 0 0 1 0 0 0 1 0 1 1 1 0 1 1 0 1 1 0 0 1 1 1 0 0 0 0 1 1 0 1 0 1 |
| 4 | 0 1 0 1 0 0 1 0 0 0 1 0 1 1 1 0 1 1 0 1 1 0 0 1 1 1 0 0 0 0 1 1 |
| 5 | 0 0 1 1 0 1 0 1 0 0 1 0 0 0 1 0 1 1 1 0 1 1 0 1 1 0 0 1 1 1 0 0 |
| 6 | 1 1 0 0 0 0 1 1 0 1 0 1 0 0 1 0 0 0 1 0 1 1 1 0 1 1 0 1 1 0 0 1 |
| 7 | 1 0 0 1 1 1 0 0 0 0 1 1 0 1 0 1 0 0 1 0 0 0 1 0 1 1 1 0 1 1 0 1 |
| 8 | 1 0 0 0 1 1 0 0 1 0 0 1 0 1 1 0 0 0 0 0 1 1 1 0 1 1 1 1 0 1 1 |
| 9 | 1 0 1 1 1 0 0 0 1 1 0 0 1 0 0 1 0 1 1 0 0 0 0 0 1 1 1 0 1 1 1 |
| 10 | 0 1 1 1 1 0 1 1 1 0 0 0 1 1 0 0 1 0 0 1 0 1 1 0 0 0 0 0 0 1 1 1 |
| 11 | 0 1 1 1 0 1 1 1 1 0 1 1 1 0 0 0 1 1 0 0 1 0 0 1 0 1 1 0 0 0 0 0 |
| 12 | 0 0 0 0 0 1 1 1 0 1 1 1 1 0 1 1 1 0 0 0 1 1 0 0 1 0 0 1 0 1 1 0 |
| 13 | 0 1 1 0 0 0 0 0 0 1 1 1 0 1 1 1 1 0 1 1 1 0 0 0 1 1 0 0 1 0 0 1 |
| 14 | 1 0 0 1 0 1 1 0 0 0 0 0 0 1 1 1 0 1 1 1 1 0 1 1 1 0 0 0 1 1 0 0 |
| 15 | 1 1 0 0 1 0 0 1 0 1 1 0 0 0 0 0 0 1 1 1 0 1 1 1 1 0 1 1 1 0 0 0 |

FIG. 5a

| Chip sequence | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| 1 | 0 | 16 | 18 | 20 | 20 | 20 | 18 | 16 | 16 | 12 | 14 | 20 | 20 | 20 | 14 | 12 |
| 2 | 16 | 0 | 16 | 18 | 20 | 20 | 20 | 18 | 12 | 16 | 12 | 14 | 20 | 20 | 20 | 14 |
| 3 | 18 | 16 | 0 | 16 | 18 | 20 | 20 | 20 | 14 | 12 | 16 | 12 | 14 | 20 | 20 | 20 |
| 4 | 20 | 18 | 16 | 0 | 16 | 18 | 20 | 20 | 20 | 14 | 12 | 16 | 12 | 14 | 20 | 20 |
| 5 | 20 | 20 | 18 | 16 | 0 | 16 | 18 | 20 | 20 | 20 | 12 | 12 | 16 | 12 | 14 | 20 |
| 6 | 20 | 20 | 20 | 18 | 16 | 0 | 16 | 18 | 20 | 20 | 20 | 14 | 12 | 16 | 12 | 14 |
| 7 | 18 | 20 | 20 | 20 | 18 | 16 | 0 | 16 | 14 | 20 | 20 | 20 | 14 | 12 | 16 | 12 |
| 8 | 16 | 18 | 20 | 20 | 20 | 18 | 16 | 0 | 12 | 14 | 20 | 20 | 20 | 14 | 12 | 16 |
| 9 | 16 | 12 | 14 | 20 | 20 | 20 | 14 | 12 | 0 | 16 | 18 | 20 | 20 | 20 | 18 | 16 |
| 10 | 12 | 16 | 12 | 14 | 20 | 20 | 20 | 14 | 16 | 0 | 16 | 18 | 20 | 20 | 20 | 18 |
| 11 | 14 | 12 | 16 | 12 | 14 | 20 | 20 | 20 | 18 | 16 | 0 | 16 | 18 | 20 | 20 | 20 |
| 12 | 20 | 14 | 12 | 16 | 12 | 14 | 20 | 20 | 20 | 18 | 16 | 0 | 16 | 18 | 20 | 20 |
| 13 | 20 | 20 | 14 | 12 | 16 | 12 | 14 | 20 | 20 | 20 | 18 | 16 | 0 | 16 | 18 | 20 |
| 14 | 20 | 20 | 20 | 14 | 12 | 16 | 12 | 14 | 20 | 20 | 20 | 18 | 16 | 0 | 16 | 18 |
| 15 | 14 | 20 | 20 | 20 | 14 | 12 | 16 | 12 | 18 | 20 | 20 | 20 | 18 | 16 | 0 | 16 |
| 16 | 12 | 14 | 20 | 20 | 20 | 14 | 12 | 16 | 16 | 18 | 20 | 20 | 20 | 18 | 16 | 0 |

FIG. 5b

Processing unit 601

Transceiver unit 602

Communication apparatus

FIG. 6

FIG. 7

FIG. 8

## INTERNATIONAL SEARCH REPORT

| International application No. |
| --- |
| **PCT/CN2023/100436** |

**A.    CLASSIFICATION OF SUBJECT MATTER**

H04B1/69(2011.01)i;  H04L27/34(2006.01)i

According to International Patent Classification (IPC) or to both national classification and IPC

**B.    FIELDS SEARCHED**

Minimum documentation searched (classification system followed by classification symbols)

IPC:H04B,H04L,H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE: 物理层协议数据单元, PHY PDU, PPDU, 哈明, 海明, 汉明, 距离, 扩频, 序列, phy + protocol data unit, hamming, distance, spread+, spectrum, sequence, UWB

**C.    DOCUMENTS CONSIDERED TO BE RELEVANT**

| Category* | Citation of document, with indication, where appropriate, of the relevant passages | Relevant to claim No. |
| --- | --- | --- |
| A | BISWAS, Sankalita. "Evaluating the Effect of Spreading on 802.15.4 Physical-Layer Symbol Error Rate" *2017 2nd IEEE International Conference On Recent Trends In Electronics Information & Communication Technology*, 20 May 2017 (2017-05-20), pages 106-110 | 1-29 |
| A | DE 102021116563 A1 (INTEL CORP.) 27 January 2022 (2022-01-27) entire document | 1-29 |
| A | US 2017126533 A1 (FREESCALE SEMICONDUCTOR, INC.) 04 May 2017 (2017-05-04) entire document | 1-29 |
| A | WO 2013098640 A2 (FRANCE TELECOM) 04 July 2013 (2013-07-04) entire document | 1-29 |
| A | WO 2022122025 A1 (HUAWEI TECHNOLOGIES CO., LTD.) 16 June 2022 (2022-06-16) entire document | 1-29 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 August 2023** | **24 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/100436**

| Patent document cited in search report | | | Publication date (day/month/year) | Patent family member(s) | | | Publication date (day/month/year) |
|---|---|---|---|---|---|---|---|
| DE | 102021116563 | A1 | 27 January 2022 | None | | | |
| US | 2017126533 | A1 | 04 May 2017 | None | | | |
| WO | 2013098640 | A2 | 04 July 2013 | WO | 2013098640 | A3 | 06 September 2013 |
| | | | | JP | 2015506616 | A | 02 March 2015 |
| WO | 2022122025 | A1 | 16 June 2022 | CA | 3201906 | A1 | 16 June 2022 |
| | | | | AU | 2021398202 | A1 | 06 July 2023 |
| | | | | CN | 114629749 | A | 14 June 2022 |

Form PCT/ISA/210 (patent family annex) (July 2022)

**REFERENCES CITED IN THE DESCRIPTION**

**Patent documents cited in the description**

- CN 202210688053